(19) Europäisches Patentamt
European Patent Office
Office européen des brevets

(11) **EP 3 484 216 A1**

(12) **EUROPEAN PATENT APPLICATION**
published in accordance with Art. 153(4) EPC

(43) Date of publication:
**15.05.2019 Bulletin 2019/20**

(21) Application number: **16910208.4**

(22) Date of filing: **29.07.2016**

(51) Int Cl.:
*H04W 56/00* (2009.01)     *H04L 5/00* (2006.01)
*H04L 27/26* (2006.01)     *H04L 12/70* (2013.01)

(86) International application number:
**PCT/CN2016/092409**

(87) International publication number:
**WO 2018/018628 (01.02.2018 Gazette 2018/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Huawei Technologies Co., Ltd.**
**Longgang District**
**Shenzhen, Guangdong 518129 (CN)**

(72) Inventors:
• **LI, Chao**
  **Shenzhen**
  **Guangdong 518129 (CN)**

• **SUN, Yinghua**
  **Shenzhen**
  **Guangdong 518129 (CN)**
• **LIU, Zhe**
  **Shenzhen**
  **Guangdong 518129 (CN)**
• **ZHANG, Xingwei**
  **Shenzhen**
  **Guangdong 518129 (CN)**

(74) Representative: **Maiwald Patent- und Rechtsanwaltsgesellschaft mbH**
**Elisenhof**
**Elisenstraße 3**
**80335 München (DE)**

(54) **REFERENCE SIGNAL SEQUENCE MAPPING METHOD, CONFIGURATION METHOD, BASE STATION, AND USER EQUIPMENT**

(57)     Embodiments of the present invention provide a reference signal sequence mapping method and configuration method, a base station, and user equipment. The method includes: determining a sequence parameter corresponding to at least one sub frequency domain resource of UE, where one sub frequency domain resource is corresponding to one sequence parameter; generating a reference signal sequence based on the sequence parameter; and mapping the reference signal sequence to a physical resource corresponding to the at least one sub frequency domain resource.

```
┌─────────────────────────────────────────────────────┐
│ Determine a sequence parameter corresponding to at   │
│ least one sub frequency domain resource of UE, where  │──⌇ 510
│ one sub frequency domain resource is corresponding    │
│ to one sequence parameter                             │
└─────────────────────────────────────────────────────┘
                          │
                          ▼
┌─────────────────────────────────────────────────────┐
│ Generate a reference signal sequence based on the     │──⌇ 520
│ sequence parameter                                    │
└─────────────────────────────────────────────────────┘
                          │
                          ▼
┌─────────────────────────────────────────────────────┐
│ Map the reference signal sequence to a physical       │──⌇ 530
│ resource corresponding to the at least one sub         │
│ frequency domain resource                             │
└─────────────────────────────────────────────────────┘
```

FIG. 5

EP 3 484 216 A1

**Description**

**TECHNICAL FIELD**

The present invention relates to the communications field, and more specifically, to a reference signal sequence mapping method and configuration method, a base station, and user equipment.

**BACKGROUND**

With social development, users have increasingly high requirements on a wireless communications technology. For wireless communications, a transmission rate and a transmission delay are key indicators. During transmission of a data packet whose size is fixed, shorter transmission duration indicates that a communications system can support a larger quantity of users or can support parallel transmission of more data. In addition, from a perspective of user experience, a shorter delay results in a higher transmission speed, a larger user capacity, and better user experience.

To reduce a delay in a Long Term Evolution (Long Term Evolution, LTE) system, from a physical perspective, duration of each transmission needs to be shortened. For example, a basic unit of a time-frequency resource in LTE transmission is 1 ms, and in this case, a time-frequency resource less than 1 ms needs to be used for transmission in wireless communications.

In the prior art, for each cell, a reference signal sequence of demodulation reference signals (Demodulation Reference Signal, DMRS) is generated in each slot. Root sequence numbers of reference signal sequences used in different frequency domain bandwidths are identical. Different UEs perform transmission by using different cyclic shifts of reference signal sequences.

When a quantity of symbols of a time domain resource occupied by one transmission decreases, it is possible that a plurality of UEs send reference signals on one symbol. How to multiplex a reference signal between different UEs and avoid mutual interference caused when different UEs perform channel estimation is a technical problem that urgently needs to be resolved.

**SUMMARY**

Embodiments of the present invention provide a reference signal sequence mapping method and configuration method, a base station, and user equipment, so as to flexibly allocate a reference signal generation parameter based on a multiplexing status of each UE scheduled by a base station, thereby improving a multi-user multiplexing capability and improving scheduling flexibility.

According to a first aspect, a reference signal sequence mapping method is provided, where the method includes: determining a sequence parameter corresponding to at least one sub frequency domain resource of UE, where one sub frequency domain resource is corresponding to one sequence parameter; generating a reference signal sequence based on the sequence parameter; and mapping the reference signal sequence to a physical resource corresponding to the at least one sub frequency domain resource.

With reference to the first aspect, in a first possible implementation, a specific implementation is: The reference signal is a DMRS, and the at least one sub frequency domain resource includes some or all of subcarriers in data bandwidth in which the DMRS is located.

With reference to the first aspect or the foregoing implementation of the first aspect, in a second possible implementation of the first aspect, a specific implementation is: The sequence parameter includes at least one of the following: a root sequence index, a cyclic shift value, or an orthogonal cover code of the reference signal sequence.

With reference to any one of the first aspect or the foregoing implementations of the first aspect, in a third possible implementation of the first aspect, a specific implementation is: A sequence parameter corresponding to a first sub frequency domain resource is determined by a first resource index value of the first sub frequency domain resource, and the first sub frequency domain resource is one of the at least one sub frequency domain resource.

With reference to the first aspect or the foregoing implementation of the first aspect, in a fourth possible implementation of the first aspect, a specific implementation is: Sequence group hopping and/or sequence hopping of a first root sequence index are/is determined by the first resource index value, and the first root sequence index is a root sequence index in the sequence parameter corresponding to the first sub frequency domain resource.

With reference to any one of the first aspect or the foregoing implementations of the first aspect, in a fifth possible implementation of the first aspect, the method further includes: obtaining first information, where the first information is used to indicate the sequence parameter corresponding to the at least one sub frequency domain resource; and a specific implementation of the determining a sequence parameter corresponding to the at least one sub frequency domain resource is: determining, based on the first information, the sequence parameter corresponding to the at least one sub frequency domain resource.

With reference to any one of the first aspect or the foregoing implementations of the first aspect, in a sixth possible implementation of the first aspect, the method further includes: obtaining first information, where the first information is used to indicate at least one sequence parameter corresponding to the at least one sub frequency domain resource; and a specific implementation of the determining a sequence parameter corresponding to the at least one sub frequency domain resource is: determining, based on the first information and a resource index value corresponding to the at least one sub frequency domain resource, the at least one sequence parameter corresponding to the at least one sub frequency domain resource.

With reference to the first aspect and the foregoing implementation of the first aspect, in a seventh possible implementation of the first aspect, a specific implementation is: The sequence parameter indicated by the first information is an absolute value or a relative value.

With reference to any one of the first aspect or the foregoing implementations of the first aspect, in an eighth possible implementation of the first aspect, the method further includes: determining the at least one sub frequency domain resource.

With reference to the first aspect and the foregoing implementation of the first aspect, in a ninth possible implementation of the first aspect, the at least one sub frequency domain resource is indicated by signaling, or is predefined or preconfigured.

With reference to the first aspect and the foregoing implementation of the first aspect, in a tenth possible implementation of the first aspect, the method further includes: obtaining second information, where the second information is used to indicate the at least one sub frequency domain resource; and a specific implementation of the determining the at least one sub frequency domain resource is: determining, based on the second information, the at least one sub frequency domain resource.

With reference to the first aspect and the foregoing implementation of the first aspect, in an eleventh possible implementation of the first aspect, a specific implementation is: The second information includes a multiplexing manner of the at least one sub frequency domain resource.

With reference to the first aspect and the foregoing implementation of the first aspect, in a twelfth possible implementation of the first aspect, a specific implementation is: The multiplexing manner includes frequency division multiplexing and/or code division multiplexing.

With reference to the first aspect and the foregoing implementation of the first aspect, in a thirteenth possible implementation of the first aspect, a specific implementation is: When the at least one sub frequency domain resource is two or more sub frequency domain resources, multiplexing manners of all the sub frequency domain resources are the same, or multiplexing manners of at least two of the sub frequency domain resources are different.

According to a second aspect, user equipment is provided, including a processing module and a transmit module, where the processing module is configured to determine a sequence parameter corresponding to at least one sub frequency domain resource of the user equipment, and generate a reference signal sequence based on the sequence parameter, where one sub frequency domain resource is corresponding to one sequence parameter; and the processing module is further configured to map, by using the transmit module, the reference signal sequence to a physical resource corresponding to the at least one sub frequency domain resource.

With reference to the second aspect, in a first possible implementation, a specific implementation is: The reference signal is a DMRS, and the at least one sub frequency domain resource includes some or all of subcarriers in data bandwidth in which the DMRS is located.

With reference to the second aspect or the foregoing implementation of the second aspect, in a second possible implementation of the second aspect, a specific implementation is: The sequence parameter includes at least one of the following: a root sequence index, a cyclic shift value, or an orthogonal cover code of the reference signal sequence.

With reference to any one of the second aspect or the foregoing implementations of the second aspect, in a third possible implementation of the second aspect, a specific implementation is: A sequence parameter corresponding to a first sub frequency domain resource is determined by a first resource index value of the first sub frequency domain resource, and the first sub frequency domain resource is one of the at least one sub frequency domain resource.

With reference to the second aspect and the foregoing implementation of the second aspect, in a fourth possible implementation of the second aspect, a specific implementation is: Sequence group hopping and/or sequence hopping of a first root sequence index are/is determined by the first resource index value, and the first root sequence index is a root sequence index in the sequence parameter corresponding to the first sub frequency domain resource.

With reference to any one of the second aspect or the foregoing implementations of the second aspect, in a fifth possible implementation of the second aspect, the processing module is further configured to obtain first information, where the first information is used to indicate the sequence parameter corresponding to the at least one sub frequency domain resource; and the processing module is configured to determine, based on the first information, the sequence parameter corresponding to the at least one sub frequency domain resource.

With reference to any one of the second aspect or the foregoing implementations of the second aspect, in a sixth possible implementation of the second aspect, the processing module is further configured to obtain first information, where the first information is used to indicate at least one sequence parameter corresponding to the at least one sub frequency domain resource; and the processing module is configured to determine, based on the first information and a resource index value corresponding to the at least one sub frequency domain resource, the at least one sequence parameter corresponding to the at least one sub frequency domain resource.

With reference to the second aspect and the foregoing implementation of the second aspect, in a seventh possible implementation of the second aspect, a specific implementation is: The sequence parameter indicated by the first information is an absolute value or a relative value.

With reference to any one of the second aspect or the foregoing implementations of the second aspect, in an eighth possible implementation of the second aspect, the processing module is further configured to determine the at least one sub frequency domain resource.

With reference to the second aspect and the foregoing implementation of the second aspect, in a ninth possible implementation of the second aspect, the at least one sub frequency domain resource is indicated by signaling, or is predefined or preconfigured.

With reference to the second aspect and the foregoing implementation of the second aspect, in a tenth possible implementation of the second aspect, the processing module is further configured to obtain second information, where the second information is used to indicate the at least one sub frequency domain resource; and the processing module is configured to determine, based on the second information, the at least one sub frequency domain resource.

With reference to the second aspect and the foregoing implementation of the second aspect, in an eleventh possible implementation of the second aspect, a specific implementation is: The second information includes a multiplexing manner of the at least one sub frequency domain resource.

With reference to the second aspect and the foregoing implementation of the second aspect, in a twelfth possible implementation of the second aspect, a specific implementation is: The multiplexing manner includes frequency division multiplexing and/or code division multiplexing.

With reference to the second aspect and the foregoing implementation of the second aspect, in a thirteenth possible implementation of the second aspect, a specific implementation is: When the at least one sub frequency domain resource is two or more sub frequency domain resources, multiplexing manners of all the sub frequency domain resources are the same, or multiplexing manners of at least two of the sub frequency domain resources are different.

According to a third aspect, another user equipment is provided, including a processor, a transmitter, and a receiver, where the processor is configured to perform, by using the transmitter and the receiver, the method according to any one of the first aspect or the possible implementations of the first aspect.

According to a fourth aspect, a computer readable storage medium is provided, configured to store a computer program, where the computer program includes an instruction used to perform the method according to any one of the first aspect or the possible implementations of the first aspect.

According to a fifth aspect, a reference signal sequence configuration method is provided, where the method includes: generating first information, where the first information is used to indicate a sequence parameter corresponding to at least one sub frequency domain resource, the at least one sub frequency domain resource is a frequency domain resource used by the first UE to map a reference signal sequence, and each sub frequency domain resource of the first UE is corresponding to one sequence parameter; and sending the first information to the first UE.

With reference to the fifth aspect, in a first possible implementation, a specific implementation is: The reference signal is a DMRS, and the at least one sub frequency domain resource includes some or all of subcarriers in data bandwidth in which the DMRS of the first UE is located.

With reference to the fifth aspect or the foregoing implementation of the fifth aspect, in a second possible implementation of the fifth aspect, a specific implementation is: The sequence parameter includes at least one of the following: a root sequence index, a cyclic shift value, or an orthogonal cover code of the reference signal sequence.

With reference to any one of the fifth aspect or the foregoing implementations of the fifth aspect, in a third possible implementation of the fifth aspect, the method further includes: generating second information, where the second information is used to indicate the at least one sub frequency domain resource; and sending the second information to the first UE.

With reference to the fifth aspect and the foregoing implementation of the fifth aspect, in a fourth possible implementation of the fifth aspect, a specific implementation is: The second information includes a multiplexing manner of the at least one sub frequency domain resource.

With reference to the fifth aspect and the foregoing implementation of the fifth aspect, in a fifth possible implementation of the fifth aspect, a specific implementation is: When the at least one sub frequency domain resource is two or more sub frequency domain resources, reference signal sequence multiplexing manners of all the sub frequency domain resources are the same, or reference signal sequence multiplexing manners of at least two of the sub frequency domain resources are different.

With reference to any one of the fifth aspect or the foregoing implementations of the fifth aspect, in a sixth possible implementation of the fifth aspect, the method further includes: generating third information, where the third information indicates a sequence parameter corresponding to at least one sub frequency domain resource that is in a frequency domain resource of the second UE and that is used for sending a reference signal, a second sub frequency domain resource in the at least one sub frequency domain resource of the second UE is all or some of frequency domain resources in a first sub frequency domain resource in the at least one sub frequency domain resource of the first UE, and the second sub frequency domain resource and the first sub frequency domain resource are corresponding to different sequence parameters; and sending the third information to the second UE.

According to a sixth aspect, a base station is provided, including a processing module and a transmit module, where the processing module is configured to generate first information, where the first information is used to indicate a sequence parameter corresponding to at least one sub frequency domain resource, the at least one sub frequency domain resource is a frequency domain resource used by the first UE to map a reference signal sequence, and each sub frequency domain resource of the first UE is corresponding to one sequence parameter; and the transmit module is configured to send the first information to the first UE.

With reference to the sixth aspect, in a first possible implementation, a specific implementation is: The reference signal is a DMRS, and the at least one sub frequency domain resource includes some or all of subcarriers in data bandwidth in which the DMRS of the first UE is located.

With reference to the sixth aspect or the foregoing implementation of the sixth aspect, in a second possible implementation of the sixth aspect, the sequence parameter includes at least one of the following: a root sequence index, a cyclic shift value, or an orthogonal cover code of the reference signal sequence.

With reference to any one of the sixth aspect or the foregoing implementations of the sixth aspect, in a third possible implementation of the sixth aspect, the processing module is further configured to generate second information, where the second information is used to indicate the at least one sub frequency domain resource; and the transmit module is further configured to send the second information to the first UE.

With reference to the sixth aspect and the foregoing implementation of the sixth aspect, in a fourth possible implementation of the sixth aspect, a specific implementation is: The second information includes a multiplexing manner of the at least one sub frequency domain resource.

With reference to the sixth aspect and the foregoing implementation of the sixth aspect, in a fifth possible implementation of the sixth aspect, a specific implementation is: When the at least one sub frequency domain resource is two or more sub frequency domain resources, reference signal sequence multiplexing manners of all the sub frequency domain resources are the same, or reference signal sequence multiplexing manners of at least two of the sub frequency domain resources are different.

With reference to any one of the sixth aspect or the foregoing implementations of the sixth aspect, in a sixth possible implementation of the sixth aspect, the processing module is further configured to generate third information, where the third information is used to indicate a sequence parameter corresponding to at least one sub frequency domain resource, the at least one sub frequency domain resource in the third information is a frequency domain resource used by the second UE to map a reference signal sequence, each sub frequency domain resource of the second UE is corresponding to one sequence parameter, a second sub frequency domain resource in the at least one sub frequency domain resource of the second UE is all or some of frequency domain resources in a first sub frequency domain resource in the at least one sub frequency domain resource of the first UE, and the second sub frequency domain resource and the first sub frequency domain resource are corresponding to different sequence parameters; and the transmit module is further configured to send the third information to the second UE.

According to a seventh aspect, another base station is provided, including a processor, a transmitter, and a receiver, where the processor is configured to perform, by using the transmitter and the receiver, the method according to any one of the fifth aspect or the possible implementations of the fifth aspect.

According to an eighth aspect, a computer readable storage medium is provided, configured to store a computer program, where the computer program includes an instruction used to perform the method according to any one of the fifth aspect or the possible implementations of the fifth aspect.

According to a ninth aspect, a control information sending method is provided, including: mapping, in a frequency domain discrete manner, control information to a data channel resource that is used to carry the control information, where each data channel resource is less than 1 ms in time domain; and sending the control information by using the data channel resource.

With reference to the ninth aspect, in a first possible implementation, a specific implementation is: The control information includes at least one of the following: HARQ response information, CSI, or an SR.

With reference to the ninth aspect and the foregoing implementation of the ninth aspect, in a second possible implementation of the ninth aspect, a specific implementation is: The CSI includes at least one of the following: an RI, a PMI, a CQI, a PTI, or a BI.

With reference to any one of the ninth aspect or the foregoing implementations of the ninth aspect, in a third possible implementation of the ninth aspect, a specific implementation of the mapping, in a frequency domain discrete manner, control information to a data channel resource that is used to carry the control information is: dividing each of at least one type of control information into a plurality of parts, and respectively mapping, in the frequency domain discrete manner, the plurality of parts of each type of control information to different parts in bandwidth occupied by the data channel resource; or respectively mapping a plurality of types of control information to different parts in bandwidth occupied by the data channel resource.

With reference to the ninth aspect and the foregoing implementation of the ninth aspect, in a fourth possible implementation of the ninth aspect, a specific implementation of the dividing each of at least one type of control information into a plurality of parts, and respectively mapping, in the frequency domain discrete manner, the plurality of parts of each type of control information to different parts in bandwidth occupied by the data channel resource is: dividing each of the at least one type of control information into two parts, and respectively mapping the two parts to two sides of the bandwidth occupied by the data channel resource.

With reference to the ninth aspect and the foregoing implementation of the ninth aspect, in a fifth possible implementation of the ninth aspect, a specific implementation of the respectively mapping a plurality of types of control information to different parts in bandwidth occupied by the data channel resource is:

mapping, from a high frequency subcarrier to a low frequency subcarrier, first control information in each of at least one part in the bandwidth occupied by the data channel resource; or
mapping, from a low frequency subcarrier to a high frequency subcarrier, the first control information in each of at least one part in the bandwidth occupied by the data channel resource; or
mapping, from a low frequency subcarrier to a high frequency subcarrier, the first control information in a first part of at least one part in the bandwidth occupied by the data channel resource, and mapping, from a high frequency subcarrier to a low frequency subcarrier, the first control information in a second part of the at least one part in the bandwidth occupied by the data channel resource, where the first control information is one of the plurality of types of control information.

With reference to the ninth aspect and the foregoing implementation of the ninth aspect, in a sixth possible implementation of the ninth aspect, when the control information includes a HARQ response message and the RI, and the data channel resource is divided into four sub-bands: a sub-band 1, a sub-band 2, a sub-band 3, and a sub-band 4, a specific implementation of the mapping, in a frequency domain discrete manner, control information to a data channel resource that is used to carry the control information is:

mapping the HARQ response message to the sub-band 1 and the sub-band 3, and mapping the RI to the sub-band 2 and the sub-band 4; or
mapping the HARQ response message to the sub-band 2 and the sub-band 4, and mapping the RI to the sub-band 1 and the sub-band 3; or
mapping the HARQ response message to the sub-band 1 and the sub-band 4, and mapping the RI to the sub-band 2 and the sub-band 3; or
mapping the HARQ response message to the sub-band 2 and the sub-band 3, and mapping the RI to the sub-band 1 and the sub-band 4.

With reference to any one of the ninth aspect or the foregoing implementations of the ninth aspect, in a seventh possible implementation of the ninth aspect, a specific implementation of the mapping, in a frequency domain discrete manner, control information to a data channel resource that is used to carry the control information is: when the control information includes a plurality of types of control information, respectively mapping the plurality of types of control information to at least two time domain data symbols of the data channel resource, and mapping, in the frequency domain discrete manner, the plurality of types of control information to the bandwidth occupied by the data channel resource.

With reference to the ninth aspect and the foregoing implementation of the ninth aspect, in an eighth possible implementation of the ninth aspect, a specific implementation of the mapping, in a frequency domain discrete manner, control information to a data channel resource that is used to carry the control information is:

mapping, in the frequency domain discrete manner, the first control information to a time-frequency resource on a first symbol of the data channel resource, and mapping, in the frequency domain discrete manner, second control information to a time-frequency resource on a second symbol of the data channel resource; or
mapping the first control information to a time-frequency resource in a first sub-band and on a first symbol of the data channel resource, and a time-frequency resource in a second sub-band and on a second symbol of the data channel resource; and mapping second control information to a time-frequency resource in the first sub-band and on the second symbol of the data channel resource, and a time-frequency resource in the second sub-band and on the first symbol of the data channel resource.

With reference to the ninth aspect and the foregoing implementation of the ninth aspect, in a ninth possible implementation of the ninth aspect, a specific implementation is: A quantity of symbols occupied by the control information in one subframe of the data channel resource is any one of 2, 3, 4, 6, or 7.

With reference to any one of the ninth aspect or the foregoing implementations of the ninth aspect, in a tenth possible implementation of the ninth aspect, when the control information includes the HARQ response message and the RI, a specific implementation of the mapping, in a frequency domain discrete manner, control information to a data channel resource that is used to carry the control information is: respectively mapping the HARQ response message and the RI in the control information to two adjacent time domain data symbols on two sides of the data channel resource, and mapping, in the frequency domain discrete manner, the HARQ response message and the RI to the bandwidth occupied by the data channel resource.

With reference to any one of the ninth aspect or the foregoing implementations of the ninth aspect, in an eleventh possible implementation of the ninth aspect, when the control information includes the HARQ response message and the RI, a specific implementation of the mapping, in a frequency domain discrete manner, control information to a data channel resource that is used to carry the control information is: mapping the HARQ response message and the RI in the control information to one time domain data symbol on one side of the data channel resource, and mapping, in the frequency domain discrete manner, the HARQ response message and the RI to the bandwidth occupied by the data channel resource.

With reference to any one of the ninth aspect or the foregoing implementations of the ninth aspect, in a twelfth possible implementation of the ninth aspect, the method further includes: when sending the control information, performing rate matching or puncturing on a channel that carries the control information.

According to a tenth aspect, user equipment is provided, including a processing module and a transmit module, where

the processing module is configured to map, in a frequency domain discrete manner, control information to a data channel resource that is used to carry the control information, where each data channel resource is less than 1 ms in time domain; and the transmit module is configured to send the control information by using the data channel resource.

With reference to the tenth aspect, in a first possible implementation, a specific implementation is: The control information includes at least one of the following: HARQ response information, CSI, or an SR.

With reference to the tenth aspect and the foregoing implementation of the tenth aspect, in a second possible implementation of the tenth aspect, a specific implementation is: The CSI includes at least one of the following: an RI, a PMI, a CQI, a PTI, or a BI.

With reference to any one of the tenth aspect or the foregoing implementations of the tenth aspect, in a third possible implementation of the tenth aspect, the processing module is specifically configured to: divide each of at least one type of control information into a plurality of parts, and respectively map, in the frequency domain discrete manner, the plurality of parts of each type of control information to different parts in bandwidth occupied by the data channel resource; or respectively map a plurality of types of control information to different parts in bandwidth occupied by the data channel resource.

With reference to the tenth aspect and the foregoing implementation of the tenth aspect, in a fourth possible implementation of the tenth aspect, the processing module is specifically configured to divide each of the at least one type of control information into two parts, and respectively map the two parts to two sides of the bandwidth occupied by the data channel resource.

With reference to the tenth aspect and the foregoing implementation of the tenth aspect, in a fifth possible implementation of the tenth aspect, the processing module is specifically configured to:

map, from a high frequency subcarrier to a low frequency subcarrier, first control information in each of at least one part in the bandwidth occupied by the data channel resource; or
map, from a low frequency subcarrier to a high frequency subcarrier, the first control information in each of at least one part in the bandwidth occupied by the data channel resource; or
map, from a low frequency subcarrier to a high frequency subcarrier, the first control information in a first part of at least one part in the bandwidth occupied by the data channel resource, and map, from a high frequency subcarrier to a low frequency subcarrier, the first control information in a second part of the at least one part in the bandwidth occupied by the data channel resource, where
the first control information is one of the plurality of types of control information.

With reference to the tenth aspect and the foregoing implementation of the tenth aspect, in a sixth possible implementation of the tenth aspect, when the control information includes a HARQ response message and the RI, and the data channel resource is divided into four sub-bands: a sub-band 1, a sub-band 2, a sub-band 3, and a sub-band 4, the processing module is specifically configured to:

map the HARQ response message to the sub-band 1 and the sub-band 3, and map the RI to the sub-band 2 and the sub-band 4; or

map the HARQ response message to the sub-band 2 and the sub-band 4, and map the RI to the sub-band 1 and the sub-band 3; or

map the HARQ response message to the sub-band 1 and the sub-band 4, and map the RI to the sub-band 2 and the sub-band 3; or

map the HARQ response message to the sub-band 2 and the sub-band 3, and map the RI to the sub-band 1 and the sub-band 4.

With reference to any one of the tenth aspect or the foregoing implementations of the tenth aspect, in a seventh possible implementation of the tenth aspect, the processing module is specifically configured to: when the control information includes a plurality of types of control information, respectively map the plurality of types of control information to at least two time domain data symbols of the data channel resource, and map, in the frequency domain discrete manner, the plurality of types of control information to the bandwidth occupied by the data channel resource.

With reference to the tenth aspect and the foregoing implementation of the tenth aspect, in an eighth possible implementation of the tenth aspect, the processing module is specifically configured to:

map the first control information to a time-frequency resource on a first symbol of the data channel resource, and map second control information to a time-frequency resource on a second symbol of the data channel resource; or

map the first control information to a time-frequency resource in a first sub-band and on a first symbol of the data channel resource, and a time-frequency resource in a second sub-band and on a second symbol of the channel resource; and map second control information to a time-frequency resource in the first sub-band and on the second symbol of the data channel resource, and a time-frequency resource in the second sub-band and on the first symbol of the channel resource.

With reference to the tenth aspect and the foregoing implementation of the tenth aspect, in a ninth possible implementation of the tenth aspect, a specific implementation is: A quantity of symbols occupied by the control information in one subframe of the data channel resource is any one of 2, 3, 4, 6, or 7.

With reference to any one of the tenth aspect or the foregoing implementations of the tenth aspect, in a tenth possible implementation of the tenth aspect, when the control information includes the HARQ response message and the RI, a specific implementation of the mapping, in a frequency domain discrete manner, control information to a data channel resource that is used to carry the control information is: respectively mapping the HARQ response message and the RI in the control information to two adjacent time domain data symbols on two sides of the data channel resource, and mapping, in the frequency domain discrete manner, the HARQ response message and the RI to the bandwidth occupied by the data channel resource.

With reference to any one of the tenth aspect or the foregoing implementations of the tenth aspect, in an eleventh possible implementation of the tenth aspect, when the control information includes the HARQ response message and the RI, a specific implementation of the mapping, in a frequency domain discrete manner, control information to a data channel resource that is used to carry the control information is: mapping the HARQ response message and the RI in the control information to one time domain data symbol on one side of the data channel resource, and mapping, in the frequency domain discrete manner, the HARQ response message and the RI to the bandwidth occupied by the data channel resource.

With reference to any one of the tenth aspect or the foregoing implementations of the tenth aspect, in a twelfth possible implementation of the tenth aspect, the method further includes: when sending the control information, performing rate matching or puncturing on a channel that carries the control information.

According to an eleventh aspect, another user equipment is provided, including a processor, a transmitter, and a receiver, where the processor is configured to perform, by using the transmitter and the receiver, the method according to any one of the ninth aspect or the possible implementations of the ninth aspect.

According to a twelfth aspect, a computer readable storage medium is provided, configured to store a computer program, where the computer program includes an instruction used to perform the method according to any one of the ninth aspect or the possible implementations of the ninth aspect.

According to a thirteenth aspect, a method for performing D2D communication by using a synchronization source is provided, where the method includes: detecting, by UE, a signal of a first device based on first synchronization source configuration information, where the first device is a satellite device; when the UE detects an effective signal of the first device, using the first device as a synchronization source of the UE over a D2D link, or when the UE detects no effective signal of the first device, obtaining a second device as a synchronization source over the D2D link, where the second device is a device other than the satellite device; and performing communication over the D2D link based on the synchronization source over the D2D link.

With reference to the thirteenth aspect, in a first possible implementation, a specific implementation is: The first synchronization source configuration information is sent by the base station to the UE, or the first synchronization source configuration information is predefined or preconfigured.

With reference to the thirteenth aspect or the foregoing implementation of the thirteenth aspect, in a second possible implementation of the thirteenth aspect, a specific implementation is: That the UE detects no effective satellite signal includes: channel quality of a satellite signal detected by the UE is lower than a first threshold; or the UE detects no satellite signal; or the UE detects no satellite signal within a preset time, or channel quality of a satellite signal detected by the UE within a preset time is lower than the first threshold.

With reference to the thirteenth aspect or the foregoing implementation of the thirteenth aspect, in a third possible implementation of the thirteenth aspect, a specific implementation of that the UE detects an effective signal of the first device is: The UE detects a satellite signal within the preset duration, or channel quality of a satellite signal detected by the UE within the preset duration is higher than or equal to a second threshold.

With reference to the thirteenth aspect or the foregoing implementation of the thirteenth aspect, in a fourth possible implementation of the thirteenth aspect, a specific implementation of the when the UE detects no effective satellite signal, obtaining a second device as a synchronization source over the D2D link is: when duration in which the UE detects no effective satellite signal is less than preset duration, and the UE detects a signal of the second device, using the second device as the synchronization source over the D2D link.

With reference to any one of the thirteenth aspect or the foregoing implementations of the thirteenth aspect, in a fifth possible implementation of the thirteenth aspect, the method further includes: sending indication information to the base station of the UE, where the indication information indicates that the UE detects no effective satellite signal.

With reference to the thirteenth aspect and the foregoing implementation of the thirteenth aspect, in a sixth possible implementation of the thirteenth aspect, a specific implementation of the obtaining a second device as a synchronization source over the D2D link is: receiving second synchronization source configuration information sent by the base station, where the second synchronization source configuration information indicates that the second device is used as the synchronization source of the UE; and determining, based on the second synchronization source configuration information, that the second device is the synchronization source over the D2D link.

With reference to the thirteenth aspect and the foregoing implementation of the thirteenth aspect, in a seventh possible implementation of the thirteenth aspect, a specific implementation is: The second device is the base station.

With reference to any one of the thirteenth aspect or the foregoing implementations of the thirteenth aspect, in an eighth possible implementation of the thirteenth aspect, a specific implementation of the obtaining a second device as a synchronization source over the D2D link is: obtaining a device with a highest synchronization source priority in the second device, as the second synchronization source.

With reference to the thirteenth aspect and the foregoing implementation of the thirteenth aspect, in a ninth possible implementation of the thirteenth aspect, a specific implementation is: The second synchronization source is the base station of the UE, or another UE.

With reference to any one of the thirteenth aspect or the foregoing implementations of the thirteenth aspect, in a tenth possible implementation of the thirteenth aspect, the method further includes: switching from a communications resource of the UE over the D2D link to a resource or resource pool associated with the synchronization source.

With reference to any one of the thirteenth aspect or the foregoing implementations of the thirteenth aspect, in an eleventh possible implementation of the thirteenth aspect, the method further includes: transmitting, by the UE, a synchronization signal over the D2D link when quality of a signal detected by the UE over the D2D link is lower than a third threshold.

According to a fourteenth aspect, user equipment is provided, including a processing module and a transceiver module, where the processing module is configured to detect a signal of a first device based on first synchronization source configuration information, where the first device is a satellite device; the transceiver module is configured to receive the signal of the first device; when the processing module detects an effective signal of the first device, the processing module is further configured to use the first device as a synchronization source of the user equipment over a D2D link; or when the processing module detects no effective signal of the first device, the processing module is further configured to obtain a second device as a synchronization source over the D2D link, where the second device is a device other than the satellite device; and the transceiver module is configured to perform communication over the D2D link based on the synchronization source over the D2D link.

With reference to the fourteenth aspect, in a first possible implementation, a specific implementation is: The first synchronization source configuration information is sent by the base station to the user equipment, or the first synchronization source configuration information is predefined or preconfigured.

With reference to the fourteenth aspect or the foregoing implementation of the fourteenth aspect, in a second possible implementation of the fourteenth aspect, that the processing module detects no effective satellite signal includes:

channel quality of a satellite signal detected by the processing module is lower than a first threshold; or

the processing module detects no satellite signal; or

the processing module detects no satellite signal within a preset time, or channel quality of a satellite signal detected by the processing module within a preset time is lower than the first threshold.

With reference to the fourteenth aspect or the foregoing implementation of the fourteenth aspect, in a third possible implementation of the fourteenth aspect, that the processing module detects an effective signal of the first device includes: The processing module detects a satellite signal within the preset duration, or channel quality of a satellite signal detected by the processing module within the preset duration is higher than or equal to a second threshold.

With reference to the fourteenth aspect or the foregoing implementation of the fourteenth aspect, in a fourth possible implementation of the fourteenth aspect, when duration in which the processing module detects no effective satellite signal is less than preset duration, and the processing module detects a signal of the second device, the processing module uses the second device as the synchronization source over the D2D link.

With reference to any one of the fourteenth aspect or the foregoing implementations of the fourteenth aspect, in a fifth possible implementation of the fourteenth aspect, the transceiver module is further configured to send indication information to the base station of the user equipment, where the indication information indicates that the user equipment detects no effective satellite signal.

With reference to the fourteenth aspect and the foregoing implementation of the fourteenth aspect, in a sixth possible implementation of the fourteenth aspect, the transceiver module is further configured to receive second synchronization source configuration information sent by the base station, where the second synchronization source configuration information indicates that the second device is used as the synchronization source of the user equipment; and the processing module is specifically configured to determine, based on the second synchronization source configuration information, that the second device is the synchronization source over the D2D link.

With reference to the fourteenth aspect and the foregoing implementation of the fourteenth aspect, in a seventh possible implementation of the fourteenth aspect, a specific implementation is: The second device is the base station.

With reference to any one of the fourteenth aspect or the foregoing implementations of the fourteenth aspect, in an eighth possible implementation of the fourteenth aspect, the processing module is specifically configured to obtain a device with a highest synchronization source priority in the second device, as the second synchronization source.

With reference to the fourteenth aspect and the foregoing implementation of the fourteenth aspect, in a ninth possible implementation of the fourteenth aspect, a specific implementation is: The second synchronization source is the base station of the user equipment, or another user equipment.

With reference to any one of the fourteenth aspect or the foregoing implementations of the fourteenth aspect, in a tenth possible implementation of the fourteenth aspect, the processing module is further configured to switch from a communications resource of the user equipment over the D2D link to a resource or resource pool associated with the synchronization source.

With reference to any one of the fourteenth aspect or the foregoing implementations of the fourteenth aspect, in an eleventh possible implementation of the fourteenth aspect, the transceiver module is further configured to transmit a synchronization signal over the D2D link when quality of a signal detected by the processing module over the D2D link is lower than a third threshold.

According to a fifteenth aspect, another user equipment is provided, including a processor, a transmitter, and a receiver, where the processor is configured to perform, by using the transmitter and the receiver, the method according to any one of the thirteenth aspect or the possible implementations of the thirteenth aspect.

According to a sixteenth aspect, a computer readable storage medium is provided, configured to store a computer program, where the computer program includes an instruction used to perform the method according to any one of the thirteenth aspect or the possible implementations of the thirteenth aspect.

In one aspect, according to the reference signal sequence mapping method and configuration method, the base station, and the user equipment in the embodiments of the present invention, the sequence parameter corresponding to the at least one sub frequency domain resource of the UE is determined, and the reference signal is generated based on the sequence parameter and is sent. In this way, the base station can flexibly allocate a reference signal generation parameter based on a multiplexing status of each scheduled UE, thereby improving a multi-user multiplexing capability and improving scheduling flexibility. Further, when there are a plurality of sub frequency domain resources, and sequence generation parameters corresponding to the plurality of sub frequency domain resources are different, an emission peak ratio of a UE transmitter can be further reduced, and transmission efficiency can be improved.

In another aspect, according to the control information transmission method and the user equipment in the embodiments of the present invention, the at least one type of control information is mapped to the channel resource in the frequency domain discrete manner, so as to avoid a problem that the frequency domain resource for transmitting the control information falls within a range of attenuated frequency domain resources because the control information is transmitted in a frequency domain continuous manner. In this way, an additional frequency domain diversity gain can be obtained during UCI transmission.

In still another aspect, according to the method for performing D2D communication by using a synchronization source, and the user equipment in the embodiments of the present invention, a satellite is selected as the synchronization source when there is an effective satellite signal, or a device other than a satellite is selected as the synchronization source when no effective satellite signal is detected. In this way, regardless of whether there is a satellite signal or there is no satellite signal, the UE can perform synchronization based on the synchronization source, thereby avoiding a problem that synchronization fails because the user equipment loses the synchronization source for a long time. This improves synchronization efficiency of the user equipment.

**BRIEF DESCRIPTION OF DRAWINGS**

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic diagram of an application scenario according to an embodiment of the present invention;
FIG. 2 is a schematic diagram of an application scenario according to another embodiment of the present invention;
FIG. 3 is a schematic diagram of four types of DMRS multiplexing according to an embodiment of the present invention;
FIG. 4 is a schematic diagram of sharing a DMRS frequency domain resource by a plurality of UEs according to an embodiment of the present invention;
FIG. 5 is a flowchart of a reference signal transmission method according to an embodiment of the present invention;
FIG. 6 is a schematic diagram of DMRS frequency domain resource allocation according to an embodiment of the present invention;
FIG. 7 is a schematic diagram of DMRS frequency domain resource allocation according to an embodiment of the present invention;
FIG. 8 is a schematic diagram of DMRS frequency domain resource allocation according to an embodiment of the present invention;
FIG. 9 is a schematic diagram of sharing a DMRS frequency domain resource by a plurality of UEs according to an embodiment of the present invention;
FIG. 10 is a schematic diagram of sharing a DMRS frequency domain resource by a plurality of UEs according to an embodiment of the present invention;
FIG. 11 is a flowchart of a reference signal transmission method according to another embodiment of the present invention;
FIG. 12 is a schematic diagram of a reference signal sequence corresponding to a sub frequency domain resource according to an embodiment of the present invention;
FIG. 13 is a schematic diagram of a scenario in which a base station configures a reference signal resource for a plurality of UEs according to an embodiment of the present invention;
FIG. 14 is a flowchart of a control information sending method according to an embodiment of the present invention;
FIG. 15 is a control information mapping manner according to an embodiment of the present invention;
FIG. 16 is another control information mapping manner according to an embodiment of the present invention;
FIG. 17 is still another control information mapping manner according to an embodiment of the present invention;
FIG. 18 is still another control information mapping manner according to an embodiment of the present invention;
FIG. 19 is still another control information mapping manner according to an embodiment of the present invention;
FIG. 20 is still another control information mapping manner according to an embodiment of the present invention;
FIG. 21 is still another control information mapping manner according to an embodiment of the present invention;
FIG. 22 is a schematic diagram of a device-to-device scenario according to another embodiment of the present invention;
FIG. 23 is a flowchart of a method for performing D2D communication by using a synchronization source according to an embodiment of the present invention;
FIG. 24 is a schematic structural diagram of user equipment according to an embodiment of the present invention;
FIG. 25 is a schematic structural diagram of a base station according to an embodiment of the present invention;
FIG. 26 is a schematic structural diagram of user equipment according to another embodiment of the present invention;
FIG. 27 is a schematic structural diagram of user equipment according to still another embodiment of the present invention;
FIG. 28 is a schematic structural diagram of user equipment according to still another embodiment of the present invention;

FIG. 29 is a schematic structural diagram of a base station according to another embodiment of the present invention;

FIG. 30 is a schematic structural diagram of user equipment according to still another embodiment of the present invention; and

FIG. 31 is a schematic structural diagram of user equipment according to still another embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The technical solutions in the present invention may be applied to various communications systems, for example, a GSM (Global System for Mobile Communications, Global System for Mobile Communications) system, a CDMA (Code Division Multiple Access, Code Division Multiple Access) system, a WCDMA (Wideband Code Division Multiple Access Wireless, Wideband Code Division Multiple Access) system, a GPRS (General Packet Radio Service, general packet radio service) system, and an LTE (Long Term Evolution, Long Term Evolution) system.

User equipment (UE, User Equipment) may also be referred to as a mobile terminal (Mobile Terminal), an access terminal, a subscriber unit, a subscriber station, a mobile station, a mobile console, a remote station, a remote terminal, a mobile device, a user terminal, a terminal, a wireless communications device, a user agent, or a user apparatus. The access terminal may be a cellular phone, a cordless phone, an SIP (Session Initiation Protocol, Session Initiation Protocol) phone, a WLL (Wireless Local Loop, wireless local loop) station, a PDA (Personal Digital Assistant, personal digital assistant), a handheld device having a wireless communication function, a computing device or another processing device connected to a wireless modem, an in-vehicle device, a wearable device, a terminal device in a future 5G network, or a terminal device in a future evolved PLMN (Public Land Mobile Network, public land mobile network) network.

A network device may be a device configured to communicate with a mobile device. The network device may be a BTS (Base Transceiver Station, base transceiver station) in GSM (Global System for Mobile Communications, Global System for Mobile Communications) or CDMA (Code Division Multiple Access, Code Division Multiple Access), may be an NB (NodeB, NodeB) in WCDMA (Wideband Code Division Multiple Access, Wideband Code Division Multiple Access), or may be an eNB or eNodeB (evolved NodeB, evolved NodeB) or an access point in LTE (Long Term Evolution, Long Term Evolution), or an in-vehicle device, a wearable device, a network side device in a future 5G network, or a network device in a future evolved PLMN (Public Land Mobile Network, public land mobile network) network.

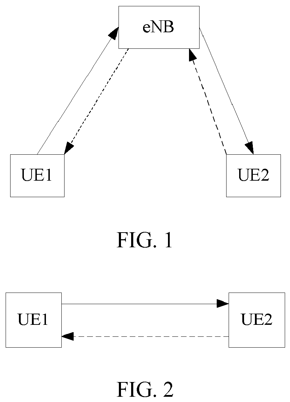

FIG. 1 is a schematic diagram of an application scenario according to an embodiment of the present invention. As shown in FIG. 1, a base station performs transmission with UE1 and UE2 by using a cellular link.

FIG. 2 is a schematic diagram of an application scenario according to another embodiment of the present invention. As shown in FIG. 1, UE1 and UE2 perform transmission by using a device-to-device (Device-to-Device, D2D) link. A D2D link, also referred to as a sidelink (sidelink), is a link over which two devices directly communicate with each other without using a third party. The device may be a handheld device, an in-vehicle device, a network device, or the like. This is not limited in the present invention.

In the application scenarios shown in FIG. 1 and FIG. 2, when UEs send reference signals, and reference signals of a plurality of different UEs appear in one symbol, there is interference between reference signals of UEs that use a same reference signal sequence and a same reference signal resource (including a time domain resource and a frequency domain resource) according to a method in the prior art.

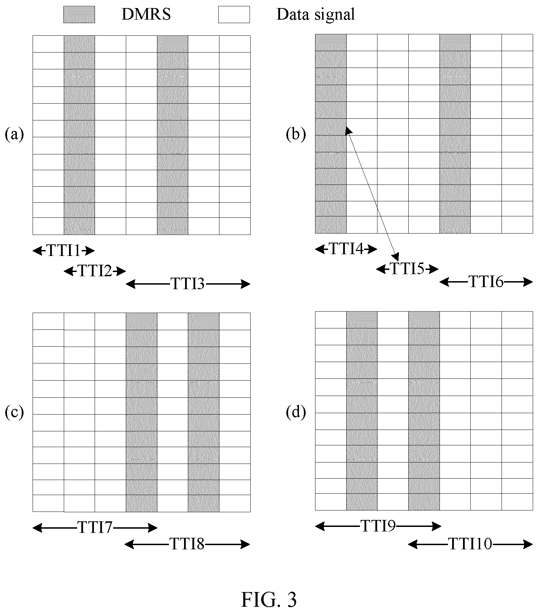

FIG. 3 is a schematic diagram of four types of DMRS multiplexing according to an embodiment of the present invention. FIG. 3 shows a case of multiplexing a reference signal in a time-frequency transmission unit including seven symbols. The symbols are numbered from a symbol 0. In FIG. 3, a gray area represents a DMRS signal resource, and a white area represents a data signal resource. FIG. 3(a) and FIG. 3(b) are schematic diagrams of DMRS multiplexing on a short-delay transmission resource of two symbols. FIG. 3(c) and FIG. 3(d) are schematic diagrams of DMRS multiplexing on a short-delay transmission resource of four symbols. In FIG. 3(a), in a TTI1 and a TTI2, a DMRS resource on a symbol 1 (the second symbol) is multiplexed. In FIG. 3(b), in a TTI5, a DMRS on a symbol 0 (the first symbol) in a TTI4 is used as a DMRS in a TTI2. In FIG. 3(c), in a TTI7 and a TTI8, a DMRS resource on a symbol 3 is multiplexed. In FIG. 3(d), in a TTI9 and a TTI10, a DMRS resource on a symbol 3 is multiplexed.

It should be understood that, in the embodiment shown in FIG. 3, the TTI1 and the TTI2 respectively belong to different UEs. For example, the TTI1 belongs to UE1 and the TTI2 belongs to UE2. The TTI4 and the TTI5, the TTI7 and the TTI8, and the TTI9 and the TTI10 also respectively belong to different UEs.

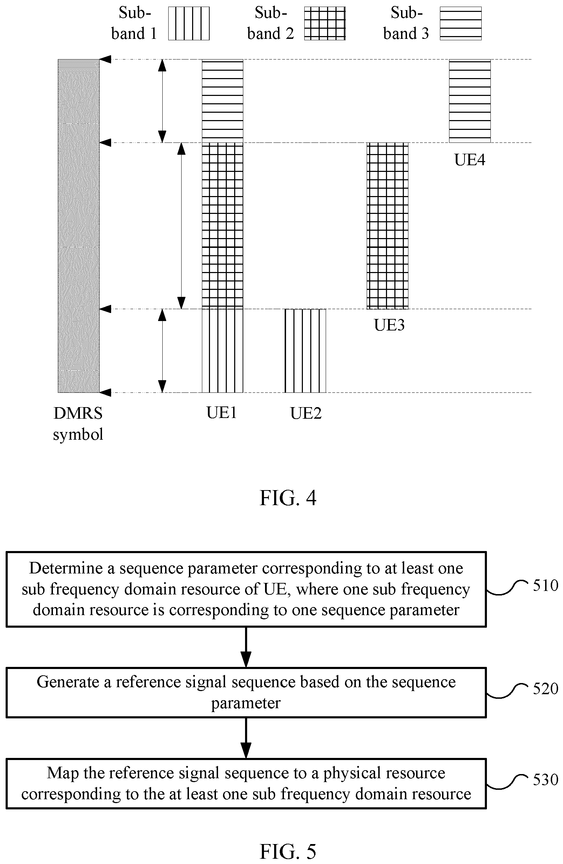

FIG. 4 is a schematic diagram of sharing a DMRS frequency domain resource by a plurality of UEs according to an embodiment of the present invention. In FIG. 4, UE1, UE2, UE3, and UE4 share one DMRS symbol. The UE1 and the UE2 share a frequency domain resource of a sub-band 1. The UE1 and the UE3 share a frequency domain resource of a sub-band 2. The UE1 and the UE3 share a frequency domain resource of a sub-band 3.

In the scenarios shown in FIG. 1 to FIG. 4, a plurality of UEs share one reference signal symbol and use a same frequency domain resource. This may cause mutual interference when different UEs perform channel estimation.

To resolve the foregoing problem, an embodiment of the present invention proposes a reference signal transmission method, UE, and a network device.

For ease of understanding the embodiments of the present invention, first, several elements introduced into descriptions of the embodiments of the present invention are described herein.

A transmission time interval (Transmission Time Interval, TTI) is a length occupied by one transmission over a radio link. In LTE, one TTI is one subframe, and a length of a time domain resource occupied by the TTI is 1 ms, including two slots (slot). In the present invention, a TTI length is no longer limited to duration of 1 ms, but may be 0.5 ms, or two, four, seven, or sixth transmission symbols or another quantity of transmission symbols.

A sequence parameter is a parameter used for generating a reference signal sequence. Specifically, the sequence parameter may include a root sequence index, a cyclic shift value, and an orthogonal cover code of a reference signal. In an application scenario in which an orthogonal cover code is not considered, one reference signal sequence may be uniquely determined by using a root sequence index and a cyclic shift value. In an application scenario in which an orthogonal cover code needs to be considered, one reference signal sequence needs to be uniquely determined by using a root sequence index, a cyclic shift value, and the orthogonal cover code.

A reference signal is a physical signal that is formed after a corresponding reference signal sequence is mapped to a corresponding physical resource. One reference signal may be obtained by mapping one or more reference signal sequences.

A physical resource: A physical resource mentioned in the present invention is a physical resource that is obtained by mapping a reference signal sequence, and may specifically include a time domain resource, a frequency domain resource, a code domain resource, a space domain resource (including resources at different spatial layers or on different physical antennas), and the like. This is not limited in the present invention.

FIG. 5 is a flowchart of a reference signal transmission method according to an embodiment of the present invention. The method in FIG. 5 is performed by UE. The method in FIG. 5 may include the following steps.

510: Determine a sequence parameter corresponding to at least one sub frequency domain resource of the UE, where one sub frequency domain resource is corresponding to one sequence parameter.

It should be understood that, in this embodiment of the present invention, the reference signal may be a demodulation reference signal (Demodulation Reference Signal, DMRS), may be a reference signal used for synchronization or a reference signal used for CSI (Channel State Information/Indicator, channel state information/indicator) measurement, or may be a reference signal used for positioning, or the like. This is not limited in the present invention. For ease of description, in this embodiment of the present invention, descriptions are provided by using the DMRS as an example.

In the prior art, a root sequence number used for a reference signal is unrelated to bandwidth of the reference signal. Using a demodulation reference signal (Demodulation Reference Signal, DMRS) as an example, root sequence numbers used for DMRS sequences generated in a same slot by different UEs belonging to a same cell are identical.

It should be understood that, in this embodiment of the present invention, one sub frequency domain resource is corresponding to one sequence parameter, and sequence parameters corresponding to different sub frequency domain resources may be the same or may be different.

For example, in the embodiment shown in FIG. 4, each of the sub-band 1, the sub-band 2, and the sub-band 3 is corresponding to one sequence parameter, and three sequence parameters corresponding to the three sub-bands may be the same or may be different.

It should be understood that the sequence parameter is used for generating a reference signal sequence, and the UE may generate the reference signal sequence based on the sequence parameter.

It should be understood that, in this embodiment of the present invention, the at least one sub frequency domain resource is a frequency domain resource that is in a frequency domain resource of the UE and that is used for sending a reference signal. For example, when the reference signal is a DMRS, the at least one sub frequency domain resource includes some or all of subcarriers in data bandwidth in which the DMRS is located. For another example, when the reference signal is another type of reference signal, the frequency domain resource used for the reference signal may be contiguous frequency domain resources in full bandwidth of a communications system, may be discrete frequency domain resources in full bandwidth, or may be a frequency domain resource indicated by signaling.

It should be understood that, in this embodiment of the present invention, the at least one sub frequency domain resource is a frequency domain resource used by the UE to map the reference signal sequence, and different sub frequency domain resources of same UE include different subcarrier resources.

In this embodiment of the present invention, the UE may divide the frequency domain resource of the UE into a plurality of frequency domain resource segments. The division manner may be stipulated in a protocol, or a base station may instruct the UE to perform division. In this embodiment of the present invention, a sub frequency domain resource may be a frequency domain resource segment obtained after the UE divides the frequency domain resource, may be some of subcarriers of a frequency domain resource segment obtained after division, or may be a single subcarrier. When a quantity of subcarriers of a sub frequency domain resource is greater than 1, the sub frequency domain resource may be continuous in frequency domain, or may be discrete in frequency domain.

For example, in the scenario shown in FIG. 4, the UE1 divides data bandwidth of a DMRS into three sub-bands: the sub-band 1, the sub-band 2, and the sub-band 3. A sub frequency domain resource in this embodiment of the present invention may be one of the three sub-bands, an odd-numbered subcarrier of a sub-band, some of odd-numbered subcarriers of a sub-band, a subcarrier of a sub-band, or the like.

In this embodiment of the present invention, one sub frequency domain resource is corresponding to one sequence parameter, and the UE may determine at least one sequence parameter corresponding to the at least one sub frequency domain resource.

It should be understood that, when one frequency domain resource segment of the UE is corresponding to one sequence parameter, a sequence parameter corresponding to some of frequency domain resources of the frequency domain resource segment is the same as the sequence parameter corresponding to the frequency domain resource segment. For example, the sub-band 1 shown in FIG. 4 is corresponding to one sequence parameter, and a sequence parameter corresponding to an odd-numbered subcarrier of the sub-band 1 is the same as the sequence parameter corresponding to the sub-band 1.

It should be understood that one frequency domain resource segment of the UE may include a plurality of sub frequency domain resources of the UE, and the plurality of sub frequency domain resources are not necessarily corresponding to one sequence parameter. For example, an odd-numbered subcarrier of the sub-band 1 shown in FIG. 4 may be corresponding to a sequence parameter, and an even-numbered subcarrier of the sub-band 1 may be corresponding to another sequence parameter, where each of the odd-numbered subcarrier and the even-numbered subcarrier of the sub-band 1 is a sub frequency domain resource of the UE.

It should be understood that the UE may determine, in a plurality of manners, the sequence parameter corresponding to the sub frequency domain resource. For example, the UE may determine, based on location information of the sub frequency domain resource, the sequence parameter corresponding to the sub frequency domain resource; may determine, according to an instruction of a base station, the sequence parameter corresponding to the sub frequency domain resource; or may determine, according to an instruction of a base station and location information of the sub frequency domain resource, the sequence parameter corresponding to the sub frequency domain resource.

520: Generate a reference signal sequence based on the sequence parameter.

It should be understood that a reference signal sequence may be generated based on a sequence parameter corresponding to a sub frequency domain resource, and at least one reference signal sequence respectively corresponding to the at least one sub frequency domain resource may be generated based on the sequence parameter corresponding to the at least one sub frequency domain resource.

For example, in the scenario shown in FIG. 4, the UE1 may generate a reference signal sequence corresponding to the sub-band 1, a reference signal sequence corresponding to the sub-band 2, and a reference signal sequence corresponding to the sub-band 3. The three reference signal sequences may be the same or may be different, depending on sequence parameters corresponding to the sub-bands.

530: Map the reference signal sequence to a physical resource corresponding to the at least one sub frequency domain resource.

Specifically, the UE may map the reference signal sequence corresponding to the at least one sub frequency domain resource to the physical resource corresponding to the at least one sub frequency domain resource. The physical resource may include a time domain resource, a frequency domain resource, an antenna port resource, resources on different spatial flows or at different spatial layers, different beam resources, and the like.

After generating, based on the sequence parameter corresponding to the at least one sub frequency domain resource, a reference signal sequence corresponding to each sub frequency domain resource, the UE may map the reference signal sequence corresponding to each sub frequency domain resource to a physical resource corresponding to each sub frequency domain resource, to form a physical signal.

For example, the UE may map a first reference signal sequence corresponding to a first sub frequency domain resource to a physical resource corresponding to the first sub frequency domain resource, and map a second reference signal sequence corresponding to a second sub frequency domain resource to a physical resource corresponding to the second sub frequency domain resource.

The scenario shown in FIG. 4 is used as an example. For example, in the embodiment shown in FIG. 4, the UE may generate, based on the sequence parameter corresponding to the sub-band 1, the reference signal sequence corresponding to the sub-band 1, and map the reference signal sequence to a physical resource corresponding to the sub-band 1 (namely, a time-frequency resource determined by the DMRS symbol and the sub-band 1). Similarly, the UE may generate, based on the sequence parameter corresponding to the sub-band 2, the reference signal sequence corresponding to the sub-band 2, and map the reference signal sequence to a physical resource corresponding to the sub-band 2; and generate, based on the sequence parameter corresponding to the sub-band 3, the reference signal sequence corresponding to the sub-band 3, and map the reference signal sequence to a physical resource corresponding to the sub-band 3. A physical signal formed by mapping the three reference signal sequences to the physical resources constitutes a reference signal of the UE. The UE may send the reference signal after generating the reference signal.

It should be understood that, for specific implementation of mapping, by the UE, the reference signal sequence to the physical resource, reference may be made to the prior art.

In this embodiment of the present invention, the UE determines the sequence parameter corresponding to the at least one sub frequency domain resource, generates the reference signal sequence based on the sequence parameter, and maps the reference signal sequence to the physical resource corresponding to the at least one sub frequency domain resource. In this way, the base station can flexibly allocate a reference signal generation parameter based on a multiplexing status of each scheduled UE, thereby improving a multi-user multiplexing capability and improving scheduling flexibility.

Further, in this embodiment of the present invention, when the UE has a plurality of sub frequency domain resources, and sequence parameters corresponding to the plurality of sub frequency domain resources are different, an emission peak ratio of a UE transmitter can be further reduced, and transmission efficiency can be improved.

Specifically, in this embodiment of the present invention, the sequence parameter includes at least one of the following: a root sequence index, a cyclic shift value, or an orthogonal cover code of the reference signal sequence.

It should be understood that, when there is an orthogonal cover code (Orthogonal Cover Code, OCC), a reference signal sequence may be determined based on the orthogonal cover code. The OCC may be used for different frequency domain resources of a same symbol, or may be used for different symbols of a same frequency domain resource. An OCC length may be adjusted depending on a requirement. For example, all integers greater than or equal to 2 are feasible. It is assumed that the UE1 has four DMRS parts A, B, C, and D on a physical resource, and the UE2 also has four DMRS parts A, B, C, and D on the same physical resource of the UE1. In this case, to implement multiplexing of the UE1 and the UE2 that have a same reference signal, an OCC may be used.

For example:

for the UE1, a reference signal generation manner is:
W10*A, W20*B, W30*C, W40*D; and
for the UE1, a reference signal generation manner is:
W11*A, W21*B, W31*C, W41*D.

[W10, W20, W30, W40] is an OCC of the UE1, and [W10, W20, W30, W40] is an OCC of the UE2. A, B, C, D may be a chip whose length is 1, or may be a sequence whose length is N, where N is a positive integer.

Interference-free communication between the UE1 and the UE2 can be implemented by using the OCCs, provided that orthogonality between the OCCs of the UE1 and the UE2 is ensured. An OCC whose length is 2 may be [1, 1] or [1, -1]. An OCC whose length is 4 may be any row or column in a 4*4 orthogonal matrix, for example, [1, 1, 1, 1], [1, -1, 1, -1], [1, 1, -1, -1], or [1, -1, -1, 1].

For a specific OCC length, there are more than one OCC, and different OCCs may have different index values. For example, for an OCC whose length is 4, there may be four different OCCs, and correspondingly, there are four different OCC index values.

Optionally, in an embodiment, a sequence parameter corresponding to a first sub frequency domain resource in the at least one sub frequency domain resource is determined by a first resource index value of the first sub frequency domain resource. The sequence parameter may include one or more of a root sequence index, a cyclic shift value, or an orthogonal cover code of a reference signal sequence, and the first resource index value is used to represent a location of the sub frequency domain resource.

Optionally, in an embodiment, at least one generation parameter in a reference signal sequence corresponding to a first sub frequency domain resource in the at least one sub frequency domain resource is determined by location information of the first sub frequency domain resource. For ease of description, a resource index value of the first sub frequency domain resource is used to represent the location information of the first sub frequency domain resource. The resource index value of the first sub frequency domain resource may be an index value of the first sub frequency domain resource, an index value of a PRB in the first sub frequency domain resource, an index value of a subcarrier in the first sub frequency domain resource, an index value of a type of subcarrier in the first sub frequency domain resource, or the like.

It is assumed that the first sub frequency domain resource is the sub-band 1 in the embodiment shown in FIG. 4. In this case, the first resource index value of the first sub frequency domain resource may be a sub-band index value of the sub-band 1, an index value of the first PRB of the sub-band 1, an index value of the last PRB of the sub-band 1, an index value of any PRB in the middle of the sub-band 1, an index value of the first subcarrier of the sub-band 1, an index value of the last subcarrier of the sub-band 1, an index value of any subcarrier in the middle of the sub-band 1, or the like. For an index value of a type of subcarrier in the first sub frequency domain resource, for example, subcarriers are occupied in a discrete manner, and the subcarrier may be an odd-numbered subcarrier or an even-numbered subcarrier, and may be indicated by using an index 0 or 1. For another example, in a discrete manner, one subcarrier is occupied in every M subcarriers. In this case, the index value of the first sub frequency domain resource may be indicated by using any integer value in a range of 0 to M-1.

In a specific implementation of this embodiment, a relationship between a resource index value of a sub frequency domain resource and a sequence parameter may be predefined. For example, a protocol may pre-stipulate a table of a mapping relationship between a resource index value and a sequence parameter. Alternatively, the base station and the UE may agree upon the mapping relationship table in advance, and the UE may search the table for a reference signal sequence generation parameter corresponding to a resource index value. In another specific implementation of this embodiment, the UE may obtain, through calculation based on a function relationship between a resource index value of a sub frequency domain resource and a sequence parameter, the sequence parameter corresponding to the sub frequency domain resource.

The following provides descriptions by using an example in which a sequence parameter corresponding to a sub frequency domain resource is calculated based on a resource index value of the sub frequency domain resource. Specifically, it is assumed that the first resource index value of the first sub frequency domain resource of the UE is *idx*. In this case, one or more of the cyclic shift value, the root sequence index, and an orthogonal cover code index of the reference signal sequence corresponding to the first sub frequency domain resource may be represented by a function of *idx*.

For example, the cyclic shift value *cs_idx* in the sequence parameter corresponding to the first sub frequency domain resource may be represented by the following formula:

$$cs\_idx = f_{circle}\ (idx)\ \dots\dots\dots\dots\dots\dots \qquad \text{formula 1}$$

where a function $f_{circle}(idx)$ represents a function relationship between *cs_idx* and *idx*.

Specifically, the following formula 2 to formula 4 show several possible implementations of the function $f_{circle}(idx)$:

$$cs\_idx = idx\ mod\ M\ \dots\dots\dots\dots\dots\dots \qquad \text{formula 2;}$$

$$cs\_idx = (idx + idx0)\ mod\ M\ \dots\dots\dots\dots\dots\dots \qquad \text{formula 3;}$$

and

$$cs\_idx = (idx\ mod\ M + idx0)\ mod\ M\ \dots\dots\dots\dots\dots\dots \qquad \text{formula 4.}$$

In formula 2, formula 3, and formula 4, M is a maximum cyclic shift value supported by the reference signal sequence corresponding to the first sub frequency domain resource. For example, M may be 8 or 12. A value of *idx0* may be predefined.

Certainly, it should be understood that the foregoing formula 2 to formula 4 are merely examples. In specific application, a function $f_{circle}(x)$ is not limited to the foregoing formulas used as examples.

In this embodiment of the present invention, different cyclic shift values are determined for different sub frequency domain resources, so that reference signal sequences corresponding to the different sub frequency domain resources can be directly calculated based on root sequence indexes corresponding to the sub frequency domain resources, with no need for an additional signaling indication.

For another example, the orthogonal cover code *occ_idx* in the sequence parameter corresponding to the first sub frequency domain resource may be represented by the following formula:

$$occ\_idx = f_{occ}\ (idx)\ \dots\dots\dots\dots\dots\dots \qquad \text{formula 5}$$

where a function $f_{occ}\ (idx)$ represents a function relationship between *occ_idx* and *idx*.

A specific formula of the function $f_{occ}\ (idx)$ may be agreed upon by the base station and the UE in advance, or may be stipulated in a protocol. A specific implementation of the function is not limited in this embodiment of the present invention.

For another example, the root sequence index *root_idx* in the sequence parameter corresponding to the first sub frequency domain resource may be represented by the following formula:

$$root\_idx = f_{root}(idx)\dots\dots\dots\dots\dots\dots \qquad \text{formula 6}$$

where a function $f_{root}(idx)$ represents a function relationship between *root_idx* and *idx*.

The root sequence index is determined by sequence group hopping and sequence hopping. Therefore, the root sequence index corresponding to the first sub frequency domain resource may alternatively be represented as a function of sequence group hopping and sequence hopping, and is represented by the following formula:

$$f_{root}(idx) = f_{root}(u(idx), v(idx))\dots\dots\dots\dots\dots\dots \qquad \text{formula 7}$$

where *u(idx)* represents sequence group hopping of the root sequence index corresponding to the first sub frequency domain resource, and *v(idx)* represents sequence hopping of the root sequence index corresponding to the first sub frequency domain resource.

For example, in an existing LTE protocol, a root sequence index is defined in the following manner:

$$q = \lfloor \bar{q} + 1/2 \rfloor + v(-1)^{\lfloor 2\bar{q} \rfloor};$$

and

$$\bar{q} = N_{ZC}^{RS} * (u+1)/31,$$

where $N_{ZC}^{RS}$ is a sequence length.

Optionally, sequence group hopping and/or sequence hopping of a first root sequence index are/is determined by the first resource index value, where the first root sequence index is the root sequence index in the sequence parameter corresponding to the first sub frequency domain resource.

A sequence group hopping count *u* in existing LTE may be represented by the following group hopping formula:

$$u = (f_{gh}(n_s) + f_{ss}) \bmod 30 \dots\dots\dots\dots\dots\dots \qquad \text{formula 8}$$

where $f_{gh}(n_s)$ represents a group hopping mode of a reference signal sequence, and $f_{ss}$ represents a sequence shift mode of the reference signal sequence.

In a specific implementation of this embodiment of the present invention, a sequence group hopping count *u* may be represented by the following group hopping formula:

$$u = (f_{gh}(n_s) + f_{ss} + idx) \bmod 30 \dots\dots\dots\dots\dots\dots \qquad \text{formula 9.}$$

In other words, the sequence group hopping count of the root sequence index corresponding to the first sub frequency domain resource may be determined by the first resource index value.

In addition, from formula 7, it can be learned that a sequence group hopping count is determined by a group hopping mode of a reference signal sequence and a sequence shift mode of the reference signal sequence. Therefore, in this embodiment of the present invention, a group hopping mode and/or a sequence shift mode of the sequence may be further determined based on the first resource index value, so as to determine sequence group hopping and finally determine the root sequence index.

In the prior art, a group hopping mode $f_{gh}(n_s)$ of a reference signal sequence may be represented by the following formula:

$$f_{gh}(n_s) = \left( \sum_{i=0}^{7} c(8n_s + i) \cdot 2^i \right) \bmod 30 \qquad \text{.......................} \qquad \text{formula 10}$$

where $n_s$ represents a slot number, and $c(8n_s + i)$ represents an expression of a pseudo-random sequence.

In a specific implementation of this embodiment of the present invention, the group hopping mode $f_{gh}(n_s)$ of the reference signal sequence may be represented by the following group hopping formula:

$$f_{gh}(n_s) = \left( \sum_{i=0}^{7} c(8n_s + i) \cdot 2^i + idx \right) \bmod 30 \qquad \text{.......................} \qquad \text{formula 11.}$$

In other words, the sequence group hopping mode of the root sequence index corresponding to the first sub frequency domain resource may be determined by the first resource index value.

In the prior art, a sequence shift mode $f_{ss}^{sPUSCH}$ of a reference signal sequence may be represented by the following formula:

$$f_{ss}^{sPUSCH} = \left( f_{ss}^{sPUCCH} + \Delta_{ss} \right) \bmod 30 \qquad \text{.......................} \qquad \text{formula 12}$$

where $\Delta_{ss}$ is an offset parameter indicated by a base station.

In a specific implementation of this embodiment of the present invention, the sequence shift mode $f_{ss}^{sPUSCH}$ of the reference signal sequence may be represented by the following group hopping formula:

$$f_{ss}^{sPUSCH} = \left( f_{ss}^{sPUCCH} + \Delta_{ss} + idx \right) \bmod 30 \qquad \text{.......................} \qquad \text{formula 13.}$$

In other words, the sequence group hopping mode of the root sequence index corresponding to the first sub frequency domain resource may be determined by the first resource index value.

Further, in the prior art, $f_{ss}^{sPUCCH}$ may be represented by the following formula:

$$f_{ss}^{PUCCH} = N_{ID}^{cell} \bmod 30 \qquad \text{.......................} \qquad \text{formula 14.}$$

In a specific implementation of this embodiment of the present invention, $f_{ss}^{sPUCCH}$ may be represented by the following group hopping formula:

$$f_{ss}^{sPUCCH} = \left( N_{ID}^{cell} + idx \right) \bmod 30 \qquad \text{.......................} \qquad \text{formula 15.}$$

In this embodiment of the present invention, different root sequence indexes are determined for different sub frequency domain resources based on resource index values of the sub frequency domain resources, so as to improve use flexibility of a reference signal sequence, reduce a probability that one reference signal sequence appears in a plurality of different sub frequency domain resources, and further reduce a peak-to-average ratio of a reference signal sequence, thereby improving power amplifier efficiency of a device that transmits a reference signal.

In addition, according to the method in this embodiment of the present invention, the base station does not need to send an additional signaling indication, and therefore signaling overheads on a base station side can be further reduced.

Optionally, in another embodiment, the method may further include: obtaining first information, where the first information is used to indicate at least one sequence parameter corresponding to the at least one sub frequency domain resource; and step 520 may be specifically implemented as: determining, based on the first information, the at least one sequence parameter corresponding to the at least one sub frequency domain resource.

Specifically, the sequence parameter may be one or more of the root sequence index, the cyclic shift value, or the orthogonal cover code of the reference signal sequence. For example, when the first information is used to indicate the root sequence index corresponding to the at least one sub frequency domain resource, in step 520, the root sequence index corresponding to the at least one sub frequency domain resource may be determined; or when the first information is used to indicate the cyclic shift value and the orthogonal cover code corresponding to the at least one sub frequency domain resource, in step 520, the cyclic shift value and the orthogonal cover code corresponding to the at least one sub frequency domain resource may be determined.

It should be understood that the first information may be sent by the base station to the UE, or may be predefined, for example, pre-stipulated in a protocol.

It should be understood that the sequence parameter indicated by the first information may be an absolute value or may be a relative value.

Descriptions are provided by using the cyclic shift value as an example, with reference to the example of the UE1 in the scenario shown in FIG. 3.

For example, a base station may send first information to the UE1, where the first information may indicate cyclic shift values respectively corresponding to the sub-band 1, the sub-band 2, and the sub-band 3. For another example, a base station may send first information to the UE1, where the first information may include a cyclic shift value corresponding to the sub-band 1, a difference between a cyclic shift value corresponding to the sub-band 2 and the cyclic shift value corresponding to the sub-band 1, and a difference between a cyclic shift value corresponding to the sub-band 3 and the cyclic shift value corresponding to the sub-band 1. For another example, a base station may send first information to the UE1, and implicitly indicate, by using an indication information order of the sub-band 1, the sub-band 2, and the sub-band 3 in the first information, cyclic shift values respectively corresponding to the sub-band 1, the sub-band 2, and the sub-band 3. The UE1 may determine, based on the first information, the cyclic shift values respectively corresponding to the sub-band 1, the sub-band 2, and the sub-band 3.

For another example, the UE may alternatively determine the cyclic shift value in a predefined manner. For example, the cyclic shift value of the UE may be determined based on an identifier of the UE. The identifier of the UE herein may be an RNTI (radio network temporary identifier, Radio Network Temporary Identifier) of the UE, or may be all or some of bits in a MAC address of the UE. The cyclic shift value of the UE is determined based on the identifier ID of the UE, for example, ID mod M. Herein, M is a quantity of cyclic shifts of the reference signal sequence.

In this embodiment of the present invention, the sequence parameter of the UE is configured based on the indication information sent by the base station, so that the base station can implement full control on a reference signal sequence of each UE, so as to ensure scheduling flexibility.

In addition, according to the method in this embodiment of the present invention, system performance can be further optimized through configuration of the sequence parameter of the UE.

Optionally, in still another embodiment, the method further includes: obtaining first information, where the first information is used to indicate at least one sequence parameter corresponding to the at least one sub frequency domain resource; and step 520 may be specifically implemented as: determining, based on the first information and a resource index value corresponding to the at least one sub frequency domain resource, the at least one sequence parameter corresponding to the at least one sub frequency domain resource.

Specifically, the UE may determine a first generation parameter indicator value based on a first generation parameter indicated by the first information, determine, based on a first resource index value of a first sub frequency domain resource, a first generation parameter offset value corresponding to the first sub frequency domain resource, and determine, based on the first generation parameter indicator value and the first generation parameter offset value, the first generation parameter corresponding to the first sub frequency domain resource. The first generation parameter is one of sequence parameters corresponding to the first sub frequency domain resource, and the first sub frequency domain resource is any one of the at least one sub frequency domain resource. It should be understood that the first generation parameter indicator value is a parameter that is configured by the base station and that is related to the first generation parameter, and the first generation parameter offset value is a numeric value of the first generation parameter related to the resource index value of the first sub frequency domain resource.

For example, in formula 3 and formula 4, *idx0* may be a cyclic shift indicator value of the first sub frequency domain resource indicated in the first information, and *idx* may be a cyclic shift offset value determined based on the first resource index value of the first sub frequency domain resource. The UE may determine, based on *idx* and *idx0,* a cyclic shift value corresponding to the first sub frequency domain resource.

For another example, the first information sent by the base station to the UE may include a cyclic shift indicator value cs0 and a root sequence index indicator value root0, where both cs0 and root_0 are generation parameters indicated by the base station. The UE may further determine a cyclic shift value $\Delta$cs_idx and a root sequence index offset value $\Delta$root_idx based on the resource index value of the sub frequency domain resource, where both $\Delta$cs_idx and $\Delta$root_idx are generation parameters corresponding to a resource location.

The UE may determine, based on cs0 and $\Delta$cs_idx, the cyclic shift value cs_idx corresponding to the sub frequency domain resource. For example, cs_idx may be represented by the following formula:

$$cs\_idx = (cs0 + \Delta cs\_idx) \bmod M \ldots\ldots\ldots\ldots\ldots\ldots \qquad \text{formula 16.}$$

The UE may determine, based on root0 and $\Delta$root_idx, the root sequence index root_idx corresponding to the sub frequency domain resource. For example, root_idx may be represented by the following formula:

$$root\_idx = (root0 + \Delta root\_idx) \bmod N \ldots\ldots\ldots\ldots\ldots \qquad \text{formula 17.}$$

For a calculation formula of $\Delta$cs_idx, refer to formula 1 to formula 4. For a calculation formula of $\Delta$root_idx, refer to formula 6 to formula 15.

For example, it is assumed that the UE1 has three DMRS sub-bands, and idxes of the sub-bands are respectively 1, 2, and 3. It is assumed that first information indicates that a value of cs0 of a first sub-band of the UE1 is 3, a value of root0 of the first sub-band is 7, a value of M is 8, and a value of N is 30. In this case, parameters of the three sub-bands of the UE1 are as follows:

$$cs\_1 = 3, root\_1 = 7;$$

$$cs\_2 = (cs0 + \Delta cs\_idx) \bmod M = (3 + 1) \bmod M = 4;$$

$$root\_2 = (root0 + \Delta root\_idx) \bmod N = (7 + 1) \bmod N = 8;$$

$$cs\_3 = (cs0 + \Delta cs\_idx) \bmod M = (3 + 2) \bmod M = 5;$$

and

$$root\_3 = (root0 + \Delta root\_idx) \bmod N = (7 + 2) \bmod N = 9.$$

Certainly, it should be understood that the foregoing calculation formulas are merely examples. In this embodiment of the present invention, there may be another formula. This is not limited in the present invention.

In this embodiment of the present invention, the generation parameter indicator value is obtained based on the first information sent by the base station, and the generation parameter offset value corresponding to the sub frequency domain resource is obtained based on the resource index value of the sub frequency domain resource, so as to determine the sequence parameter. This can reduce air-interface indication signaling overheads on a network side, and can ensure scheduling flexibility.

Certainly, it should be understood that the UE may determine the generation parameter by flexibly using a combination of one or more of the foregoing three manners: determining the sequence parameter based on the resource index value of the sub frequency domain resource, determining the sequence parameter based on the first information sent by the base station, or determining the sequence parameter based on the resource index value of the sub frequency domain resource and the first information sent by the base station. For example, in a specific manner, the root sequence index may be determined based on the resource index value of the sub frequency domain resource, the cyclic shift value may be determined based on the first information sent by the base station, and the orthogonal cover code may be determined based on the resource index value of the sub frequency domain resource and the first information sent by the base station.

In addition, when indicating a sequence parameter of a sub frequency domain resource of the UE, the base station may indicate a sequence parameter for a frequency domain resource that is larger than the sub frequency domain resource. The frequency domain resource uses a same sequence parameter. For example, the base station may indicate a sequence parameter of the UE1 in the sub-band 1, but the UE1 sends a reference signal only on an odd-numbered subcarrier of the sub-band 1.

Optionally, the first information is transmitted by using a user equipment-specific (UE-Specific) message and/or a cell-specific (Cell-Specific) message.

By transmitting the first information by using the UE-specific, the base station may configure different reference signal sequence generation parameters for all UEs, so that scheduling is more flexible.

By transmitting the first information by using the cell-specific, the base station may partially reduce a quantity of sent indication signaling, thereby further reducing signaling overheads on the network side.

By transmitting the first information by using both the UE-specific and the cell-specific, for example, transmitting the reference signal sequence by using the cell-specific and transmitting the cyclic shift value and the orthogonal cover code by using the UE-specific, the base station can reduce a quantity of sent indication signaling, thereby reducing signaling overheads on the network side while ensuring sequence parameter configuration flexibility.

Optionally, the method in the embodiment shown in FIG. 5 may further include step 501: Determine the at least one sub frequency domain resource.

It should be understood that there is no direct sequential relationship between step 501 and step 510 in time. For example, in the application scenario shown in FIG. 4, a base station may send, to the UE1, sequence parameters corresponding to the sub-band 1, the sub-band 2, and the sub-band 3. In addition, the base station may send, to the UE1, information about a sub frequency domain resource used for sending a DMRS, to instruct the UE1 to send the DMRS on all subcarriers of the sub-band 1, an odd-numbered subcarrier of the sub-band 2, and an even-numbered subcarrier of the sub-band 3. A sequence parameter corresponding to the odd-numbered subcarrier of the sub-band 2 is the same as a sequence parameter corresponding to the sub-band 2, and a sequence parameter corresponding to the even-numbered subcarrier of the sub-band 3 is the same as a sequence parameter corresponding to the sub-band 3.

Specifically, the UE may determine the at least one sub frequency domain resource in a plurality of manners.

In a specific implementation of this embodiment, the at least one sub frequency domain resource is indicated by signaling, or is predefined or preconfigured.

The at least one sub frequency domain resource is predefined, for example, the at least one sub frequency domain resource may be stipulated in a protocol. Specifically, for example, the protocol may stipulate that a location of the sub frequency domain resource of the UE in an entire resource is determined based on an identifier of the UE. The identifier of the UE herein may be an RNTI (radio network temporary identifier, Radio Network Temporary Identifier) of the UE, or may be all or some of bits in a MAC address of the UE. The location of the sub frequency domain resource is determined based on the identifier ID of the UE, for example, ID mod M. Herein, M is a possible quantity of sub frequency domain resource locations.

The at least one sub frequency domain resource is preconfigured, for example, a user may preconfigure sub frequency domain resource indication information on the UE.

In another specific implementation of this embodiment, the method may further include: receiving second information sent by the base station, where the second information is used to indicate a location of the at least one sub frequency domain resource; and step 501 may be specifically implemented as: determining, based on the second information, the at least one sub frequency domain resource.

Optionally, the second information may indicate at least one segment of contiguous subcarriers as a sub frequency domain resource used by the UE to send a reference signal.

For example, in the embodiment shown in FIG. 4, sub-band indexes of the sub-bands 1, 2, and 3 may be sent to the UE1 by using second information, to indicate to the UE1 that the sub-bands 1, 2, and 3 may be used as frequency domain resources for sending a reference signal. In this case, each sub-band is a sub frequency domain resource.

Alternatively, optionally, the second information may indicate at least one segment of contiguous subcarriers, and the UE selects, according to a predefined subcarrier selection rule, a subcarrier set that meets the rule from the contiguous subcarriers, as a frequency domain resource used by the UE to send a reference signal. In this case, a subcarrier set that meets the subcarrier selection rule in each segment of contiguous subcarriers is used as a sub frequency domain resource.

The predefined subcarrier selection rule may be, for example, an index value of a type of subcarrier in contiguous subcarriers. Specifically, for example, subcarriers are occupied in a discrete manner, and the subcarrier may be an odd-numbered subcarrier or an even-numbered subcarrier, and may be indicated by using an index 0 or 1. For another example, in a discrete manner, one subcarrier is occupied in every M subcarriers. In this case, an index value of a sub-band may be indicated by using any integer value in a range of 0 to M-1. In addition, an index value of a subcarrier of the UE in a sub-band may be determined based on the identifier ID of the UE, for example, ID mod M.

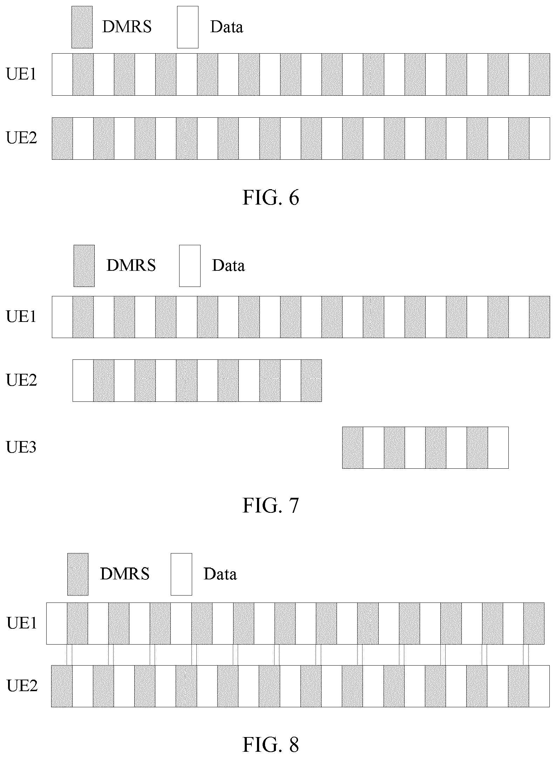

FIG. 6 is a schematic diagram of DMRS frequency domain resource allocation according to an embodiment of the present invention. As shown in FIG. 6, UE1 occupies even-numbered subcarriers in DMRS bandwidth, and UE2 occupies odd-numbered subcarriers in the DMRS bandwidth.

In a scenario shown in FIG. 6, for example, a predefined subcarrier selection rule for the UE1 may be: occupying an even-numbered subcarrier. When second information instructs the UE to select, from the DMRS bandwidth, a frequency domain resource used for sending a reference signal, the UE1 may select an even-numbered subcarrier in the DMRS bandwidth as the frequency domain resource for sending the reference signal.

Alternatively, optionally, the second information may indicate contiguous subcarrier resources and a subcarrier indication corresponding to the contiguous subcarrier resources. The subcarrier indication is used to indicate a subcarrier, used for sending a reference signal, in the contiguous subcarrier resources.

FIG. 7 is a schematic diagram of DMRS frequency domain resource allocation according to an embodiment of the present invention. As shown in FIG. 7, UE1 occupies even-numbered subcarriers in DMRS bandwidth, UE2 occupies the second to the seventh odd-numbered subcarriers in the DMRS bandwidth, and UE3 occupies the eighth to the eleventh odd-numbered subcarriers in the DMRS bandwidth.

As shown in FIG. 7, second information sent by a base station to the UE1 instructs the UE1 to use even-numbered subcarriers of a sub-band 1; second information sent by the base station to the UE2 instructs the UE2 to use six odd-numbered subcarriers, starting from the second odd-numbered subcarrier, of the sub-band 1; and second information sent by the base station to the UE3 instructs the UE3 to use four odd-numbered subcarriers, starting from the eighth odd-numbered subcarrier, of the sub-band 1.

It should be understood that the second information may indicate at least one segment of contiguous subcarrier resources, and subcarrier indications corresponding to all segments of contiguous subcarrier resources may be the same or may be different. For example, the second information may instruct the UE to use an odd-numbered subcarrier in the sub-band 1, and use an even-numbered subcarrier in a sub-band 2.

FIG. 8 is a schematic diagram of DMRS frequency domain resource allocation according to an embodiment of the present invention. A scenario of the embodiment shown in FIG. 8 may be considered as a scenario in which the UE1 and the UE2 are not fully synchronized in the embodiment shown in FIG. 6. For example, as shown in FIG. 8, when the UE1 and the UE2 are not fully synchronized, resources (subcarriers or time domain symbols) of the UE1 and the UE2 for DMRS transmission partially overlap. If sequences used for DMRSs sent by the UE1 and the UE2 are identical, interference is caused to a receiver of a base station, and as a result, the receiver of the base station has difficulty in distinguishing between the two different UEs.

In this embodiment of the present invention, the UE determines the sub frequency domain resource based on the frequency domain resource location indicated by the base station. This can implement flexible DMRS multiplexing of resources between different UEs, thereby improving scheduling flexibility of the base station.

Particularly, according to the method in this embodiment of the present invention, when the UE sends a DMRS by using a single sub-band, a bandwidth limitation on the UE with a single DMRS sub-band can be reduced.

Further, the second information may further include a multiplexing manner of the at least one sub frequency domain resource. In the present invention, a multiplexing manner of each sub frequency domain resource is used to indicate at least one of the following types of information:

a frequency domain resource multiplexing relationship between the UE and another UE on the sub frequency domain resource;
whether there is reference signal resource multiplexing between the UE and another UE; or
a manner of using a reference signal resource in bandwidth in which the UE uses a reference signal.

Optionally, the multiplexing manner may include at least one of multiplexing manners such as frequency division multiplexing, code division multiplexing, and resource sharing.

For example, if the FDM multiplexing manner is used, the sub frequency domain resource occupies discrete subcarriers in the bandwidth of the reference signal; if the CDM multiplexing manner is used, the sub frequency domain resource occupies contiguous subcarriers in the bandwidth of the reference signal; if a multiplexing manner that combines FDM and CDM is used, the sub frequency domain resource occupies discrete subcarriers in the bandwidth of the reference signal, and the sequence parameter corresponding to the sub frequency domain resource is configured.

Optionally, for another example, a multiplexing manner may be used to indicate whether there is a multiplexing relationship between different UEs in a same reference signal resource set. If there is the multiplexing relationship, transmit power references on the resource set in which a resource is multiplexed may be different for the UEs.

It should be understood that, in addition to being used to indicate the frequency domain resource multiplexing relationship between the UE and the another UE on the sub frequency domain resource, the multiplexing manner may be further used to indicate the at least one sub frequency domain resource with reference to other frequency domain resource indication information in the second information or predefined frequency domain resource indication information of the UE.

For example, in the embodiment shown in FIG. 6, second information indicates that a multiplexing manner used by the UE1 includes an FDM manner, and a predefined subcarrier selection rule for the UE1 may be: occupying an even-numbered subcarrier. In this case, the UE1 may select an even-numbered subcarrier in DMRS bandwidth as a frequency domain resource for sending a reference signal.

It should be understood that the second information may be transmitted by using static signaling such as a radio resource control (Radio Resource Control, RRC) message or a system information block (System Information Block, SIB) message, may be transmitted by using dynamic signaling such as a downlink control information (Downlink Control Information, DCI) message, or may be transmitted by using both a DCI message and an RRC message or a SIB message.

Optionally, in an embodiment, the second information may be transmitted by using dynamic signaling such as a DCI message.

In a specific implementation, the base station may perform configuration for the UE based on a frequency domain resource used by the UE for the reference signal, without configuring a sub-band division manner. Such a manner is optimal for reference signal transmission of single UE, and the UE only needs to know how many sub-bands the frequency domain resource for reference signal transmission of the UE is divided into, a sub-band size and location, and a sequence parameter corresponding to each sub-band, with no need to care about whether the UE and adjacent UE have a same reference signal symbol.

Specifically, for example, the base station may define a minimum transmission sub-band resource block group (Resource Block Group, RBG), and define a size of each sub-band, for example, four, six, eight, or 10 RBGs. In other words, bandwidth allocated to the UE needs to be an integral multiple of the RBG. The base station may indicate an RGB of one sub-band in a bit mapping manner.

Table 1 is another resource allocation indication configured by a base station for UE1 and UE2 according to an embodiment of the present invention.

**Table 1**

| RBG index | 0 | 1 | 2 | 3 | 4 | 5 | 6 | 7 | 8 | 9 |
|---|---|---|---|---|---|---|---|---|---|---|
| Sub-band division of UE1 | | 0 | 0 | 1 | | | | | | |
| Sub-band division of UE2 | | | | 1 | 0 | 0 | | | | |

In an indication manner, as shown in Table 1, the UE1 occupies three contiguous RBGs, and sub-band use is represented as 001 in second information. This indicates that two sub-bands are obtained through division. To be specific, RGBs with indexes 1 and 2 are one sub-band, and an RBG3 is one sub-band. Similarly, two sub-bands are obtained through division for the UE2, an RBG4 is a sub-band 3, and an RBG4 and an RBG 5 are a sub-band 2. In other words, in the second information, RBGs whose indexes have a same indication are one sub-band, and an RBG whose index has a different indication is another sub-band.

Further, in a scenario shown in Table 1, 0 and 1 may be further used to indicate different multiplexing manners. Alternatively, 1 is used to indicate that there is a multiplexing manner, and 0 is used to indicate that there is no multiplexing manner, or the like.

In this embodiment of the present invention, the second information may be transmitted by using dynamic signaling such as DCI, so that the base station indicates a frequency domain resource configuration for a reference signal more dynamically and flexibly. In this way, the base station can indicate resource configurations for reference signals depending on actual frequency domain resource multiplexing statuses of different UEs.

Optionally, in an embodiment, the second information may be transmitted by using static signaling such as an RRC message or a SIB message.

Table 2 is a resource allocation indication configured by a base station for UE1 and UE2 according to an embodiment of the present invention.

**Table 2**

| Sub-band index | 0 | 1 | 2 | 3 | 4 | 5 | 6 | 7 | 8 | 9 |
|---|---|---|---|---|---|---|---|---|---|---|
| Multiplexing manner | 1 | 0 | 0 | 1 | 0 | 1 | 1 | 0 | 0 | 0 |
| Transmission bandwidth of UE1 | | 1 | 1 | 1 | | | | | | |
| Transmission bandwidth of UE2 | | | | 1 | 1 | | | | | |

In the table, a multiplexing manner 1 represents FDM, a multiplexing manner 0 represents CDM, and transmission bandwidth 1 represents occupied.

As shown in Table 2, the transmission bandwidth of the UE1 is corresponding sub-bands 1, 2, and 3, and multiplexing manners are respectively 0, 0, and 1. In other words, the UE1 performs CDM in the sub-bands 1 and 2, and performs FDM in the sub-band 3. The transmission bandwidth of the UE2 is corresponding sub-bands 3 and 4, and multiplexing manners are respectively 1 and 0. In other words, the UE2 performs FDM in the sub-band 3, and performs CDM in the sub-band 4.

The UE1 performs CDM in the sub-bands 1 and 2, and may determine that the sub-bands 1 and 2 are sub frequency domain resources. That is, the UE1 sends a reference signal by using the sub-bands 1 and 2. The UE2 performs CDM in the sub-band 4, and may determine that the sub-band 4 is a sub frequency domain resource. That is, the UE2 sends a reference signal by using the entire sub-band 4.

Certainly, it should be understood that bandwidth allocated during transmission of the UE is not necessarily an integral multiple of sub-bands obtained through division by the base station. For example, the sub-band 4 occupied by the UE2 may alternatively be only some of PRBs in the sub-band. For example, the base station further sends a subcarrier indication to instruct the UE2 to use six PRBs of the sub-band 4, but the UE2 still uses, in the sub-band, a reference signal multiplexing manner as indicated for the sub-band.

For example, in the embodiment shown in FIG. 4, it is assumed that the second information sent by the base station to the UE1 includes locations and multiplexing manners of the sub-bands 1, 2, and 3, and all the multiplexing manners are CDM. In this case, the UE1 may determine that the sub-bands 1, 2, and 3 are sub frequency domain resources used for sending a DMRS.

It should be understood that when a sub frequency domain resource multiplexing manner is a CDM manner, the sub frequency domain resource multiplexing manner may not be configured in the second information, and this does not affect use on a UE side.

In this embodiment of the present invention, frequency domain resource indication information, such as a multiplexing manner, a sub-band indication, and a subcarrier indication, in the second information may be sent by using an RRC message or a SIB message. This can reduce air-interface physical-layer signaling overheads.

Optionally, in another embodiment, the second information may be transmitted by using both a DCI message and an RRC message or a SIB message.

For example, the base station indicates, by using static signaling such as an RRC message or a SIB message, sub-bands into which system bandwidth or short-delay transmission bandwidth is divided. For example, in a 20 MHz communications system, there are a total of 100 PRBs. In this case, the base station may instruct, by using signaling, the UE to divide the bandwidth into 10 sub-bands, and a size of each sub-band is 10 PRBs. The base station may further indicate a multiplexing manner, for example, FDM or CDM, of each sub-band by using dynamic signaling such as a DCI message.

In this embodiment of the present invention, indication information is sent by using the dynamic signaling in combination with the static signaling. In this way, specific static-signaling overheads can be reduced, and indication information transmitted by using the dynamic signaling can be configured more flexibly depending on a scheduling requirement.

Similarly, the first information may also be transmitted by using a dynamic signaling DCI message and/or static signaling such as an RRC message or a SIB message.

It should be understood that multiplexing manners, of different frequency domain resources, indicated in the second information may be the same or may be different.

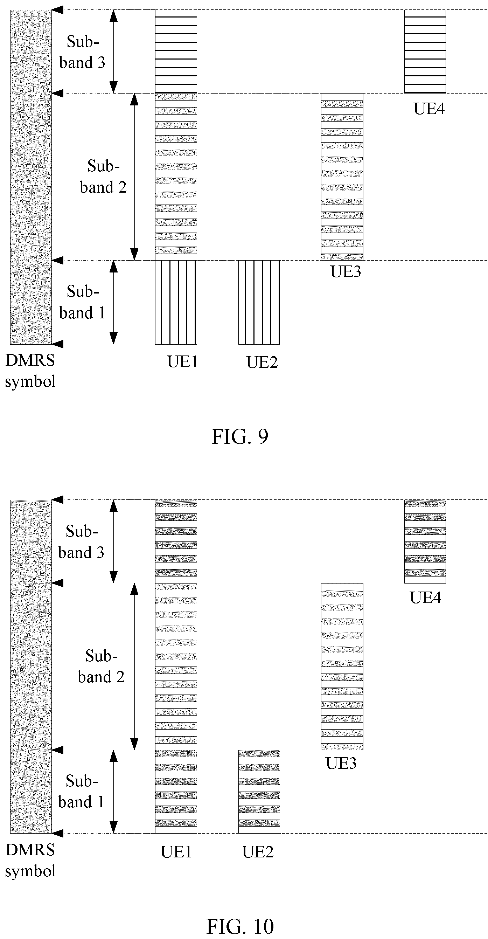

FIG. 9 is a schematic diagram of sharing a DMRS frequency domain resource by a plurality of UEs according to an embodiment of the present invention. In FIG. 9, UE1, UE2, UE3, and UE4 share one DMRS symbol. The UE1 and the UE2 share a frequency domain resource of a sub-band 1. The UE1 uses odd-numbered subcarriers in a frequency domain resource of a sub-band 2. The UE3 uses even-numbered subcarriers in the frequency domain resource of the sub-band 2. The UE1 and the UE3 share a frequency domain resource of a sub-band 3.

As shown in FIG. 9, second information sent by a base station to the UE1 may indicate locations of the sub-band 1, the sub-band 2, and the sub-band 3, and indicate that multiplexing manners of the sub-band 1 and the sub-band 3 are a CDM manner and a multiplexing manner of the sub-band 2 is an FDM manner, and a subcarrier indicated by subcarrier indication information is an odd-numbered subcarrier, and the like.

In this embodiment of the present invention, the UE determines the sub frequency domain resource based on the frequency domain resource location and the multiplexing manner that are indicated by the base station, so as to flexibly determine multiplexing manners of the UE on different sub frequency domain resources. This can reduce interference from different UEs when the base station receives reference signals, improve scheduling flexibility, and improve channel estimation performance.

Optionally, in an embodiment, when the at least one sub frequency domain resource is two or more sub frequency domain resources, reference signal sequence multiplexing manners of all the sub frequency domain resources are the same, or reference signal sequence multiplexing manners of at least two of the sub frequency domain resources are different.

It should be understood that a sub frequency domain resource multiplexing manner in the second information may include both a CDM manner and an FDM manner.

FIG. 10 is a schematic diagram of sharing a DMRS frequency domain resource by a plurality of UEs according to an embodiment of the present invention. In FIG. 10, UE1, UE2, UE3, and UE4 share one DMRS symbol. The UE1 uses odd-numbered subcarriers in a sub-band 1 to a sub-band 3 to send a DMRS, and the UE1 and the UE2 share odd-numbered subcarriers of the sub-band 1. The UE1 uses odd-numbered subcarriers in a frequency domain resource of a sub-band 2. The UE3 uses even-numbered subcarriers in the frequency domain resource of the sub-band 2. The UE1 and the UE3 share odd-numbered subcarriers of the sub-band 3. Multiplexing manners used by the UE1 in the sub-band 1 include both an FDM manner and a CDM manner.

In a scenario shown in FIG. 10, second information configured by a base station for the UE1 may indicate that multiplexing manners used by the UE1 in the sub-band 1, the sub-band 2, and the sub-band 3 include the FDM manner, and indicate that multiplexing manners used by the UE1 in the sub-band 1 and the sub-band 3 include the CDM manner. Similarly, second information configured by the base station for the UE2 may indicate that a multiplexing manner used by the UE2 in the sub-band 1 is the CDM manner; second information configured by the base station for the UE3 may indicate that a multiplexing manner used by the UE3 in the sub-band 3 is the FDM manner; and second information configured by the base station for the UE4 may indicate that a multiplexing manner used by the UE4 in the sub-band 1 is the CDM manner. It should be understood that the UE1 may alternatively use different subcarriers in different sub-bands to implement DMRS multiplexing with different UEs, and is not limited to using odd-numbered subcarriers or even-numbered subcarriers.

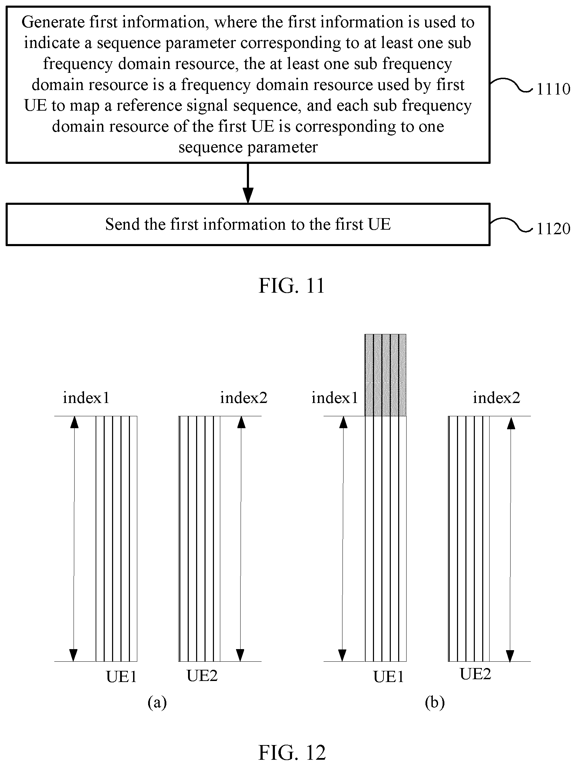

FIG. 11 is a flowchart of a reference signal transmission method according to another embodiment of the present invention. The method in FIG. 11 is performed by a base station. The method includes the following steps.

1110: Generate first information, where the first information is used to indicate a sequence parameter corresponding to at least one sub frequency domain resource, the at least one sub frequency domain resource is a frequency domain resource used by the first UE to map a reference signal sequence, and each sub frequency domain resource of the first UE is corresponding to one sequence parameter.

It should be understood that, in this embodiment of the present invention, the reference signal may be a demodulation reference signal (Demodulation Reference Signal, DMRS), may be a reference signal used for synchronization or a reference signal used for CSI (Channel State Information/Indicator, channel state information/indicator) measurement, or may be a reference signal used for positioning, or the like. This is not limited in the present invention. For ease of description, in this embodiment of the present invention, descriptions are provided by using the DMRS as an example.

In the prior art, a root sequence number used for a reference signal is unrelated to bandwidth of the reference signal. Using a demodulation reference signal (Demodulation Reference Signal, DMRS) as an example, root sequence numbers used for DMRS sequences generated in a same slot by different UEs belonging to a same cell are identical.

In this embodiment of the present invention, one sub frequency domain resource is corresponding to one sequence parameter, and sequence parameters corresponding to different sub frequency domain resources may be the same or may be different.

For example, in the embodiment shown in FIG. 4, each of the sub-band 1, the sub-band 2, and the sub-band 3 is corresponding to one sequence parameter, and three sequence parameters corresponding to the three sub-bands may be the same or may be different.

It should be understood that, in this embodiment of the present invention, the at least one sub frequency domain resource is a frequency domain resource that is in a frequency domain resource of the UE and that is used for sending a reference signal. For example, when the reference signal is a DMRS, the at least one sub frequency domain resource includes some or all of subcarriers in data bandwidth in which the DMRS is located.

1120: Send the first information to the first UE.

In this embodiment of the present invention, the base station configures, for the UE, indication information of a sequence parameter corresponding to each sub frequency domain resource used for sending a reference signal, so that the base station can implement full control on a reference signal sequence of the UE, so as to ensure scheduling flexibility.

In addition, in this embodiment of the present invention, system performance can be further optimized through configuration of the sequence parameter of the UE.

Optionally, the sequence parameter includes at least one of the following: a root sequence index, a cyclic shift value, or an orthogonal cover code of the reference signal sequence.

Optionally, the first information may be used by the first UE to directly determine the sequence parameter corresponding to the at least one sub frequency domain resource.

Alternatively, optionally, the first information may be used by the first UE to determine an indicator value of the sequence parameter corresponding to the at least one sub frequency domain resource, and determine, with reference to an offset value of the sequence parameter corresponding to the at least one sub frequency domain resource, the sequence parameter corresponding to the at least one sub frequency domain resource. The offset value of the sequence parameter corresponding to the at least one sub frequency domain resource is determined by the first UE based on a resource index value of the at least one sub frequency domain resource.

Optionally, the first information may also be transmitted by using a dynamic signaling DCI message and/or static signaling such as an RRC message or a SIB message.

In this embodiment of the present invention, for a specific implementation of the first information sent by the base station to the first UE, reference may be made to the first information received by the UE in the embodiment shown in FIG. 5, and details are not described herein in this embodiment of the present invention again.

FIG. 12 is a schematic diagram of a reference signal sequence corresponding to a sub frequency domain resource according to an embodiment of the present invention. As shown in FIG. 12(a), UE1 and UE2 occupy a same sub frequency domain resource, and a reference signal sequence index1 corresponding to the sub frequency domain resource of the UE1 is different from a reference signal sequence index2 corresponding to the sub frequency domain resource of the UE2. As shown in FIG. 12(b), a sub frequency domain resource occupied by UE2 is a first part of a sub frequency domain resource occupied by UE1, and a reference signal sequence index1 corresponding to the first part of the sub frequency domain resource occupied by the UE1 is different from a reference signal sequence index2 corresponding to the sub frequency domain resource occupied by the UE2. It should be understood that different reference signal sequences indicate different sequence parameters.

In this embodiment of the present invention, the base station configures different sequence parameters for different UEs on a same frequency domain resource, so as to configure different reference signal sequences for the different UEs on the same frequency domain resource. This ensures reference signal performance when UEs with different bandwidth multiplex a same time-frequency resource in a CDM manner, thereby implementing sharing of one time-frequency resource between a plurality of users, and improving spectral efficiency.

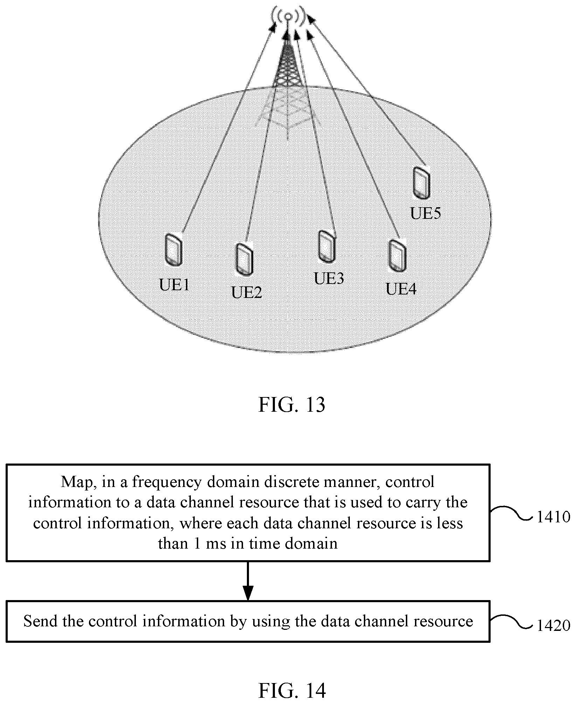

FIG. 13 is a schematic diagram of a scenario in which a base station configures a reference signal resource for a plurality of UEs according to an embodiment of the present invention. In the scenario shown in FIG. 13, the base station needs to configure the reference signal resource for the plurality of UEs. In addition to configuring different sequence parameters for different sub frequency domain resources of different UEs, the base station may further configure different sub frequency domain resources for different UEs.

Optionally, in an embodiment, the method may further include the following steps: generating second information, where the second information is used to indicate the at least one sub frequency domain resource; and sending the second information to the first UE.

Optionally, the second information may indicate at least one segment of contiguous subcarriers as a sub frequency domain resource used by the UE to send a reference signal.

For example, in the embodiment shown in Table 1, in the second information sent by the base station to the UE1, 001 is used to indicate that the base station configures two sub-bands for the UE1, that is, the RGBs with the indexes 1 and 2 are one sub-band, and the RBG3 is one sub-band. One sub-band herein is one sub frequency domain resource in this embodiment of the present invention.

Alternatively, optionally, the second information may indicate at least one segment of contiguous subcarriers, and the UE selects, according to a predefined subcarrier selection rule, a subcarrier set that meets the rule from the contiguous subcarriers, as a frequency domain resource used by the UE to send a reference signal. In this case, a subcarrier set that meets the subcarrier selection rule in each segment of contiguous subcarriers is used as a sub frequency domain resource.

The predefined subcarrier selection rule may be, for example, an index value of a type of subcarrier in contiguous subcarriers. Specifically, for example, subcarriers are occupied in a discrete manner, and the subcarrier may be an odd-numbered subcarrier or an even-numbered subcarrier, and may be indicated by using an index 0 or 1. For another example, in a discrete manner, one subcarrier is occupied in every M subcarriers. In this case, an index value of a sub-band may be indicated by using any integer value in a range of 0 to M-1. In addition, an index value of a subcarrier of the UE in a sub-band may be determined based on an identifier ID of the UE, for example, ID mod M.

Alternatively, optionally, the second information may indicate contiguous subcarrier resources and a subcarrier indication corresponding to the contiguous subcarrier resources. The subcarrier indication is used to indicate a subcarrier, used for sending a reference signal, in the contiguous subcarrier resources.

It should be understood that the second information may indicate at least one segment of contiguous subcarrier resources, and subcarrier indications corresponding to all segments of contiguous subcarrier resources may be the same or may be different.

In this embodiment of the present invention, the base station indicates the sub frequency domain resource of the UE by using the second information. This can implement flexible DMRS multiplexing of resources between different UEs, thereby improving scheduling flexibility of the base station.

Particularly, according to the method in this embodiment of the present invention, when the UE sends a DMRS by using a single sub-band, a bandwidth limitation on the UE with a single DMRS sub-band can be reduced.

Further, the second information may further include a multiplexing manner of the at least one sub frequency domain resource. A multiplexing manner of each sub frequency domain resource is used to indicate a frequency domain resource multiplexing relationship between the UE and another UE on the sub frequency domain resource.

Optionally, the multiplexing manner may include at least one of multiplexing manners such as frequency division multiplexing, code division multiplexing, and resource sharing. For example, in the embodiment shown in FIG. 10, multiplexing manners configured by the base station for the sub-band 1 and the sub-band 3 may include frequency division multiplexing and code division multiplexing, and a multiplexing manner configured by the base station for the sub-band 2 may include frequency division multiplexing.

It should be understood that, in addition to being used to indicate the frequency domain resource multiplexing relationship between the UE and the another UE on the sub frequency domain resource, the multiplexing manner may be further used to indicate the at least one sub frequency domain resource with reference to other frequency domain resource indication information in the second information or predefined frequency domain resource indication information of the UE.

It should be understood that the second information may be transmitted by using static signaling such as an RRC message or a SIB message, may be transmitted by using dynamic signaling such as a DCI message, or may be transmitted by using both a DCI message and an RRC message or a SIB message.

For a specific example of the second information sent by the base station, refer to related content of a UE side in the embodiment shown in FIG. 5. Details are not described herein in this embodiment of the present invention again.

It should be understood that, in this embodiment of the present invention, a plurality of UEs may multiplex one frequency domain resource, and the base station may configure different sequence parameters for the plurality of UEs on the same frequency domain resource.

Optionally, the method may further include: generating third information, where the third information indicates a sequence parameter corresponding to at least one sub frequency domain resource that is in a frequency domain resource of the second UE and that is used for sending a reference signal, a second sub frequency domain resource in the at least one sub frequency domain resource of the second UE is all or some of frequency domain resources in a first sub frequency domain resource in the at least one sub frequency domain resource of the first UE, and the second sub frequency domain resource and the first sub frequency domain resource are corresponding to different sequence parameters; and sending the third information.

For example, in the scenario shown in FIG. 12(b), first information configured by the base station for the UE1 indicates that a reference signal sequence corresponding to a first sub frequency domain resource is index 1, and third information configured by the base station for the UE2 indicates that a reference signal sequence corresponding to a second sub frequency domain resource is index2. The second sub frequency domain resource is some of subcarriers of the first sub frequency domain resource. However, the reference signal sequence index1 configured by the base station for the UE 1 is different from the reference signal sequence index2 configured by the base station for the UE2.

Certainly, it should be understood that the base station may alternatively configure a same sequence parameter for different UEs on a same frequency domain resource.

In the prior art, control information is mapped, in a frequency domain continuous manner, to a data channel that carries the control information and at which an entire slot or subframe is located. If a transmission delay is shortened, and a transmission time occupied in time domain is reduced, coherent bandwidth in frequency domain increases (for example, in a high frequency scenario in 5G), or frequency domain resources increase (for example, in a low frequency scenario). As a result, in prior-art control information transmission, a frequency domain diversity gain generated due to selective fading in frequency domain cannot be obtained.

Embodiments of the present invention propose a control information sending method and apparatus, so as to resolve a problem that a frequency domain diversity gain generated due to selective fading in frequency domain cannot be obtained in control information transmission.

FIG. 14 is a flowchart of a control information transmission method according to an embodiment of the present invention. The method in FIG. 14 is performed by a base station, and the method may include the following steps.

1410: Map, in a frequency domain discrete manner, control information to a data channel resource that is used to carry the control information, where each data channel resource is less than 1 ms in time domain.

It should be understood that the control information in this embodiment of the present invention may be uplink control information (Uplink Control Information, UCI). Optionally, the control information includes at least one of the following:

hybrid automatic repeat request (Hybrid Automatic Repeat Request, HARQ) response information, channel state information (Channel State Information, CSI), or a scheduling request (Scheduling Request, SR).

Further, the channel state information CSI includes at least one of the following:

a rank indicator (Rank Indicator, RI), a precoding matrix indicator (Precoding Matrix Indicator, PMI), a channel quality indicator (Channel Quality Indicator, CQI), a precoding type indicator (Precoding Type Indicator, PTI), or beam indication information (Beaming indicator/indication, BI).

1420: Send the control information by using the data channel resource.

In this embodiment of the present invention, at least one type of control information is mapped to the data channel resource in the frequency domain discrete manner, so as to avoid a problem that a frequency domain resource for transmitting the control information falls within a range of attenuated frequency domain resources because the control information is transmitted in a frequency domain continuous manner. In this way, an additional frequency domain diversity gain can be obtained during UCI transmission.

In an application scenario of transmission with a shortened delay, a quantity of symbols occupied in time domain decreases, and therefore resources allocated in frequency domain definitely increase. For example, when short-delay transmission for which two symbols are used occupies six PRBs in frequency domain, bandwidth of the transmission is 1.08 MHz. At a frequency below 6 GHz and the bandwidth of 1.08 MHz, there is a selective fading characteristic in a part of frequency domain. Therefore, a frequency diversity gain can be obtained when discrete transmission is performed in the bandwidth.

For another example, in a millimeter-wave high-frequency scenario, coherent bandwidth increases significantly, and channel bandwidth proposed in 5G is also increased to about 100 MHz. In such large channel bandwidth, coherent bandwidth becomes higher, continuous transmission of UCI leads to performance degradation, and a larger frequency selective diversity gain can also be obtained in frequency domain discrete transmission.

Optionally, in an embodiment, step 1410 may be specifically implemented as: dividing each of the at least one type of control information into a plurality of parts, and respectively mapping, in the frequency domain discrete manner, the plurality of parts of each type of control information to different parts in bandwidth occupied by the data channel resource.

Further, step 1410 may be specifically implemented as: dividing each of the at least one type of control information into two parts, and respectively mapping the two parts to two sides of the bandwidth occupied by the data channel resource.

For example, during short-delay transmission, expected minimum bandwidth of a two-symbol TTI is 1.08 MHz. In this case, a frequency selective gain can be obtained by placing the control information on two sides.

Further, when at least one type of control information is divided into different parts, and the different parts are respectively mapped to the two sides of the bandwidth occupied by a data channel, the control information is respectively mapped, from a low frequency to a high frequency and from a high frequency to a low frequency, on the two sides of the bandwidth occupied by the data channel resource. When a size of the control information is uncertain, according to a placement solution in this embodiment of the present invention, all of the control information can be completely placed on the two sides.

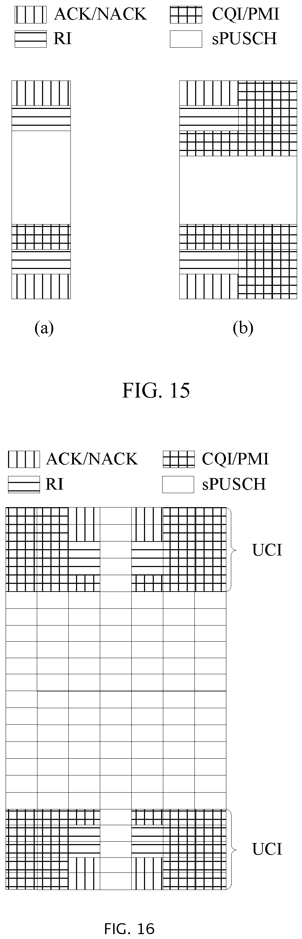

FIG. 15 is a control information mapping manner according to an embodiment of the present invention. FIG. 15(a) is corresponding to a short-delay transmission scenario in which one data symbol is used, and FIG. 15(b) is corresponding to a short-delay transmission scenario in which two data symbols are used. For example, in FIG. 15(a), a base station may map an acknowledgement (Acknowledgement, ACK)/a negative acknowledgement (Negative Acknowledgement, NACK) from two sides to the middle of bandwidth in which data is transmitted, then sequentially map an RI in a same manner, then map a CQI/PMI to a part other than the ACK/NACIK and the RI, and finally map uplink data sPUSCH to a non-UCI area. For another example, in FIG. 15(b), an ACK/a NACK is mapped from two sides to the middle of bandwidth in which data is transmitted, and is preferentially mapped to a symbol that is closer to a DMRS, namely, a symbol on the left. Then, an RI is sequentially mapped to the same symbol in a same manner. Then, a CQI/PMI is mapped to a part other than the ACK/NACIK and the RI. Finally, uplink data sPUSCH is mapped to a non-UCI area. Certainly, it should be understood that the foregoing mapping order is merely for ease of description; in an actual mapping process, mapping is performed in no particular order.

FIG. 16 is a control information mapping manner according to an embodiment of the present invention. FIG. 16 is corresponding to a transmission scenario in which one slot is used. As shown in FIG. 16, UCI is mapped from two sides to the middle of bandwidth in which data is transmitted, an ACK/a NACIK and an RI are mapped to a symbol 2 and a symbol 4 of the slot (symbols are numbered from 0), and a CQI/PMI is mapped to symbols 0, 1, 2, 4, 5, and 6. In FIG. 16, the ACK/NACK is mapped from the two sides to the middle of the bandwidth in which the data is transmitted, and is preferentially mapped to a symbol that is closer to a DMRS, namely, a symbol on the left. Then, the RI is sequentially mapped to the same symbol in a same manner. Then, the CQI/PMI is mapped to a part other than the ACK/NACIK and the RI. Finally, uplink data sPUSCH is mapped to a non-UCI area.

In this embodiment of the present invention, priorities of the ACK/NACK and the RI are higher; therefore, when the ACK/NACK and the RI are mapped to two sides of a DMRS symbol and the two sides of the bandwidth, not only a frequency selective gain can be obtained, but also better channel estimation performance of the control information can be achieved. This can ensure that the ACK/NACK and the RI obtain optimal demodulation performance, thereby improving feedback accuracy of important control information and improving communication quality.

Alternatively, optionally, in another embodiment, step 1410 may be specifically implemented as: respectively mapping a plurality of types of control information to different parts of the bandwidth occupied by the data channel resource.

Further, step 1410 may be specifically implemented as: mapping, from a high frequency subcarrier to a low frequency subcarrier, first control information in each of at least one part in the bandwidth occupied by the data channel resource, where the first control information is one of the plurality of types of control information.

Alternatively, further, step 1410 may be specifically implemented as: mapping, from a low frequency subcarrier to a high frequency subcarrier, the first control information in each of at least one part in the bandwidth occupied by the data channel resource, where the first control information is one of the plurality of types of control information.

Alternatively, further, step 1410 may be specifically implemented as: mapping, from a low frequency subcarrier to a high frequency subcarrier, the first control information in a first part of at least one part in the bandwidth occupied by the channel resource, and mapping, from a high frequency subcarrier to a low frequency subcarrier, the first control information in a second part of the at least one part in the bandwidth occupied by the channel resource, where the first control information is one of the plurality of types of control information.

Using a HARQ response message and the RI as an example, when the at least one type of control information includes the HARQ response message and the RI, and the data channel resource is divided into four sub-bands: a sub-band 1, a sub-band 2, a sub-band 3, and a sub-band 4, step 1410 may be specifically implemented as:

mapping the HARQ response message to the sub-band 1 and the sub-band 3, and mapping the RI to the sub-band 2 and the sub-band 4; or
mapping the HARQ response message to the sub-band 2 and the sub-band 4, and mapping the RI to the sub-band 1 and the sub-band 3; or
mapping the HARQ response message to the sub-band 1 and the sub-band 4, and mapping the RI to the sub-band 2 and the sub-band 3; or
mapping the HARQ response message to the sub-band 2 and the sub-band 3, and mapping the RI to the sub-band 1 and the sub-band 4.

It should be understood that, in this embodiment of the present invention, a sub-band may be configured by signaling, or may be a part of bandwidth into which a predefined UCI transmission channel is divided. Sub-band division may be even or may be uneven. This is not limited in the present invention.

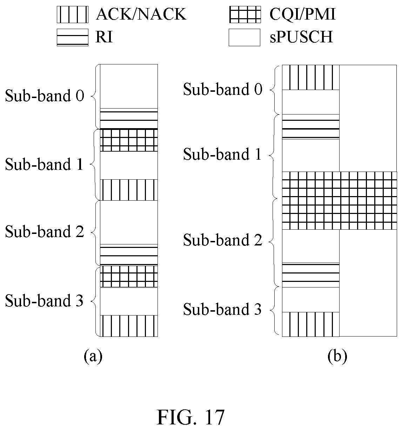

FIG. 17 is still another control information mapping manner according to an embodiment of the present invention. FIG. 17(a) is corresponding to a short-delay transmission scenario in which one data symbol is used, and FIG. 17(b) is corresponding to a short-delay transmission scenario in which two data symbols are used.

In FIG. 17(a), UE transmits control information in data bandwidth that is divided into four sub-bands. As shown in FIG. 17(a), the UE may map a HARQ response message (an ACK/a NACK) from a low frequency subcarrier to a high frequency subcarrier of a sub-band 0 and a sub-band 2, and map an RI from a low frequency subcarrier to a high frequency subcarrier of a sub-band 1 and a sub-band 3.

In FIG. 17(b), bandwidth in which UE transmits data is divided into four sub-bands. The UE may further map an ACK/a NACK from a low frequency subcarrier to a high frequency subcarrier of a sub-band 0 and from a high frequency subcarrier to a low frequency subcarrier of a sub-band 3, and map an RI from a low frequency subcarrier to a high frequency subcarrier of a sub-band 1 and from a high frequency subcarrier to a low frequency subcarrier of a sub-band 2.

In addition, in the embodiment shown in FIG. 17, a CQI and a PMI may be mapped to an area other than the ACK/NACK, and data is mapped to an area other than UCI.

In this embodiment of the present invention, different control information is transmitted separately in different sub-bands, so that the different control information does not interfere with each other, and is more easily received by a receiver of a base station. In addition, when different control information is transmitted in different sub-bands, a frequency selective gain of control information transmission can be maximized.

Alternatively, further, step 1410 may be specifically implemented as: mapping, from a high frequency subcarrier to a low frequency subcarrier, the first control information in each of a plurality of first-part resources, where the plurality of first-part resources are resources that are in the bandwidth occupied by the data channel resource and that are used for mapping the first control information; and mapping, from a low frequency subcarrier to a high frequency subcarrier, the second control information in each of a plurality of second-part resources, where the plurality of second-part resources are resources that are in the bandwidth occupied by the data channel resource and that are used for mapping the second control information.

In this embodiment of the present invention, K types of control information in the control information are respectively mapped to different parts in the bandwidth, to avoid a problem that all the control information is on a same deeply faded subcarrier. In this way, at least a part of all the control information can be correctly transmitted.

Optionally, in an embodiment, step 1410 may be specifically implemented as: when the control information includes a plurality of types of control information, respectively mapping the plurality of types of control information to at least two time domain data symbols of the data channel resource, and mapping, in the frequency domain discrete manner, the plurality of types of control information to the bandwidth occupied by the data channel resource.

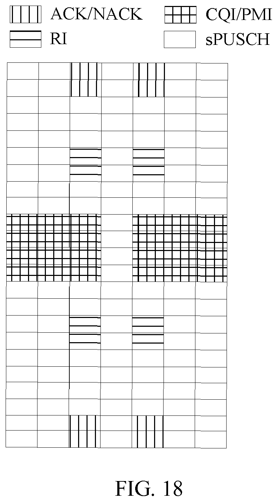

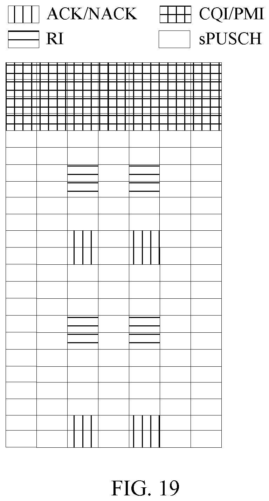

FIG. 18 is still another control information mapping manner according to an embodiment of the present invention. FIG. 19 is still another control information mapping manner according to an embodiment of the present invention.

As shown in FIG. 18 and FIG. 19, based on the embodiments shown in FIG. 15 to FIG. 17, the UE may further map control information to a plurality of symbols. Specifically, in the embodiments shown in FIG. 18 and FIG. 19, the UE may map an RI and an ACK/a NACK to a symbol 2 and a symbol 4 of one slot.

In this embodiment of the present invention, the foregoing method may be used for TTIs of different lengths. This expands an applicability scope of the method of the present invention.

Further, step 1410 may be specifically implemented as: mapping, in the frequency domain discrete manner, the first control information to a time-frequency resource on a first symbol of the data channel resource, and mapping, in the frequency domain discrete manner, the second control information to a time-frequency resource on a second symbol of the data channel resource. For example, the first control information is mapped to a time-frequency resource, of the data channel resource, on a first symbol in time domain and in a first sub-band and a second sub-band in frequency domain; the first control information is mapped to a time-frequency resource, of the data channel resource, on a second symbol in time domain and in the first sub-band and the second sub-band in frequency domain.

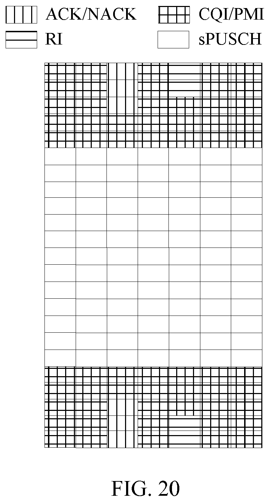

FIG. 20 is still another control information mapping manner according to an embodiment of the present invention. As shown in FIG. 20, in time domain, UE may map an ACK/a NACK to a symbol 2, and map an RI to a symbol 4. For mapping in frequency domain, refer to the embodiments shown in FIG. 15 to FIG. 17.

Alternatively, further, step 1410 may be specifically implemented as: mapping the first control information to a time-frequency resource in a first sub-band and on a first symbol of the data channel resource, and a time-frequency resource in a second sub-band and on a second symbol of the data channel resource; and mapping the second control information to a time-frequency resource in the first sub-band and on the second symbol of the data channel resource, and a time-frequency resource in the second sub-band and on the first symbol of the data channel resource.

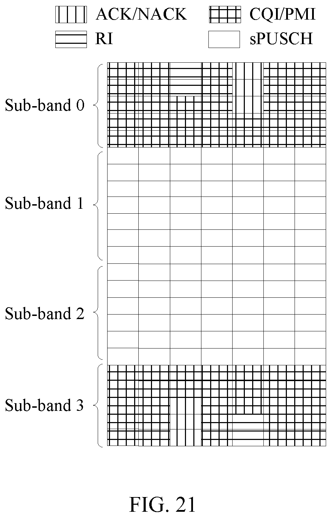

FIG. 21 is still another control information mapping manner according to an embodiment of the present invention. As shown in FIG. 21, UE may map an ACK/a NACK and an RI to a symbol 2 and a symbol 4, and a sub-band 0 and a sub-band 3 in a cross mapping manner. The ACK/NACK and the RI may be mapped, in the sub-band 0 and the sub-band 3, from a high frequency subcarrier to a low frequency subcarrier and/or from a high frequency subcarrier to a low frequency subcarrier. This is not limited in this embodiment of the present invention.

In this embodiment of the present invention, time diversity and interference dispersion effects can be achieved in time, thereby avoiding strong interference caused when different control information is placed on a same symbol.

It should be understood that a quantity of symbols occupied by the control information in one subframe of the channel resource may be any one of 2, 3, 4, 6, or 7.

Optionally, when the control information includes the HARQ response message and the RI, step 1410 may be specifically implemented as: respectively mapping the HARQ response message and the RI in the control information to two adjacent time domain data symbols on two sides of the data channel resource, and mapping, in the frequency domain discrete manner, the HARQ response message and the RI to the bandwidth occupied by the data channel resource.

Alternatively, optionally, when the control information includes the HARQ response message and the RI, step 1410 may be specifically implemented as: mapping the HARQ response message and the RI in the control information to one time domain data symbol on one side of the data channel resource, and mapping, in the frequency domain discrete manner, the HARQ response message and the RI to the bandwidth occupied by the data channel resource.

Further, the method may further include: performing a rate matching or puncturing operation on the data channel resource when sending the control information.

In this embodiment of the present invention, according to the method, when the control information is transmitted over the channel, impact on data transmission over the channel can be reduced as far as possible. This ensures that transmission performance of the original channel almost does not decrease.

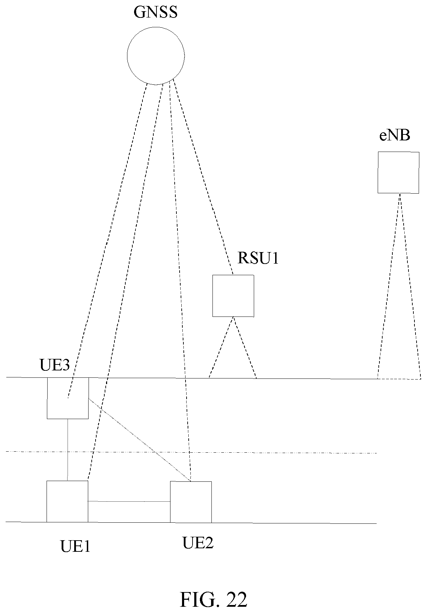

FIG. 22 is a schematic diagram of a device-to-device scenario according to another embodiment of the present invention. In the embodiment shown in FIG. 22, a global navigation satellite system (Global Navigation Satellite System, GNSS), an eNB (eNB), a roadside unit (Roadside Unit, RSU), and user equipment (UE) may be included. It should be understood that a communications network shown in FIG. 22 may be, for example, the Internet of Vehicles. In FIG. 22, UEs may communicate with each other. The UE may be an in-vehicle device or the like. The RSU may communicate with each UE and/or the eNB. The eNB may communicate with each UE and/or the RSU. The GNSS may be used to provide positioning and authorization information for another network element shown in FIG. 22. All of the foregoing network element devices may communicate with each other. During communication, a cellular-link frequency spectrum may be used, or an intelligent-transportation frequency spectrum near 5.9 GHz may be used. A technology of mutual communication between the network element devices may be enhanced based on an LTE protocol, or may be enhanced based on a D2D technology.

It should be understood that the eNB is optional in the scenario shown in FIG. 22. The application scenario in this embodiment of the present invention may be classified into three types depending on a status of the UE being covered by the eNB: If there is the eNB, the scenario is a scenario with network coverage; if there is no eNB, the scenario is a scenario without network coverage; if some of the UEs are located in a network and other UEs are located outside network coverage, the scenario is a scenario with partial coverage.

In the application scenario shown in FIG. 22, in the prior art, usually, synchronization and communication are performed by using a base station as a synchronization source over a D2D link. However, when a vehicle speed is relatively high or base stations are not synchronized, UE on a vehicle possibly cannot obtain a synchronization source, and as a result, communication fails. In addition, in a scenario without base station coverage, prior-art synchronization performance is relatively poor, and communication quality cannot be ensured.

To resolve a problem of the application scenario shown in FIG. 22, the embodiments of the present invention provide a method for performing D2D communication by using a synchronization source.

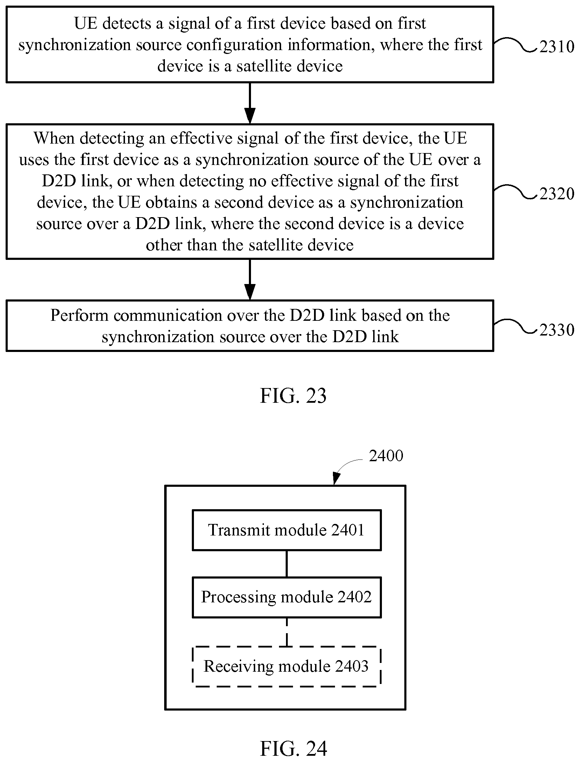

FIG. 23 is a flowchart of a method for performing D2D communication by using a synchronization source according to an embodiment of the present invention. The method in FIG. 23 is performed by UE. It should be understood that, in this embodiment of the present invention, the UE may be an in-vehicle device or a mobile terminal, for example, a mobile phone or a tablet computer (PAD). As shown in FIG. 23, the method may include the following steps.

2310: The UE detects a signal of a first device based on first synchronization source configuration information, where the first device is a satellite device.

It should be understood that the satellite device in the present invention may include a global navigation satellite system (GNSS) or a device that can provide a function similar to that of a GNSS. The GNSS includes navigation satellite systems provided by all countries and regions, for example, the BeiDou Navigation Satellite System of China, the GPS of America, the Galileo satellite navigation system of Europe, and the GLONASS of Russia. The satellite device may alternatively be a device that can provide precision similar to that of a GNSS, for example, a positioning and time serving device based on an atomic clock.

Optionally, the first synchronization source configuration information is sent by the base station to the UE.

In this embodiment of the present invention, the UE may flexibly adjust a synchronization source of the UE based on the first synchronization source configuration information sent by the base station.

Alternatively, the first synchronization source configuration information is predefined or preconfigured.

The first synchronization source configuration information is predefined, for example, the first synchronization source configuration information may be stipulated in a protocol.

The first synchronization source configuration information is preconfigured, for example, may be preconfigured upon delivery of the UE, or may be preconfigured by a user of the UE.

In this embodiment of the present invention, the UE determines the synchronization source based on the preconfigured first synchronization source configuration information. In this way, the UE can obtain synchronization source information in a scenario without base station coverage.

Specifically, the first synchronization source configuration information may include synchronization source type priority information. For example, the first synchronization source configuration information may indicate that priorities of three types of synchronization sources, namely, a satellite device, a UE synchronization source within network coverage, and a UE synchronization source outside network coverage, are as follows:

the satellite device > the UE synchronization source within network coverage > the UE synchronization source outside network coverage; or
the UE synchronization source within network coverage > the satellite device > the UE synchronization source outside network coverage.

The synchronization source type priority information is configured for the UE. In this way, when simultaneously detecting a plurality of synchronization sources with different priorities, the UE may be preferentially synchronized to a synchronization source with a higher synchronization source type priority.

Certainly, it should be understood that the first synchronization source configuration information may include synchronization source priority information. For example, it is stipulated that a priority of a satellite device A is the highest, a priority of a satellite device B is ranked second, a priority of a base station C is ranked third, and a priority of an RSU D is ranked fourth.

2320: When detecting an effective signal of the first device, the UE uses the first device as a synchronization source of the UE over a D2D link, or when detecting no effective signal of the first device, the UE obtains a second device as a synchronization source over the D2D link, where the second device is a device other than the satellite device.

2330: Perform communication over the D2D link based on the synchronization source over the D2D link.

In this embodiment of the present invention, the UE selects the satellite device as the synchronization source when there is an effective satellite signal, and selects the device other than the satellite device as the synchronization source when detecting no effective satellite signal. In this way, regardless of whether there is a satellite signal or there is no satellite signal, the UE can perform synchronization based on the synchronization source, thereby avoiding a problem that synchronization fails because the user equipment loses the synchronization source for a long time. This improves synchronization efficiency of the user equipment.

It should be understood that, in step 2320, that the UE detects no effective satellite signal may include a plurality of cases.

Optionally, in an embodiment, that the UE detects no effective satellite signal includes: Channel quality of a satellite signal detected by the UE is lower than a first threshold. It should be understood that, when channel quality is relatively poor, communication quality cannot be ensured. A satellite signal detected in this case cannot be used as an effective satellite signal. Therefore, a first threshold may be pre-determined. When channel quality of a detected satellite signal is lower than the first threshold, the satellite signal may be considered as an ineffective signal. Specifically, the first threshold may be set to lowest channel quality required for communication between the UE and the satellite device, or a value greater than the lowest channel quality. Further, that channel quality of a satellite signal detected by the UE is lower than a first threshold includes: Channel quality of a satellite signal detected by the UE within a preset time is lower than the first threshold.

Alternatively, optionally, in another embodiment, that the UE detects no effective satellite signal includes: The UE detects no satellite signal. Further, that the UE detects no effective satellite signal includes: The UE detects no satellite signal within a preset time. If the UE detects no satellite signal within the preset time, it may be considered that the UE detects no satellite signal, and apparently, obtains no effective satellite signal.

It should be understood that, because of a change in a surrounding environment, it is possible that the UE detects no effective satellite signal within a short time due to blocking of an obstacle, and can detect an effective satellite signal soon after. To avoid a problem that such a scenario is mistakenly detected as losing the satellite device synchronization source, preset duration may be set. Only when duration in which the UE detects no effective satellite signal is greater than the preset duration, it is considered that the UE loses the satellite device synchronization source, and therefore needs to obtain the second device other than the satellite device, as the synchronization source.

Specifically, that the UE detects an effective signal of the first device includes: The UE detects a satellite signal within the preset duration, or channel quality of a satellite signal detected by the UE is higher than or equal to a second threshold. The second threshold may be the same as the first threshold, or may be different from the first threshold.

Optionally, in an embodiment, the method may further include: sending indication information to the base station of the UE, where the indication information indicates that the UE detects no effective satellite signal. When detecting an effective satellite signal, the UE may send indication information to the base station to inform the base station, so that the base station configures the synchronization source for the UE. Certainly, it should be understood that the base station may configure the synchronization source for the UE based on the indication information, or may configure no synchronization source for the UE.

Further, in this embodiment, the obtaining a second device as a synchronization source over the D2D link may include: receiving second synchronization source configuration information sent by the base station, where the second synchronization source configuration information indicates that the second device is used as the synchronization source of the UE; and determining, based on the second synchronization source configuration information, that the second device is the synchronization source over the D2D link.

It should be understood that, in this embodiment of the present invention, after the UE sends, to the base station, the indication information indicating that no effective satellite signal is detected, the base station may resend the second synchronization source configuration information to the UE. Particularly, a second synchronization source configured in the second synchronization source configuration information may be the base station.

Optionally, in another embodiment, the obtaining a second device as a synchronization source over the D2D link includes: obtaining a device with a highest synchronization source priority in the second device, as the second synchronization source. Optionally, the second synchronization source is the base station of the UE, or another UE.

For example, in addition to the satellite device used as a first synchronization source, the first synchronization source configuration information may further include another synchronization source. As described in step 2310, the first synchronization source configuration information may be sent by the base station to the UE, or may be preconfigured by the UE. Specifically, the second synchronization source may be the base station of the UE, may be another UE adjacent to the UE, or the like.

For another example, the UE may preconfigure a satellite device as a synchronization source with a highest priority, and preconfigure the base station of the UE as a synchronization source with a second-highest priority. In this case, when the UE detects no effective satellite signal, the base station is used as the second synchronization source of the UE for synchronization.

In this embodiment of the present invention, when no effective satellite signal is detected, a synchronization source that is preconfigured or that is determined according to a predefined priority rule is selected as the second synchronization source. In this way, the user equipment can perform synchronization based on the preconfigured synchronization source, thereby improving synchronization efficiency of the user equipment.

Optionally, in an embodiment, the method may further include: when duration in which the UE detects no effective satellite signal is less than preset duration, and the UE detects a signal of the second device, using the second device as the synchronization source over the D2D link.

When the duration in which the UE detects no effective satellite signal is less than the preset duration, and the UE detects the signal of the second device, the UE may use the synchronization source as the synchronization source of the UE and perform synchronization. In this way, the synchronization source can be obtained in a relatively short time and in accordance with a principle of selecting a synchronization source with a high priority.

Further, the second device is a synchronization source with a priority that is not lower than that of the satellite device. Particularly, when the UE detects a plurality of synchronization source signals, the UE may further select, based on a synchronization source priority or a synchronization source type priority, a synchronization source with a highest priority as the synchronization source over the D2D link.

Optionally, the method further includes: switching from a communications resource of the UE over the D2D link to a resource or resource pool associated with the synchronization source.

For example, if the UE is synchronized to the RSU shown in FIG. 22, the UE performs communication by using a resource or resource pool associated with the RSU. Correspondingly, if the UE is synchronized to the base station shown in FIG. 22, the UE performs communication by using a resource or resource pool associated with the base station.

In this embodiment of the present invention, after the UE is synchronized to the synchronization source, the UE switches from the communications resource of the UE over the D2D link to the resource or resource pool associated with the synchronization source. This can reduce interference caused by a timing offset problem that occurs when UEs whose synchronization sources are different perform communication on a same communications resource, and therefore can ensure that the UEs whose synchronization sources are different can perform effective communication with each other.

Optionally, the method may further include: transmitting, by the UE, a synchronization signal over the D2D link when quality of a signal detected by the UE over the D2D link is lower than a third threshold.

It should be understood that the signal quality herein may be any one or more of RSRP, RSRQ, an SINR, or an RSSI, and the threshold may be predefined or preconfigured or may be configured by signaling.

In this embodiment of the present invention, a sent synchronization signal over the D2D link may be used for implementing synchronization between different UEs across cells in a network. Alternatively, outside a network, synchronization to a high-priority synchronization source may be triggered, to send a synchronization signal over the D2D link, so that another UE obtains a synchronization reference in a timely manner. Due to a limitation of the second threshold, unnecessary transmission can be reduced. This ensures synchronization performance over the D2D link.

The present invention further proposes user equipment, configured to perform the method in the embodiment shown in FIG. 5, and implement functions of the UE in the embodiment shown in FIG. 5 and an extended embodiment.

Specifically, the user equipment may implement a corresponding method by using functional modules. The user equipment may include units configured to perform the method in the embodiment shown in FIG. 5.

The present invention further proposes a base station, configured to perform the method in the embodiment shown in FIG. 11, and implement functions of the base station in the embodiment shown in FIG. 11 and an extended embodiment.

Specifically, the base station may implement a corresponding method by using functional modules. The base station may include units configured to perform the method in the embodiment shown in FIG. 11.

The present invention further proposes a base station, configured to perform the method in the embodiment shown in FIG. 14, and implement functions of the base station in the embodiment shown in FIG. 14 and an extended embodiment.

Specifically, the base station may implement a corresponding method by using functional modules. The base station may include units configured to perform the method in the embodiment shown in FIG. 14.

The present invention further proposes user equipment, configured to perform the method in the embodiment shown in FIG. 23, and implement functions of the UE in the embodiment shown in FIG. 23 and an extended embodiment.

Specifically, the user equipment may implement a corresponding method by using functional modules. The user equipment may include units configured to perform the method in the embodiment shown in FIG. 23.

The present invention further proposes a computer readable storage medium, configured to store a computer program. The computer program includes an instruction used to perform the method in the embodiment shown in FIG. 5.

The present invention further proposes another computer readable storage medium, configured to store a computer program. The computer program includes an instruction used to perform the method in the embodiment shown in FIG. 11.

The present invention further proposes still another computer readable storage medium, configured to store a computer program. The computer program includes an instruction used to perform the method in the embodiment shown in FIG. 14.

The present invention further proposes still another computer readable storage medium, configured to store a computer program. The computer program includes an instruction used to perform the method in the embodiment shown in FIG. 23.

FIG. 24 is a schematic structural diagram of user equipment 2400 according to an embodiment of the present invention. As shown in FIG. 24, the user equipment 2400 may include a processing module 2402 and a transmit module 2401.

The processing module 2402 is configured to determine a sequence parameter corresponding to at least one sub frequency domain resource of the user equipment 2400, and generate a reference signal sequence based on the sequence parameter, where one sub frequency domain resource is corresponding to one sequence parameter.

The transmit module 2401 is configured to map the reference signal sequence to a physical resource corresponding to the at least one sub frequency domain resource.

In this embodiment of the present invention, the user equipment 2400 determines the sequence parameter corresponding to the at least one sub frequency domain resource, generates the reference signal sequence based on the sequence parameter, and maps the reference signal sequence to the physical resource corresponding to the at least one sub frequency domain resource. In this way, a base station can flexibly allocate a reference signal generation parameter based on a multiplexing status of each scheduled UE, thereby improving a multi-user multiplexing capability and improving scheduling flexibility.

It should be understood that, in specific application, the processing module 2402 may be a processor, and the transmit module 2401 may be a transmitter.

Optionally, the user equipment may further include a receiving module 2403. The receiving module may be a receiver. The transmitter and the receiver may be coupled to an antenna.

Optionally, the reference signal is a demodulation reference signal DMRS, and the at least one sub frequency domain resource includes some or all of subcarriers in data bandwidth in which the DMRS is located.

Optionally, the sequence parameter includes at least one of the following: a root sequence index, a cyclic shift value, or an orthogonal cover code of the reference signal sequence.

Optionally, in an embodiment, a sequence parameter corresponding to a first sub frequency domain resource in the at least one sub frequency domain resource is determined by a first resource index value of the first sub frequency domain resource.

Further, at least one of sequence group hopping and/or sequence hopping of the root sequence index in the sequence parameter is determined by the first resource index value.

Optionally, in an embodiment, the processing module 2402 is further configured to obtain first information, where the first information is used to indicate the sequence parameter corresponding to the at least one sub frequency domain resource; and the processing module 2402 is configured to determine, based on the first information, the sequence parameter corresponding to the at least one sub frequency domain resource.

Alternatively, optionally, in another embodiment, the processing module 2402 is further configured to obtain first information, where the first information is used to indicate at least one sequence parameter corresponding to the at least one sub frequency domain resource; and the processing module 2402 is configured to determine, based on the first information and a resource index value corresponding to the at least one sub frequency domain resource, the at least one sequence parameter corresponding to the at least one sub frequency domain resource.

It should be understood that the processing module 2402 may directly obtain the first information from information predefined or preset by the user equipment 2400, or may receive, by using the receiving module 2403, the first information sent by the base station.

It should be understood that the sequence parameter indicated by the first information is an absolute value or a relative value.

Optionally, the processing module 2402 is further configured to determine the at least one sub frequency domain resource.

Optionally, in an embodiment, the at least one sub frequency domain resource is indicated by signaling, or is predefined or preconfigured.

Alternatively, optionally, in another embodiment, the processing module 2402 is further configured to obtain second information, where the second information is used to indicate the at least one sub frequency domain resource; and the processing module 2402 is configured to determine, based on the second information, the at least one sub frequency domain resource.

Further, the second information includes a multiplexing manner of the at least one sub frequency domain resource. Optionally, the multiplexing manner may include at least one of multiplexing manners such as frequency division multiplexing, code division multiplexing, and resource sharing. Optionally, when the at least one sub frequency domain resource is two or more sub frequency domain resources, multiplexing manners of all the sub frequency domain resources are the same, or multiplexing manners of at least two of the sub frequency domain resources are different.

It should be understood that the processing module 2402 may directly obtain the second information from information predefined or preset by the user equipment 2400, or may receive, by using the receiving module 2403, the second information sent by the base station.

The user equipment 2400 may further perform the method in FIG. 5, and implement functions of the user equipment in the embodiment shown in FIG. 5. Details are not described herein in this embodiment of the present invention again.

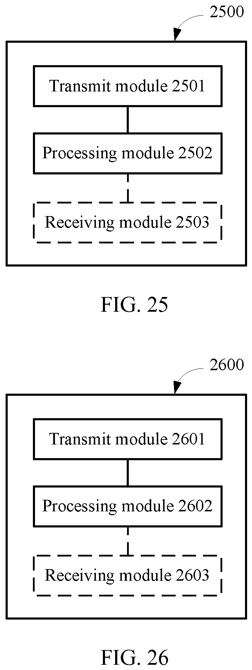

FIG. 25 is a schematic structural diagram of a base station 2500 according to an embodiment of the present invention. As shown in FIG. 25, the base station 2500 may include a processing module 2502 and a transmit module 2501.

The processing module 2502 is configured to generate first information, where the first information is used to indicate a sequence parameter corresponding to at least one sub frequency domain resource, the at least one sub frequency domain resource is a frequency domain resource used by the first UE to map a reference signal sequence, and each sub frequency domain resource of the first UE is corresponding to one sequence parameter.

The transmit module 2501 is configured to send the first information to the first UE.

In this embodiment of the present invention, the base station 2500 configures, for the UE, indication information of a sequence parameter corresponding to each sub frequency domain resource used for sending a reference signal, so that the base station can implement full control on a reference signal sequence of the UE, so as to ensure scheduling flexibility.

It should be understood that, in specific application, the processing module 2502 may be a processor, and the transmit module 2501 may be a transmitter.

Optionally, the user equipment may further include a receiving module 2503. The receiving module may be a receiver. The transmitter and the receiver may be coupled to an antenna.

Optionally, the reference signal is a demodulation reference signal DMRS, and the at least one sub frequency domain resource includes some or all of subcarriers in data bandwidth in which the DMRS of the first UE is located.

Optionally, the sequence parameter includes at least one of the following: a root sequence index, a cyclic shift value, or an orthogonal cover code of the reference signal sequence.

Optionally, the processing module 2502 is further configured to generate second information, where the second information is used to indicate the at least one sub frequency domain resource; and the transmit module 2501 is further configured to send the second information to the first UE.

Further, the second information includes a multiplexing manner of the at least one sub frequency domain resource. Further, when the at least one sub frequency domain resource is two or more sub frequency domain resources, reference signal sequence multiplexing manners of all the sub frequency domain resources are the same, or reference signal sequence multiplexing manners of at least two of the sub frequency domain resources are different.

The processing module 2502 is further configured to generate third information, where the third information is used to indicate a sequence parameter corresponding to at least one sub frequency domain resource, the at least one sub frequency domain resource in the third information is a frequency domain resource used by the second UE to map a reference signal sequence, each sub frequency domain resource of the second UE is corresponding to one sequence parameter, a second sub frequency domain resource in the at least one sub frequency domain resource of the second UE is all or some of frequency domain resources in a first sub frequency domain resource in the at least one sub frequency domain resource of the first UE, and the second sub frequency domain resource and the first sub frequency domain resource are corresponding to different sequence parameters; and the transmit module 2501 is further configured to send the third information to the second UE.

The base station 2500 may further perform the method in FIG. 11, and implement functions of the base station in the embodiment shown in FIG. 11. Details are not described herein in this embodiment of the present invention again.

FIG. 26 is a schematic structural diagram of user equipment 2600 according to an embodiment of the present invention. As shown in FIG. 26, the user equipment 2600 may include a processing module 2602 and a transmit module 2601.

The processing module 2602 is configured to map, in a frequency domain discrete manner, control information to a data channel resource that is used to carry the control information, where each data channel resource is less than 1 ms in time domain.

The transmit module 2601 is configured to send the control information by using the data channel resource.

In this embodiment of the present invention, the user equipment 2600 maps at least one type of control information to the data channel resource in the frequency domain discrete manner, so as to avoid a problem that a frequency domain resource for transmitting the control information falls within a range of attenuated frequency domain resources because the control information is transmitted in a frequency domain continuous manner. In this way, an additional frequency domain diversity gain can be obtained during UCI transmission.

It should be understood that, in specific application, the processing module 2602 may be a processor, and the transmit module 2601 may be a transmitter.

Optionally, the user equipment may further include a receiving module 2603. The receiving module may be a receiver. The transmitter and the receiver may be coupled to an antenna.

Optionally, the control information includes at least one of the following: hybrid automatic repeat request HARQ response information, channel state information CSI, or a scheduling request SR. Further, the CSI includes at least one of the following: a rank indicator RI, a precoding matrix indicator PMI, a channel quality indicator CQI, a precoding type indicator PTI, or beam indication information BI.

Optionally, in an embodiment, the processing module 2602 is specifically configured to: divide each of at least one type of control information into a plurality of parts, and respectively map, in the frequency domain discrete manner, the plurality of parts of each type of control information to different parts in bandwidth occupied by the data channel resource; or respectively map a plurality of types of control information to different parts in bandwidth occupied by the data channel resource.

Further, the processing module 2602 is specifically configured to: divide each of the at least one type of control information into two parts, and respectively map the two parts to two sides of the bandwidth occupied by the data channel resource.

Alternatively, further, the processing module 2602 is further configured to:

map, from a high frequency subcarrier to a low frequency subcarrier, first control information in each of at least one part in the bandwidth occupied by the data channel resource; or
map, from a low frequency subcarrier to a high frequency subcarrier, the first control information in each of at least one part in the bandwidth occupied by the data channel resource; or
map, from a low frequency subcarrier to a high frequency subcarrier, the first control information in a first part of at least one part in the bandwidth occupied by the data channel resource, and map, from a high frequency subcarrier to a low frequency subcarrier, the first control information in a second part of the at least one part in the bandwidth occupied by the data channel resource, where
the first control information is one of the plurality of types of control information.

Further, when the control information includes a HARQ response message and the RI, and the data channel resource is divided into four sub-bands: a sub-band 1, a sub-band 2, a sub-band 3, and a sub-band 4, the processing module 2602 is specifically configured to:

map the HARQ response message to the sub-band 1 and the sub-band 3, and map the RI to the sub-band 2 and the sub-band 4; or
map the HARQ response message to the sub-band 2 and the sub-band 4, and map the RI to the sub-band 1 and the sub-band 3; or
map the HARQ response message to the sub-band 1 and the sub-band 4, and map the RI to the sub-band 2 and the sub-band 3; or
map the HARQ response message to the sub-band 2 and the sub-band 3, and map the RI to the sub-band 1 and the sub-band 4.

Optionally, the processing module 2602 is specifically configured to: when the control information includes a plurality of types of control information, respectively map the plurality of types of control information to at least two time domain data symbols of the data channel resource, and map, in the frequency domain discrete manner, the plurality of types of control information to the bandwidth occupied by the data channel resource.

Further, the processing module 2602 is specifically configured to:

map the first control information to a time-frequency resource on a first symbol of the data channel resource, and map second control information to a time-frequency resource on a second symbol of the data channel resource; or
map the first control information to a time-frequency resource in a first sub-band and on a first symbol of the data channel resource, and a time-frequency resource in a second sub-band and on a second symbol of the channel resource; and map second control information to a time-frequency resource in the first sub-band and on the second symbol of the data channel resource, and a time-frequency resource in the second sub-band and on the first symbol of the channel resource.

Optionally, a quantity of symbols occupied by the control information in one subframe of the data channel resource is any one of 2, 3, 4, 6, or 7.

Further, when the control information includes the HARQ response message and the RI, the processing module 2602 is specifically configured to: respectively map the HARQ response message and the RI in the control information to two adjacent time domain data symbols on two sides of the data channel resource, and map, in the frequency domain discrete manner, the HARQ response message and the RI to the bandwidth occupied by the data channel resource.

Optionally, in an embodiment, when the control information includes the HARQ response message and the RI, the processing module 2602 is specifically configured to: map the HARQ response message and the RI in the control information to one time domain data symbol on one side of the data channel resource, and map, in the frequency domain discrete manner, the HARQ response message and the RI to the bandwidth occupied by the data channel resource.

Optionally, the transmit module 2601 is further configured to perform a rate matching or puncturing operation on the data channel resource when sending the control information.

The user equipment 2600 may further perform the method in FIG. 14, and implement functions of the user equipment in the embodiment shown in FIG. 14. Details are not described herein in this embodiment of the present invention again.

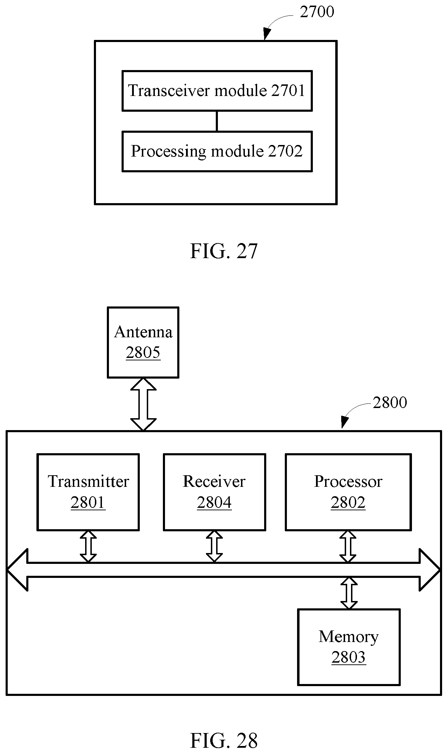

FIG. 27 is a schematic structural diagram of user equipment 2700 according to an embodiment of the present invention. As shown in FIG. 27, the user equipment 2700 may include a transceiver module 2701 and a processing module 2702.

The processing module 2702 is configured to detect a signal of a first device based on first synchronization source configuration information, where the first device is a satellite device.

The transceiver module 2701 is configured to receive the signal of the first device.

When the processing module 2702 detects an effective signal of the first device, the processing module 2702 is further configured to use the first device as a synchronization source of the UE over a D2D link. Alternatively, when the processing module 2702 detects no effective signal of the first device, the processing module 2702 is further configured to obtain a second device as a synchronization source over the D2D link, where the second device is a device other than the satellite device.

The transceiver module 2701 is further configured to perform communication over the D2D link based on the synchronization source over the D2D link.

In this embodiment of the present invention, the user equipment 2700 selects the satellite device as the synchronization source when there is an effective satellite signal, and selects the device other than the satellite device as the synchronization source when detecting no effective satellite signal. In this way, regardless of whether there is a satellite signal or there is no satellite signal, the UE can perform synchronization based on the synchronization source, thereby avoiding a problem that synchronization fails because the user equipment loses the synchronization source for a long time. This improves synchronization efficiency of the user equipment.

It should be understood that, in specific application, the processing module 2702 may be a processor, and the transceiver module 2701 may include a transceiver or include a transmitter and a receiver. The transmitter and the receiver may be coupled to an antenna.

Optionally, the first synchronization source configuration information is sent by the base station to the UE, or the first synchronization source configuration information is predefined or preconfigured.

Optionally, that the processing module 2702 detects no effective satellite signal includes:

channel quality of a satellite signal detected by the processing module 2702 is lower than a first threshold; or
the processing module 2702 detects no satellite signal; or
the processing module 2702 detects no satellite signal within a preset time, or channel quality of a satellite signal detected by the processing module 2702 within a preset time is lower than the first threshold.

Optionally, that the processing module 2702 detects an effective signal of the first device includes:
the processing module 2702 detects a satellite signal within the preset duration, or channel quality of a satellite signal detected by the processing module 2702 within the preset duration is higher than or equal to a second threshold.

Optionally, in an embodiment, when duration in which the processing module 2702 detects no effective satellite signal is less than preset duration, and the processing module 2702 detects a signal of the second device, the processing module 2702 may use the second device as the synchronization source over the D2D link.

Optionally, in another embodiment, the transceiver module 2701 is further configured to send indication information to the base station of the UE, where the indication information indicates that the UE detects no effective satellite signal.

Further, the transceiver module 2701 is further configured to receive second synchronization source configuration information sent by the base station, where the second synchronization source configuration information indicates that the second device is used as the synchronization source of the UE; and the processing module 2702 is specifically configured to determine, based on the second synchronization source configuration information, that the second device is the synchronization source over the D2D link. Further, the second device is the base station.

Optionally, in another embodiment, the processing module 2702 is specifically configured to obtain a device with a highest synchronization source priority in the second device, as the second synchronization source. Further, the second synchronization source is the base station of the UE, or another UE.

Optionally, the processing module 2702 is further configured to switch from a communications resource of the UE over the D2D link to a resource or resource pool associated with the synchronization source.

Optionally, the transceiver module 2701 is further configured to transmit a synchronization signal over the D2D link when quality of a signal detected by the processing module 2702 over the D2D link is lower than a third threshold.

The user equipment 2700 may further perform the method in FIG. 23, and implement functions of the user equipment in the embodiment shown in FIG. 23. Details are not described herein in this embodiment of the present invention again.

An embodiment of the present invention further proposes user equipment 2800. FIG. 28 is a schematic structural diagram of the user equipment 2800 according to this embodiment of the present invention. A schematic structural diagram of an entity apparatus of the user equipment 2800 may be shown in FIG. 28, including a processor 2802, a memory 2803, a transmitter 2801, and a receiver 2804. In specific application, the transmitter 2801 and the receiver 2804 may be coupled to an antenna 2805.

The memory 2803 is configured to store a program. Specifically, the program may include program code, where the program code includes a computer operation instruction. The memory 2803 may include a read-only memory and a random access memory, and provides the instruction and data for the processor 2802. The memory 2803 may include a high-speed RAM memory, or may further include a non-volatile memory (non-volatile memory), for example, at least one disk memory.

The processor 2802 is configured to execute the program stored in the memory 2803.

Specifically, in the user equipment 2800, the processor 2802 may perform the following method by using the receiver 2804 and the transmitter 2801:

determining a sequence parameter corresponding to at least one sub frequency domain resource of the user equipment 2800, where one sub frequency domain resource is corresponding to one sequence parameter;
generating a reference signal sequence based on the sequence parameter; and
mapping the reference signal sequence to a physical resource corresponding to the at least one sub frequency domain resource.

The foregoing method performed by the user equipment and disclosed in the embodiment shown in FIG. 5 of the present invention may be applied to the processor 2802, or may be implemented by the processor 2802. The processor 2802 may be an integrated circuit chip, and has a signal processing capability. In an implementation process, the steps of the foregoing method may be performed by using an integrated logic circuit of hardware in the processor 2802 or by using an instruction in a form of software. The processor 2802 may be a general purpose processor, including a central processing unit (Central Processing Unit, CPU for short), a network processor (Network Processor, NP for short), or the like, or may be a digital signal processor (DSP), an application-specific integrated circuit (ASIC), a field programmable gate array (FPGA) or another programmable logic device, a discrete gate or transistor logic device, or a discrete hardware component. The processor 2802 can implement or perform the methods, steps, and logical block diagrams disclosed in the embodiments of the present invention. The general purpose processor may be a microprocessor, or the processor may be any conventional processor or the like. The steps of the methods disclosed with reference to the embodiments of the present invention may be directly performed by a hardware decoding processor, or may be performed by using a combination of hardware in a decoding processor and a software module. The software module may be located in a storage medium that is mature in the art, such as a random access memory, a flash memory, a read-only memory, a programmable read-only memory, an electrically erasable programmable memory, or a register. The storage medium is located in the memory 2803. The processor 2802 reads information in the memory 2803, and performs the steps of the foregoing methods in combination with hardware of the processor.

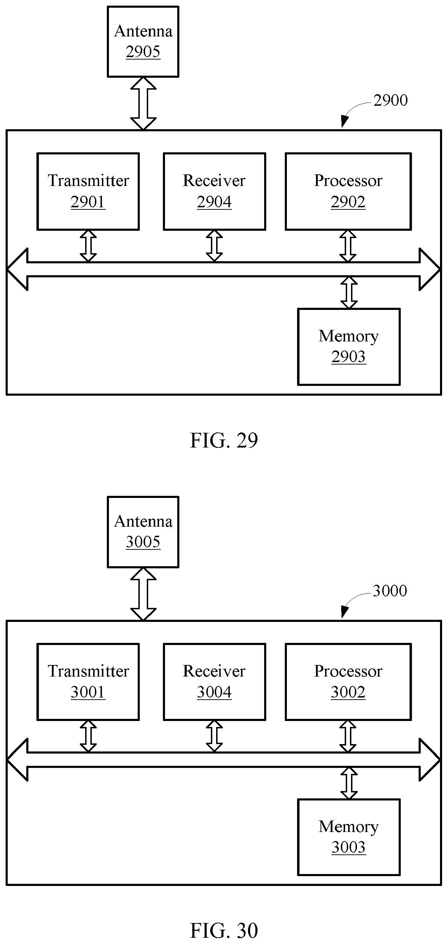

An embodiment of the present invention further proposes a base station 2900. FIG. 29 is a schematic structural diagram of the base station 2900 according to this embodiment of the present invention. A schematic structural diagram of an entity apparatus of the base station 2900 may be shown in FIG. 29, including a processor 2902, a memory 2903, a transmitter 2901, and a receiver 2904. In specific application, the transmitter 2901 and the receiver 2904 may be coupled to an antenna 2905.

The memory 2903 is configured to store a program. Specifically, the program may include program code, where the program code includes a computer operation instruction. The memory 2903 may include a read-only memory and a random access memory, and provides the instruction and data for the processor 2902. The memory 2903 may include a high-speed RAM memory, or may further include a non-volatile memory (non-volatile memory), for example, at least one disk memory.

The processor 2902 is configured to execute the program stored in the memory 2903.

Specifically, in the base station 2900, the processor 2902 may perform the following method by using the receiver 2904 and the transmitter 2901:

generating first information, where the first information is used to indicate a sequence parameter corresponding to at least one sub frequency domain resource, the at least one sub frequency domain resource is a frequency domain resource used by the first UE to map a reference signal sequence, and each sub frequency domain resource of the first UE is corresponding to one sequence parameter; and
sending the first information to the first UE.

The foregoing method performed by the user equipment and disclosed in the embodiment shown in FIG. 11 of the present invention may be applied to the processor 2902, or may be implemented by the processor 2902. The processor 2902 may be an integrated circuit chip, and has a signal processing capability. In an implementation process, the steps of the foregoing method may be performed by using an integrated logic circuit of hardware in the processor 2902 or by using an instruction in a form of software. The processor 2902 may be a general purpose processor, including a central processing unit (Central Processing Unit, CPU for short), a network processor (Network Processor, NP for short), or the like, or may be a digital signal processor (DSP), an application-specific integrated circuit (ASIC), a field programmable gate array (FPGA) or another programmable logic device, a discrete gate or transistor logic device, or a discrete hardware component. The processor 2902 can implement or perform the methods, steps, and logical block diagrams disclosed in the embodiments of the present invention. The general purpose processor may be a microprocessor, or the processor may be any conventional processor or the like. The steps of the methods disclosed with reference to the embodiments of the present invention may be directly performed by a hardware decoding processor, or may be performed by using a combination of hardware in a decoding processor and a software module. The software module may be located in a storage medium that is mature in the art, such as a random access memory, a flash memory, a read-only memory, a programmable read-only memory, an electrically erasable programmable memory, or a register. The storage medium is located in the memory 2903. The processor 2902 reads information in the memory 2903, and performs the steps of the foregoing methods in combination with hardware of the processor.

An embodiment of the present invention further proposes user equipment 3000. FIG. 30 is a schematic structural diagram of the user equipment 3000 according to this embodiment of the present invention. A schematic structural diagram of an entity apparatus of the user equipment 3000 may be shown in FIG. 30, including a processor 3002, a memory 3003, a transmitter 3001, and a receiver 3004. In specific application, the transmitter 3001 and the receiver 3004 may be coupled to an antenna 3005.

The memory 3003 is configured to store a program. Specifically, the program may include program code, where the program code includes a computer operation instruction. The memory 3003 may include a read-only memory and a random access memory, and provides the instruction and data for the processor 3002. The memory 3003 may include a high-speed RAM memory, or may further include a non-volatile memory (non-volatile memory), for example, at least one disk memory.

The processor 3002 is configured to execute the program stored in the memory 3003.

Specifically, in the user equipment 3000, the processor 3002 may perform the following method by using the receiver 3004 and the transmitter 3001:

mapping, in a frequency domain discrete manner, control information to a data channel resource that is used to carry the control information, where each data channel resource is less than 1 ms in time domain; and sending the control information by using the data channel resource.

The foregoing method performed by the user equipment and disclosed in the embodiment shown in FIG. 14 of the present invention may be applied to the processor 3002, or may be implemented by the processor 3002. The processor 3002 may be an integrated circuit chip, and has a signal processing capability. In an implementation process, the steps of the foregoing method may be performed by using an integrated logic circuit of hardware in the processor 3002 or by using an instruction in a form of software. The processor 3002 may be a general purpose processor, including a central processing unit (Central Processing Unit, CPU for short), a network processor (Network Processor, NP for short), or the like, or may be a digital signal processor (DSP), an application-specific integrated circuit (ASIC), a field programmable gate array (FPGA) or another programmable logic device, a discrete gate or transistor logic device, or a discrete hardware component. The processor 3002 can implement or perform the methods, steps, and logical block diagrams disclosed in the embodiments of the present invention. The general purpose processor may be a microprocessor, or the processor may be any conventional processor or the like. The steps of the methods disclosed with reference to the embodiments of the present invention may be directly performed by a hardware decoding processor, or may be performed by using a combination of hardware in a decoding processor and a software module. The software module may be located in a storage medium that is mature in the art, such as a random access memory, a flash memory, a read-only memory, a programmable read-only memory, an electrically erasable programmable memory, or a register. The storage medium is located in the memory 3003. The processor 3002 reads information in the memory 3003, and performs the steps of the foregoing methods in combination with hardware of the processor.

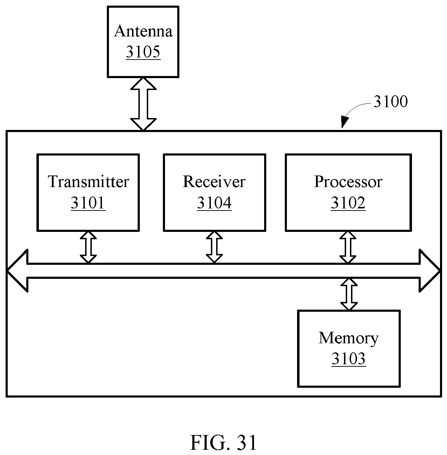

An embodiment of the present invention further proposes user equipment 3100. FIG. 31 is a schematic structural diagram of the user equipment 3100 according to this embodiment of the present invention. A schematic structural diagram of an entity apparatus of the user equipment 3100 may be shown in FIG. 31, including a processor 3102, a memory 3103, a transmitter 3101, and a receiver 3104. In specific application, the transmitter 3101 and the receiver 3104 may be coupled to an antenna 3105.

The memory 3103 is configured to store a program. Specifically, the program may include program code, where the program code includes a computer operation instruction. The memory 3103 may include a read-only memory and a random access memory, and provides the instruction and data for the processor 3102. The memory 3103 may include a high-speed RAM memory, or may further include a non-volatile memory (non-volatile memory), for example, at least one disk memory.

The processor 3102 is configured to execute the program stored in the memory 3103.

Specifically, in the user equipment 3100, the processor 3102 may perform the following method by using the receiver 3104 and the transmitter 3101:

detecting a signal of a first device based on first synchronization source configuration information, where the first device is a satellite device;
when an effective signal of the first device is detected, using the first device as a synchronization source of the UE over a D2D link, or when no effective signal of the first device is detected, obtaining a second device as a synchronization source over the D2D link, where the second device is a device other than the satellite device; and
performing communication over the D2D link based on the synchronization source over the D2D link.

The foregoing method performed by the user equipment and disclosed in the embodiment shown in FIG. 23 of the present invention may be applied to the processor 3102, or may be implemented by the processor 3102. The processor 3102 may be an integrated circuit chip, and has a signal processing capability. In an implementation process, the steps of the foregoing method may be performed by using an integrated logic circuit of hardware in the processor 3102 or by using an instruction in a form of software. The processor 3102 may be a general purpose processor, including a central processing unit (Central Processing Unit, CPU for short), a network processor (Network Processor, NP for short), or the like, or may be a digital signal processor (DSP), an application-specific integrated circuit (ASIC), a field programmable gate array (FPGA) or another programmable logic device, a discrete gate or transistor logic device, or a discrete hardware component. The processor 3102 can implement or perform the methods, steps, and logical block diagrams disclosed in the embodiments of the present invention. The general purpose processor may be a microprocessor, or the processor may be any conventional processor or the like. The steps of the methods disclosed with reference to the embodiments of the present invention may be directly performed by a hardware decoding processor, or may be performed by using a combination of hardware in a decoding processor and a software module. The software module may be located in a storage medium that is mature in the art, such as a random access memory, a flash memory, a read-only memory, a programmable read-only memory, an electrically erasable programmable memory, or a register. The storage medium is located in the memory 3103. The processor 3102 reads information in the memory 3103, and performs the steps of the foregoing methods in combination with hardware of the processor.

It should be understood that, in the embodiments of the present invention, sequence numbers of the foregoing processes do not indicate an execution sequence. An execution sequence of the processes should be determined based on functions and internal logic of the processes, and should not constitute any limitation on implementation processes of the embodiments of the present invention.

A person of ordinary skill in the art may be aware that units and algorithm steps in examples described with reference to the embodiments disclosed in this specification can be implemented by electronic hardware or a combination of computer software and electronic hardware. Whether the functions are performed by hardware or software depends on specific applications and design constraint conditions of the technical solutions. A person skilled in the art may use different methods to implement the described functions for each specific application, but it should not be considered that such an implementation goes beyond the scope of the present invention.

It can be clearly understood by a person skilled in the art that, for ease and brevity of description, for detailed working processes of the foregoing systems, apparatuses, and units, reference may be made to corresponding processes in the foregoing method embodiments, and details are not described herein again.

In the several embodiments provided in this application, it should be understood that the disclosed systems, apparatuses, and methods may be implemented in other manners. For example, the described apparatus embodiment is merely an example. For example, the unit division is merely logical function division and may be other division in actual implementation. For example, a plurality of units or components may be combined or may be integrated into another system, or some features may be ignored or not performed. In addition, the shown or discussed mutual couplings, direct couplings, or communication connections may be implemented by using some interfaces. The indirect couplings or communication connections between the apparatuses or units may be implemented in electrical, mechanical, or other forms.

The units described as separate parts may or may not be physically separate, and parts shown as units may or may not be physical units, may be located in one position, or may be distributed on a plurality of network units. Some or all of the units may be selected depending on an actual requirement, to achieve the objectives of the solutions in the embodiments.

In addition, functional units in the embodiments of the present invention may be integrated into one processing unit, or each of the units may exist alone physically, or two or more units may be integrated into one unit.

When the functions are implemented in a form of a software function unit, and are sold or used as an independent product, the functions may be stored in a computer readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present invention. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A reference signal sequence mapping method, wherein the method comprises:

   determining a sequence parameter corresponding to at least one sub frequency domain resource of user equipment UE, wherein one sub frequency domain resource is corresponding to one sequence parameter;
   generating a reference signal sequence based on the sequence parameter; and
   mapping the reference signal sequence to a physical resource corresponding to the at least one sub frequency domain resource.

2. The method according to claim 1, wherein
   the reference signal is a demodulation reference signal DMRS, and the at least one sub frequency domain resource comprises some or all of subcarriers in data bandwidth in which the DMRS is located.

3. The method according to claim 1 or 2, wherein the sequence parameter comprises at least one of the following:
   a root sequence index, a cyclic shift value, or an orthogonal cover code of the reference signal sequence.

4. The method according to any one of claims 1 to 3, wherein
   a sequence parameter corresponding to a first sub frequency domain resource is determined by a first resource index value of the first sub frequency domain resource, and the first sub frequency domain resource is one of the at least one sub frequency domain resource.

5. The method according to claim 4, wherein sequence group hopping and/or sequence hopping of a first root sequence index are/is determined by the first resource index value, and the first root sequence index is a root sequence index in the sequence parameter corresponding to the first sub frequency domain resource.

6. The method according to any one of claims 1 to 3, wherein
   the method further comprises: obtaining first information, wherein the first information is used to indicate the sequence parameter corresponding to the at least one sub frequency domain resource; and
   the determining a sequence parameter corresponding to the at least one sub frequency domain resource comprises: determining, based on the first information, the sequence parameter corresponding to the at least one sub frequency domain resource.

7. The method according to any one of claims 1 to 3, wherein
   the method further comprises: obtaining first information, wherein the first information is used to indicate at least one sequence parameter corresponding to the at least one sub frequency domain resource; and
   the determining a sequence parameter corresponding to the at least one sub frequency domain resource comprises: determining, based on the first information and a resource index value corresponding to the at least one sub frequency domain resource, the at least one sequence parameter corresponding to the at least one sub frequency domain resource.

8. The method according to claim 6 or 7, wherein the sequence parameter indicated by the first information is an absolute value or a relative value.

9. The method according to any one of claims 1 to 8, wherein the method further comprises:
   determining the at least one sub frequency domain resource.

**10.** The method according to claim 9, wherein
the at least one sub frequency domain resource is indicated by signaling, or is predefined or preconfigured.

**11.** The method according to claim 9, wherein
the method further comprises: obtaining second information, wherein the second information is used to indicate the at least one sub frequency domain resource; and
the determining the at least one sub frequency domain resource comprises: determining, based on the second information, the at least one sub frequency domain resource.

**12.** The method according to claim 11, wherein the second information comprises a multiplexing manner of the at least one sub frequency domain resource.

**13.** The method according to claim 12, wherein the multiplexing manner comprises frequency division multiplexing and/or code division multiplexing.

**14.** The method according to claim 12, wherein when the at least one sub frequency domain resource is two or more sub frequency domain resources:

multiplexing manners of all the sub frequency domain resources are the same; or
multiplexing manners of at least two of the sub frequency domain resources are different.

**15.** A reference signal sequence configuration method, wherein the method comprises:

generating first information, wherein the first information is used to indicate a sequence parameter corresponding to at least one sub frequency domain resource, the at least one sub frequency domain resource is a frequency domain resource used by the first UE to map a reference signal sequence, and each sub frequency domain resource of the first UE is corresponding to one sequence parameter; and
sending the first information to the first UE.

**16.** The method according to claim 15, wherein
the reference signal is a demodulation reference signal DMRS, and the at least one sub frequency domain resource comprises some or all of subcarriers in data bandwidth in which the DMRS of the first UE is located.

**17.** The method according to claim 15 or 16, wherein the sequence parameter comprises at least one of the following:
a root sequence index, a cyclic shift value, or an orthogonal cover code of the reference signal sequence.

**18.** The method according to any one of claims 15 to 17, wherein the method further comprises:

generating second information, wherein the second information is used to indicate the at least one sub frequency domain resource; and
sending the second information to the first UE.

**19.** The method according to claim 18, wherein
the second information comprises a multiplexing manner of the at least one sub frequency domain resource.

**20.** The method according to claim 19, wherein
when the at least one sub frequency domain resource is two or more sub frequency domain resources:

reference signal sequence multiplexing manners of all the sub frequency domain resources are the same; or
reference signal sequence multiplexing manners of at least two of the sub frequency domain resources are different.

**21.** The method according to any one of claims 15 to 20, wherein the method further comprises:

generating third information, wherein the third information indicates a sequence parameter corresponding to at least one sub frequency domain resource that is in a frequency domain resource of the second UE and that is used for sending a reference signal, a second sub frequency domain resource in the at least one sub frequency domain resource of the second UE is all or some of frequency domain resources in a first sub frequency domain resource in the at least one sub frequency domain resource of the first UE, and the second sub frequency domain resource and the first sub frequency domain resource are corresponding to different sequence parameters; and

sending the third information to the second UE.

22. A control information sending method, wherein the method comprises:

mapping, in a frequency domain discrete manner, control information to a data channel resource that is used to carry the control information, wherein each data channel resource is less than 1 ms in time domain; and sending the control information by using the data channel resource.

23. The method according to claim 22, wherein the control information comprises at least one of the following: hybrid automatic repeat request HARQ response information, channel state information CSI, or a scheduling request SR.

24. The method according to claim 23, wherein the CSI comprises at least one of the following: a rank indicator RI, a precoding matrix indicator PMI, a channel quality indicator CQI, a precoding type indicator PTI, or beam indication information BI.

25. The method according to any one of claims 22 to 24, wherein the mapping, in a frequency domain discrete manner, control information to a data channel resource that is used to carry the control information comprises any one of the following:

dividing each of at least one type of control information into a plurality of parts, and respectively mapping, in the frequency domain discrete manner, the plurality of parts of each type of control information to different parts in bandwidth occupied by the data channel resource; or respectively mapping a plurality of types of control information to different parts in bandwidth occupied by the data channel resource.

26. The method according to claim 25, wherein the dividing each of at least one type of control information into a plurality of parts, and respectively mapping, in the frequency domain discrete manner, the plurality of parts of each type of control information to different parts in bandwidth occupied by the data channel resource comprises: dividing each of the at least one type of control information into two parts, and respectively mapping the two parts to two sides of the bandwidth occupied by the data channel resource.

27. The method according to claim 25, wherein the respectively mapping a plurality of types of control information to different parts in bandwidth occupied by the data channel resource comprises:

mapping, from a high frequency subcarrier to a low frequency subcarrier, first control information in each of at least one part in the bandwidth occupied by the data channel resource; or mapping, from a low frequency subcarrier to a high frequency subcarrier, the first control information in each of at least one part in the bandwidth occupied by the data channel resource; or mapping, from a low frequency subcarrier to a high frequency subcarrier, the first control information in a first part of at least one part in the bandwidth occupied by the data channel resource, and mapping, from a high frequency subcarrier to a low frequency subcarrier, the first control information in a second part of the at least one part in the bandwidth occupied by the data channel resource, wherein the first control information is one of the plurality of types of control information.

28. The method according to claim 27, wherein when the control information comprises a HARQ response message and the RI, and the data channel resource is divided into four sub-bands: a sub-band 1, a sub-band 2, a sub-band 3, and a sub-band 4, the mapping, in a frequency domain discrete manner, control information to a data channel resource that is used to carry the control information comprises:

mapping the HARQ response message to the sub-band 1 and the sub-band 3, and mapping the RI to the sub-band 2 and the sub-band 4; or
mapping the HARQ response message to the sub-band 2 and the sub-band 4, and mapping the RI to the sub-band 1 and the sub-band 3; or
mapping the HARQ response message to the sub-band 1 and the sub-band 4, and mapping the RI to the sub-band 2 and the sub-band 3; or
mapping the HARQ response message to the sub-band 2 and the sub-band 3, and mapping the RI to the sub-band 1 and the sub-band 4.

29. The method according to any one of claims 22 to 28, wherein the mapping, in a frequency domain discrete manner, control information to a data channel resource that is used to carry the control information comprises: when the control information comprises a plurality of types of control information, respectively mapping the plurality of types of control information to at least two time domain data symbols of the data channel resource, and mapping, in the frequency domain discrete manner, the plurality of types of control information to the bandwidth occupied by the data channel resource.

30. The method according to claim 29, wherein the mapping, in a frequency domain discrete manner, control information to a data channel resource that is used to carry the control information comprises:

mapping, in the frequency domain discrete manner, the first control information to a time-frequency resource on a first symbol of the data channel resource, and mapping, in the frequency domain discrete manner, second control information to a time-frequency resource on a second symbol of the data channel resource; or mapping the first control information to a time-frequency resource in a first sub-band and on a first symbol of the data channel resource, and a time-frequency resource in a second sub-band and on a second symbol of the data channel resource; and mapping second control information to a time-frequency resource in the first sub-band and on the second symbol of the data channel resource, and a time-frequency resource in the second sub-band and on the first symbol of the data channel resource.

31. The method according to claim 29 or 30, wherein
a quantity of symbols occupied by the control information in one subframe of the data channel resource is any one of 2, 3, 4, 6, or 7.

32. The method according to any one of claims 29 to 31, wherein
when the control information comprises the HARQ response message and the RI, the mapping, in a frequency domain discrete manner, control information to a data channel resource that is used to carry the control information comprises: respectively mapping the HARQ response message and the RI in the control information to two adjacent time domain data symbols on two sides of the data channel resource, and mapping, in the frequency domain discrete manner, the HARQ response message and the RI to the bandwidth occupied by the data channel resource.

33. The method according to any one of claims 22 to 31, wherein when the control information comprises the HARQ response message and the RI, the mapping, in a frequency domain discrete manner, control information to a data channel resource that is used to carry the control information comprises:
mapping the HARQ response message and the RI in the control information to one time domain data symbol on one side of the data channel resource, and mapping, in the frequency domain discrete manner, the HARQ response message and the RI to the bandwidth occupied by the data channel resource.

34. The method according to any one of claims 22 to 33, wherein the method further comprises:
performing a rate matching or puncturing operation on the data channel resource when sending the control information.

35. A method for performing device-to-device D2D communication by using a synchronization source, wherein the method comprises:

detecting, by user equipment UE, a signal of a first device based on first synchronization source configuration information, wherein the first device is a satellite device;
when the UE detects an effective signal of the first device, using the first device as a synchronization source of the UE over a D2D link, or when the UE detects no effective signal of the first device, obtaining a second device as a synchronization source over the D2D link, wherein the second device is a device other than the satellite device; and
performing communication over the D2D link based on the synchronization source over the D2D link.

36. The method according to claim 35, wherein
the first synchronization source configuration information is sent by the base station to the UE; or

the first synchronization source configuration information is predefined or preconfigured.

37. The method according to claim 35 or 36, wherein that the UE detects no effective satellite signal comprises:

channel quality of a satellite signal detected by the UE is lower than a first threshold; or
the UE detects no satellite signal; or
the UE detects no satellite signal within a preset time, or channel quality of a satellite signal detected by the UE within a preset time is lower than the first threshold.

38. The method according to claim 35 or 36, wherein that the UE detects an effective signal of the first device comprises:
the UE detects a satellite signal within the preset duration, or channel quality of a satellite signal detected by the UE within the preset duration is higher than or equal to a second threshold.

39. The method according to claim 35 or 36, wherein the when the UE detects no effective satellite signal, obtaining a second device as a synchronization source over the D2D link comprises:
when duration in which the UE detects no effective satellite signal is less than preset duration, and the UE detects a signal of the second device, using the second device as the synchronization source over the D2D link.

40. The method according to any one of claims 36 to 39, wherein the method further comprises:
sending indication information to the base station of the UE, wherein the indication information indicates that the UE detects no effective satellite signal.

41. The method according to claim 40, wherein the obtaining a second device as a synchronization source over the D2D link comprises:

receiving second synchronization source configuration information sent by the base station, wherein the second synchronization source configuration information indicates that the second device is used as the synchronization source of the UE; and
determining, based on the second synchronization source configuration information, that the second device is the synchronization source over the D2D link.

42. The method according to claim 41, wherein the second device is the base station.

43. The method according to any one of claims 35 to 38, wherein the obtaining a second device as a synchronization source over the D2D link comprises:
obtaining a device with a highest synchronization source priority in the second device, as the second synchronization source.

44. The method according to claim 43, wherein
the second synchronization source is the base station of the UE, or another UE.

45. The method according to any one of claims 35 to 44, wherein the method further comprises:
switching from a communications resource of the UE over the D2D link to a resource or resource pool associated with the synchronization source.

46. The method according to any one of claims 35 to 45, wherein the method further comprises:
transmitting, by the UE, a synchronization signal over the D2D link when quality of a signal detected by the UE over the D2D link is lower than a third threshold.

47. User equipment, comprising a processing module and a transmit module, wherein the processing module is configured to determine a sequence parameter corresponding to at least one sub frequency domain resource of the user equipment, and generate a reference signal sequence based on the sequence parameter, wherein one sub frequency domain resource is corresponding to one sequence parameter; and
the transmit module is configured to map the reference signal sequence to a physical resource corresponding to the at least one sub frequency domain resource.

48. The user equipment according to claim 47, wherein
the reference signal is a demodulation reference signal DMRS, and the at least one sub frequency domain resource comprises some or all of subcarriers in data bandwidth in which the DMRS is located.

49. The user equipment according to claim 47 or 48, wherein the sequence parameter comprises at least one of the following:

a root sequence index, a cyclic shift value, or an orthogonal cover code of the reference signal sequence.

50. The user equipment according to any one of claims 47 to 49, wherein
a sequence parameter corresponding to a first sub frequency domain resource is determined by a first resource index value of the first sub frequency domain resource, and the first sub frequency domain resource is one of the at least one sub frequency domain resource.

51. The user equipment according to claim 50, wherein
sequence group hopping and/or sequence hopping of a first root sequence index are/is determined by the first resource index value, and the first root sequence index is a root sequence index in the sequence parameter corresponding to the first sub frequency domain resource.

52. The user equipment according to any one of claims 47 to 49, wherein
the processing module is further configured to obtain first information, wherein the first information is used to indicate the sequence parameter corresponding to the at least one sub frequency domain resource; and
the processing module is configured to determine, based on the first information, the sequence parameter corresponding to the at least one sub frequency domain resource.

53. The user equipment according to any one of claims 47 to 49, wherein
the processing module is further configured to obtain first information, wherein the first information is used to indicate at least one sequence parameter corresponding to the at least one sub frequency domain resource; and
the processing module is configured to determine, based on the first information and a resource index value corresponding to the at least one sub frequency domain resource, the at least one sequence parameter corresponding to the at least one sub frequency domain resource.

54. The user equipment according to claim 52 or 53, wherein the sequence parameter indicated by the first information is an absolute value or a relative value.

55. The user equipment according to any one of claims 47 to 54, wherein the processing module is further configured to determine the at least one sub frequency domain resource.

56. The user equipment according to claim 55, wherein
the at least one sub frequency domain resource is indicated by signaling, or is predefined or preconfigured.

57. The user equipment according to claim 55, wherein
the processing module is further configured to obtain second information, wherein the second information is used to indicate the at least one sub frequency domain resource; and
the processing module is configured to determine, based on the second information, the at least one sub frequency domain resource.

58. The user equipment according to claim 57, wherein the second information comprises a multiplexing manner of the at least one sub frequency domain resource.

59. The user equipment according to claim 58, wherein the multiplexing manner comprises frequency division multiplexing and/or code division multiplexing.

60. The user equipment according to claim 58, wherein when the at least one sub frequency domain resource is two or more sub frequency domain resources:

multiplexing manners of all the sub frequency domain resources are the same; or
multiplexing manners of at least two of the sub frequency domain resources are different.

61. Abase station, comprising a processing module and a transmit module, wherein

the processing module is configured to generate first information, wherein the first information is used to indicate a sequence parameter corresponding to at least one sub frequency domain resource, the at least one sub frequency domain resource is a frequency domain resource used by the first user equipment UE to map a reference signal sequence, and each sub frequency domain resource of the first UE is corresponding to one sequence parameter; and the transmit module is configured to send the first information to the first UE.

**62.** The base station according to claim 61, wherein
the reference signal is a demodulation reference signal DMRS, and the at least one sub frequency domain resource comprises some or all of subcarriers in data bandwidth in which the DMRS of the first UE is located.

**63.** The base station according to claim 61 or 62, wherein the sequence parameter comprises at least one of the following:
a root sequence index, a cyclic shift value, or an orthogonal cover code of the reference signal sequence.

**64.** The base station according to any one of claims 61 to 63, wherein
the processing module is further configured to generate second information, wherein the second information is used to indicate the at least one sub frequency domain resource; and
the transmit module is further configured to send the second information to the first UE.

**65.** The base station according to claim 64, wherein
the second information comprises a multiplexing manner of the at least one sub frequency domain resource.

**66.** The base station according to claim 65, wherein
when the at least one sub frequency domain resource is two or more sub frequency domain resources:

reference signal sequence multiplexing manners of all the sub frequency domain resources are the same; or
reference signal sequence multiplexing manners of at least two of the sub frequency domain resources are different.

**67.** The base station according to any one of claims 61 to 66, wherein the processing module is further configured to generate third information, wherein the third information is used to indicate a sequence parameter corresponding to at least one sub frequency domain resource, the at least one sub frequency domain resource in the third information is a frequency domain resource used by the second UE to map a reference signal sequence, each sub frequency domain resource of the second UE is corresponding to one sequence parameter, a second sub frequency domain resource in the at least one sub frequency domain resource of the second UE is all or some of frequency domain resources in a first sub frequency domain resource in the at least one sub frequency domain resource of the first UE, and the second sub frequency domain resource and the first sub frequency domain resource are corresponding to different sequence parameters; and
the transmit module is further configured to send the third information to the second UE.

**68.** User equipment, comprising a processing module and a transmit module, wherein the processing module is configured to map, in a frequency domain discrete manner, control information to a data channel resource that is used to carry the control information, wherein each data channel resource is less than 1 ms in time domain; and
the transmit module is configured to send the control information by using the data channel resource.

**69.** The user equipment according to claim 68, wherein the control information comprises at least one of the following:
hybrid automatic repeat request HARQ response information, channel state information CSI, or a scheduling request SR.

**70.** The user equipment according to claim 69, wherein the CSI comprises at least one of the following:
a rank indicator RI, a precoding matrix indicator PMI, a channel quality indicator CQI, a precoding type indicator PTI, or beam indication information BI.

**71.** The user equipment according to any one of claims 68 to 70, wherein the processing module is specifically configured to:

divide each of at least one type of control information into a plurality of parts, and respectively map, in the frequency domain discrete manner, the plurality of parts of each type of control information to different parts in bandwidth occupied by the data channel resource; or

respectively map a plurality of types of control information to different parts in bandwidth occupied by the data channel resource.

72. The user equipment according to claim 71, wherein the processing module is specifically configured to: divide each of the at least one type of control information into two parts, and respectively map the two parts to two sides of the bandwidth occupied by the data channel resource.

73. The user equipment according to claim 71, wherein the processing module is specifically configured to:

map, from a high frequency subcarrier to a low frequency subcarrier, first control information in each of at least one part in the bandwidth occupied by the data channel resource; or
map, from a low frequency subcarrier to a high frequency subcarrier, the first control information in each of at least one part in the bandwidth occupied by the data channel resource; or
map, from a low frequency subcarrier to a high frequency subcarrier, the first control information in a first part of at least one part in the bandwidth occupied by the data channel resource, and map, from a high frequency subcarrier to a low frequency subcarrier, the first control information in a second part of the at least one part in the bandwidth occupied by the data channel resource, wherein
the first control information is one of the plurality of types of control information.

74. The user equipment according to claim 73, wherein when the control information comprises a HARQ response message and the RI, and the data channel resource is divided into four sub-bands: a sub-band 1, a sub-band 2, a sub-band 3, and a sub-band 4, the processing module is specifically configured to:

map the HARQ response message to the sub-band 1 and the sub-band 3, and map the RI to the sub-band 2 and the sub-band 4; or
map the HARQ response message to the sub-band 2 and the sub-band 4, and map the RI to the sub-band 1 and the sub-band 3; or
map the HARQ response message to the sub-band 1 and the sub-band 4, and map the RI to the sub-band 2 and the sub-band 3; or
map the HARQ response message to the sub-band 2 and the sub-band 3, and map the RI to the sub-band 1 and the sub-band 4.

75. The user equipment according to any one of claims 68 to 74, wherein the processing module is specifically configured to: when the control information comprises a plurality of types of control information, respectively map the plurality of types of control information to at least two time domain data symbols of the data channel resource, and map, in the frequency domain discrete manner, the plurality of types of control information to the bandwidth occupied by the data channel resource.

76. The user equipment according to claim 75, wherein the processing module is specifically configured to:

map the first control information to a time-frequency resource on a first symbol of the data channel resource, and map second control information to a time-frequency resource on a second symbol of the data channel resource; or
map the first control information to a time-frequency resource in a first sub-band and on a first symbol of the data channel resource, and a time-frequency resource in a second sub-band and on a second symbol of the channel resource; and map second control information to a time-frequency resource in the first sub-band and on the second symbol of the data channel resource, and a time-frequency resource in the second sub-band and on the first symbol of the channel resource.

77. The user equipment according to claim 75 or 76, wherein
a quantity of symbols occupied by the control information in one subframe of the data channel resource is any one of 2, 3, 4, 6, or 7.

78. The user equipment according to any one of claims 75 to 77, wherein
when the control information comprises the HARQ response message and the RI, the processing module is specifically configured to respectively map the HARQ response message and the RI in the control information to two adjacent time domain data symbols on two sides of the data channel resource, and map, in the frequency domain discrete manner, the HARQ response message and the RI to the bandwidth occupied by the data channel resource.

**79.** The user equipment according to any one of claims 68 to 77, wherein when the control information comprises the HARQ response message and the RI, the processing module is specifically configured to:
map the HARQ response message and the RI in the control information to one time domain data symbol on one side of the data channel resource, and map, in the frequency domain discrete manner, the HARQ response message and the RI to the bandwidth occupied by the data channel resource.

**80.** The user equipment according to any one of claims 68 to 79, wherein the transmit module is configured to perform a rate matching or puncturing operation on the data channel resource when sending the control information.

**81.** User equipment, comprising a processing module and a transceiver module, wherein
the processing module is configured to detect a signal of a first device based on first synchronization source configuration information, wherein the first device is a satellite device;
the transceiver module is configured to receive the signal of the first device;
when the processing module detects an effective signal of the first device, the processing module is further configured to use the first device as a synchronization source of the user equipment over a device-to-device D2D link; or when the processing module detects no effective signal of the first device, the processing module is further configured to obtain a second device as a synchronization source over the D2D link, wherein the second device is a device other than the satellite device; and
the transceiver module is configured to perform communication over the D2D link based on the synchronization source over the D2D link.

**82.** The user equipment according to claim 81, wherein
the first synchronization source configuration information is sent by the base station to the user equipment; or
the first synchronization source configuration information is predefined or preconfigured.

**83.** The user equipment according to claim 81 or 82, wherein that the processing module detects no effective satellite signal comprises:

channel quality of a satellite signal detected by the processing module is lower than a first threshold; or
the processing module detects no satellite signal; or
the processing module detects no satellite signal within a preset time, or channel quality of a satellite signal detected by the processing module within a preset time is lower than the first threshold.

**84.** The user equipment according to claim 81 or 82, wherein that the processing module detects an effective signal of the first device comprises:
the processing module detects a satellite signal within the preset duration, or channel quality of a satellite signal detected by the processing module within the preset duration is higher than or equal to a second threshold.

**85.** The user equipment according to claim 81 or 82, wherein
when duration in which the processing module detects no effective satellite signal is less than preset duration, and the processing module detects a signal of the second device, the processing module uses the second device as the synchronization source over the D2D link.

**86.** The user equipment according to any one of claims 82 to 85, wherein the transceiver module is further configured to send indication information to the base station of the user equipment, wherein the indication information indicates that the user equipment detects no effective satellite signal.

**87.** The user equipment according to claim 86, wherein
the transceiver module is further configured to receive second synchronization source configuration information sent by the base station, wherein the second synchronization source configuration information indicates that the second device is used as the synchronization source of the user equipment; and
the processing module is specifically configured to determine, based on the second synchronization source configuration information, that the second device is the synchronization source over the D2D link.

**88.** The user equipment according to claim 87, wherein the second device is the base station.

**89.** The user equipment according to any one of claims 81 to 84, wherein the processing module is specifically configured to obtain a device with a highest synchronization source priority in the second device, as the second synchronization source.

90. The user equipment according to claim 89, wherein
the second synchronization source is the base station of the user equipment, or another user equipment.

91. The user equipment according to any one of claims 81 to 90, wherein the processing module is further configured to switch from a communications resource of the user equipment over the D2D link to a resource or resource pool associated with the synchronization source.

92. The user equipment according to any one of claims 81 to 91, wherein
the transceiver module is further configured to transmit a synchronization signal over the D2D link when quality of a signal detected by the processing module over the D2D link is lower than a third threshold.

eNB

UE1 UE2

FIG. 1

UE1 UE2

FIG. 2

FIG. 3

Sub-band 1    Sub-band 2    Sub-band 3

DMRS
symbol          UE1        UE2

UE4

UE3

FIG. 4

| Determine a sequence parameter corresponding to at least one sub frequency domain resource of UE, where one sub frequency domain resource is corresponding to one sequence parameter | 510 |

| Generate a reference signal sequence based on the sequence parameter | 520 |

| Map the reference signal sequence to a physical resource corresponding to the at least one sub frequency domain resource | 530 |

FIG. 5

FIG. 6

FIG. 7

FIG. 8

Sub-
band 3

Sub-
band 2

Sub-
band 1

DMRS
symbol

UE1    UE2

UE3

UE4

FIG. 9

Sub-
band 3

Sub-
band 2

Sub-
band 1

DMRS
symbol

UE1    UE2

UE3

UE4

FIG. 10

Generate first information, where the first information is used to indicate a sequence parameter corresponding to at least one sub frequency domain resource, the at least one sub frequency domain resource is a frequency domain resource used by first UE to map a reference signal sequence, and each sub frequency domain resource of the first UE is corresponding to one sequence parameter

~1110

Send the first information to the first UE

~1120

FIG. 11

index1          index2          index1          index2

UE1             UE2             UE1             UE2

(a)                             (b)

FIG. 12

FIG. 13

Map, in a frequency domain discrete manner, control information to a data channel resource that is used to carry the control information, where each data channel resource is less than 1 ms in time domain — 1410

Send the control information by using the data channel resource — 1420

FIG. 14

(a)                              (b)

FIG. 15

FIG. 16

FIG. 17

FIG. 18

FIG. 19

FIG. 20

FIG. 21

GNSS

eNB

RSU1

UE3

UE1　　　UE2

FIG. 22

| UE detects a signal of a first device based on first synchronization source configuration information, where the first device is a satellite device | 2310 |

↓

| When detecting an effective signal of the first device, the UE uses the first device as a synchronization source of the UE over a D2D link, or when detecting no effective signal of the first device, the UE obtains a second device as a synchronization source over a D2D link, where the second device is a device other than the satellite device | 2320 |

↓

| Perform communication over the D2D link based on the synchronization source over the D2D link | 2330 |

FIG. 23

2400

| Transmit module 2401 |
| Processing module 2402 |
| Receiving module 2403 |

FIG. 24

2500

Transmit module 2501

Processing module 2502

Receiving module 2503

FIG. 25

2600

Transmit module 2601

Processing module 2602

Receiving module 2603

FIG. 26

2700

Transceiver module 2701

Processing module 2702

FIG. 27

Antenna
2805

2800

Transmitter
2801

Receiver
2804

Processor
2802

Memory
2803

FIG. 28

Antenna
2905

2900

Transmitter
2901

Receiver
2904

Processor
2902

Memory
2903

FIG. 29

Antenna
3005

3000

Transmitter
3001

Receiver
3004

Processor
3002

Memory
3003

FIG. 30

FIG. 31

# INTERNATIONAL SEARCH REPORT

| International application No. |
| --- |
| **PCT/CN2016/092409** |

## A. CLASSIFICATION OF SUBJECT MATTER

H04W 56/00 (2009.01) i; H04L 5/00 (2006.01) i; H04L 27/26 (2006.01) i; H04L 12/70 (2013.01) i

According to International Patent Classification (IPC) or to both national classification and IPC

## B. FIELDS SEARCHED

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT: frequency spectrum, UE, D2D, GPS, GNSS, reference, signal, sequence, parameter, user, interference, frequency, spectrum, diversity, continuous, discrete, control, device to device, synchronization, timing, satellite, detect

## C. DOCUMENTS CONSIDERED TO BE RELEVANT

| Category* | Citation of document, with indication, where appropriate, of the relevant passages | Relevant to claim No. |
| --- | --- | --- |
| X | WO 2013020565 A1 (TELEFONAKTIEBOLAGET L M ERICSSON et al.), 14 February 2013 (14.02.2013), description, page 13, line 24 to page 18, line 2 | 1-21, 47-67 |
| X | CN 102742216 A (HUAWEI TECHNOLOGIES CO., LTD.), 17 October 2012 (17.10.2012), description, paragraphs 0028-0030 and 0040-0062, and claims 1-6 | 22-34, 68-80 |
| X | US 2015078369 A1 (QUALCOMM INC.), 19 March 2015 (19.03.2015), description, paragraphs 0061-0076 | 35-46, 81-92 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 14 April 2017 (14.04.2017) | **26 April 2017 (26.04.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZOU, Ting** Telephone No.: (86-10) **62089393** |
| --- | --- |

Form PCT/ISA/210 (second sheet) (July 2009)

## INTERNATIONAL SEARCH REPORT

International application No.

**PCT/CN2016/092409**

**Box No. III    Observations where unity of invention is lacking (Continuation of item 3 of first sheet)**

This International Searching Authority found multiple inventions in this international application, as follows:

This International Authority is of the opinion that the claims comprise three inventions, as shown below:
I: claims (1, 15, 47 and 61) relate to mapping and configuration of a reference signal sequence;
II: claims (22 and 68) relate to sending of control information; and
III: claims (35 and 81) relate to the acquisition and selection of a synchronization source to perform D2D communication.
These inventions are not so linked as to form a single general inventive concept, and therefore do not comply with PCT Rule 13.1. The reasons are as follows: claims (1, 15, 47 and 61), claims (22 and 68) and claims (35 and 81) do not share the same or corresponding technical feature between every two of them, and therefore lack unity of invention.

1. ☐    As all required additional search fees were timely paid by the applicant, this international search report covers all searchable claims.

2. ☒    As all searchable claims could be searched without effort justifying additional fees, this Authority did not invite payment of additional fees.

3. ☐    As only some of the required additional search fees were timely paid by the applicant, this international search report covers only those claims for which fees were paid, specifically claims Nos.:

4. ☐    No required additional search fees were timely paid by the applicant. Consequently, this international search report is restricted to the invention first mentioned in the claims; it is covered by claims Nos.:

**Remark on protest**    ☐    The additional search fees were accompanied by the applicant's protest and, where applicable, the payment of a protest fee.

☐    The additional search fees were accompanied by the applicant's protest but the applicable protest fee was not paid within the time limit specified in the invitation.

☐    No protest accompanied the payment of additional search fees.

Form PCT/ISA/210 (continuation of first sheet (2)) (July 2009)

## INTERNATIONAL SEARCH REPORT
### Information on patent family members

International application No.

**PCT/CN2016/092409**

| Patent Documents referred in the Report | Publication Date | Patent Family | Publication Date |
|---|---|---|---|
| WO 2013020565 A1 | 14 February 2013 | RU 2014108326 A | 10 September 2015 |
| | | MX 2014001205 A | 21 March 2014 |
| | | US 2014192756 A1 | 10 July 2014 |
| | | US 9379864 B2 | 28 June 2016 |
| | | CN 103733583 A | 16 April 2014 |
| | | IN 201400424 P2 | 02 May 2014 |
| | | ID 201500854 A | 13 March 2015 |
| CN 102742216 A | 17 October 2012 | WO 2011127404 A3 | 22 December 2011 |
| | | WO 2011127404 A2 | 13 October 2011 |
| | | US 2011249640 A1 | 13 October 2011 |
| | | US 9014081 B2 | 21 April 2015 |
| | | CN 102742216 B | 06 May 2015 |
| US 2015078369 A1 | 19 March 2015 | WO 2015041989 A1 | 26 March 2015 |

Form PCT/ISA/210 (patent family annex) (July 2009)